(19) Europäisches Patentamt
European Patent Office
Office européen des brevets

(11) Publication number: **0 069 585**
**B1**

# (12) EUROPEAN PATENT SPECIFICATION

(45) Date of publication of patent specification: **03.07.85**

(51) Int. Cl.$^4$: **G 03 C 7/32,** C 09 B 55/00, C 09 B 23/16, C 07 C 143/72

(21) Application number: **82303537.3**

(22) Date of filing: **06.07.82**

(54) **Color-forming sulfonamidodiphenylamines, photographic elements containing them and corresponding sulfonimide dyes.**

(30) Priority: **06.07.81 US 280626**
**06.07.81 US 280627**

(43) Date of publication of application:
**12.01.83 Bulletin 83/02**

(45) Publication of the grant of the patent:
**03.07.85 Bulletin 85/27**

(84) Designated Contracting States:
**DE FR GB**

(58) References cited:
**EP-A-0 029 546**
**US-A-3 938 995**

(73) Proprietor: **EASTMAN KODAK COMPANY**
**343 State Street**
**Rochester New York 14650 (US)**

(72) Inventor: **Gabrielsen, Rolf Steven**
**1729 Empire Boulevard Apt. 66**
**Webster New York 14580 (US)**
Inventor: **Graham, Patricia Ann**
**6594 Fisher Road**
**Williamson New York 14589 (US)**
Inventor: **Klijanowicz, James Edward**
**7 Millstone Court**
**Pittsford New York 14534 (US)**
Inventor: **Stern, Max Herman**
**715 Winton Road South**
**Rochester New York 14618 (US)**

(74) Representative: **Baron, Paul Alexander Clifford et al**
**Kodak Limited Patent Department**
**Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 069 585 B1

**Description**

This invention relates to color-forming parasulfonamidodiphenylamines and corresponding sulfonimide dyes that are useful in imaging materials, such as photographic silver salt materials, and processes.

Photographic materials for producing silver and dye images are well known. The dye image in such materials generally is produced by a coupling reaction in which a developing agent is oxidized upon development of photographic silver halide followed by reaction of the resulting oxidized form of the developing agent with a coupling agent to produce a dye image. This is described in, for example, *Research Disclosure*, December 1978, Item No. 17643, published by Industrial Opportunities Limited, Homewell, Havant, Hampshire, United Kingdom. The oxidation of leuco dyes to form an image is described in U.S. Patent 3,938,995. It has been desirable to provide alternative means for producing a dye image, especially a dye image that enhances a silver image.

According to the present invention there is provided a color-forming dye precursor compound which is a diphenylamine, phenylnaphthylamine or an acid salt thereof comprising a first benzene ring attached by an —NH— group to a second benzene ring or a naphthalene nucleus wherein

(a) the first benzene ring has an electron donating group in a meta or para position,

(b) the second benzene ring or the naphthalene nucleus has a sulfonamide group in its para position,

(c) the compound is free of sulfonamid groups in each of its ortho positions, and

(d) is capable in oxidized form, of forming a sulfonimide dye; all ring positions being relative to the —NH— group.

In a preferred form of the invention, the color-forming compound is represented by the formula

(I) 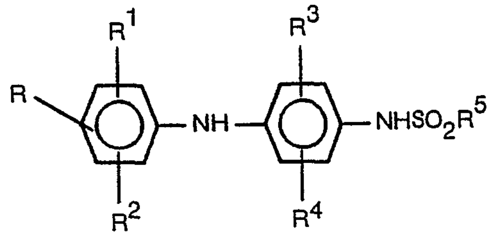

or an acid salt thereof,
wherein:

R is in the meta or para position and is an electron donating substituent selected from

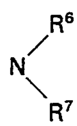

alkoxy containing 1 to 20 carbon atoms, such as methoxy, ethoxy, hexyloxy, and octadecyloxy; aryloxy containing 6 to 20 carbon atoms, such as phenoxy and 2,4-di-t-pentylphenoxy; 3,4,5-trimethylphenoxy and halophenoxy; hydrazino; sulfonamido; ureido such as N-octylureido; and carboxamido groups, such as acetamido, propionamido and N-methylacetamido;

$R^1$ is in the ortho or meta position and is hydrogen; alkyl containing 1 to 20 carbon atoms, such as methyl, ethyl and propyl, benzyl, decyl and eicosyl; carboxamido; sulfonamido; carbamoyl; alkoxy containing 1 to 3 carbon atoms, such as methoxy, ethoxy and propoxy; alkylsulfonyl containing 1 to 5 carbon atoms, such as methylsulfonyl, pentylsulfonyl, ethylsulfonyl and propylsulfonyl; arylsulfonyl containing 6 to 12 carbon atoms, such as phenylsulfonyl and methylphenylsulfonyl; chlorine; bromine; iodine; fluorine; and when $R^1$ is sulfonamido, $R^1$ is in the meta position;

$R^2$ is in the ortho or meta position and is hydrogen; alkyl containing 1 to 3 carbon atoms, such as methyl, ethyl and propyl; carbamoyl; alkoxy containing 1 to 3 carbon atoms, such as methoxy, ethoxy and propoxy; alkylsulfonyl containing 1 to 5 carbon atoms, such as methylsulfonyl, ethylsulfonyl, and pentylsulfonyl; arylsulfonyl containing 6 to 12 carbon atoms, such as phenylsulfonyl and methylphenylsulfonyl; chlorine; bromine; iodine or fluorine;

$R^3$ is hydrogen; alkyl containg 1 to 20 carbon atoms including trihaloalkyl containing 1 to 3 carbon atoms, such as tribromomethyl, 2,2,2-tribromoethyl, 2,2,2-trichloroethyl, and 3,3,3-tribromopropyl; alkoxy containing 1 to 20 carbon atoms, such as methoxy, ethoxy, hexyloxy and oxtadecyloxy; alkoxycarbonyl containing 1 to 20 carbon atoms, such as methoxycarbonyl, ethoxycarbonyl, propyloxycarbonyl or stearyloxycarbonyl; carboxy; carboxamido, such as acetamido, N-methylacetamido, and propionamido; chlorine; bromine; iodine; fluorine; carbamoyl; sulfonic acid; sulfamyl; alkylsulfonyl containing 1 to 5 carbon atoms, such as methylsulfonyl, ethylsulfonyl and propylsulfonyl; arylsulfonyl containing 6 to 20 carbon atoms such as phenylsulfonyl and methylphenylsulfonyl; ureido; or a carbocyclic group containing 6 to 12 carbon atoms, such as cyclopentyl, cyclohexyl, alkyl-substituted cyclohexyl, and phenyl;

$R^4$ is hydrogen, alkyl containing 1 to 20 carbon atoms, including trihaloalkyl containing 1 to 3 carbon atoms, such as tribromomethyl, 2,2,2-tribromomethyl, 2,2,2-trichloroethyl and 3,3,3-tribromopropyl;

alkoxy containing 1 to 20 carbon atoms, such as methoxy, propoxyl, hexyloxy, and octadecyloxy; alkoxycarbonyl group such as methoxycarbonyl, ethoxycarbonyl, butoxycarbonyl, and stearyloxycarbonyl; carboxy; carboxamido such as acetamido, N-methylacetamido and propionamido; chlorine; bromine; iodine; fluorine; cabamoyl; sulfonic acid; sulfamyl; alkylsulfonyl containing 1 to 5 carbon atoms, such as methylsulfonyl, ethylsulfonyl and propylfulfonyl, arylsulfonyl containing 6 to 20 carbon atoms such as phenylsulfonyl containing 6 to 20 carbon atoms such as phenylsulfonyl and methylphenylsulfonyl; ureido such as N-octylureido; or a carbocyclic group containing 6 to 12 carbon atoms, such as phenyl, cyclohexyl, alkyl-substituted cyclohexyl e.g., dimethylcyclohexyl, or a fused benzene ring;

$R^5$ is alkyl containing 1 to 20 carbon atoms, such as methyl, ethyl, propyl, decyl, dodecyl, eicosyl and benzyl; or aryl containing 6 to 20 carbon atoms, such as phenyl, halophenyl, tolyl, naphthyl, 2,4,6-triisopropylphenyl, 2,6-diisopropylphenyl and 2,4,6-trimethylphenyl;

$R^6$ is hydrogen, alkyl containing 1 to 20 carbon atoms, such as methyl, ethyl, propyl, decyl and dodecyl;

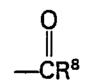

or aryl containing 6 to 20 carbon atoms, such as phenyl, naphthyl, halophenyl, 2,4,6-trimethylphenyl and 2,6-diisopropylphenyl tolyl; or represents, with $R^7$, the atoms, completing a heterocyclic group including a 5- or 6-membered heterocyclic group such as a pyridino, morpholino or piperidino group;

$R^7$ is hydrogen; alkyl containing 1 to 20 carbon atoms; or represents, with $R^6$, the atoms completing a 5- or 6-membered heterocyclic group, e.g., a 1-pyrazol-5-one;

$R^8$ is alkyl containing 1 to 20 carbon atoms, such as methyl, ethyl, benzyl octyl, decl and eicosyl; all alkyl, alkoxy, aryl and aryloxy groups being optionally substituted.

The para-sulfonamidodiphenylamines according to the invention form corresponding sulfonimide dyes, especially sulfonimide dyes represented by the formula:

(II) 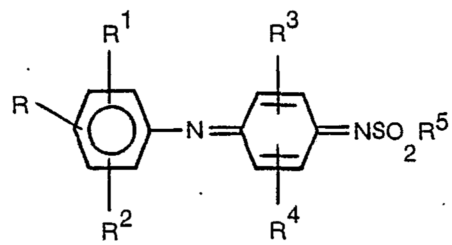

wherein R, $R^1$, $R^2$, $R^3$, $R^4$, and $R^5$ are as defined.

The para-sulfonamidodiphenylamines and the corresponding sulfonamide dyes are useful in imaging materials, such as photographic silver halide materials. For instance, the para-sulfonamidodiphenylamines according to the invention are useful in a photographic silver halide material to form a corresponding sulfonamide dye. The sulfonamide dye according to the invention is generally formed in a photographic material by cross-oxidation of the sulfonamidodiphenylamine by means of a cross-oxidizing developing agent. The sulfonimide dye formed is useful as an image dye. Alternatively, the dye formed is useful as an image dye. Alternatively, the dye formed is useful to enhance a silver image in the photographic material.

The para-sulfonamidodiphenylamines and the corresponding sulfonimide dyes according to the invention are also useful as print out compounds inimaging materials and in printing plates, as image formers in carbonless papers and thermal print papers, and in other applications than photographic materials and processes. Other materials in which the compounds according to the invention are useful include fabrics and fibers, as well as redox indicators.

As indicated above, the terms "alkyl", "aryl", "alkoxy" and "aryloxy" include both unsubstituted and substituted groups. As will be readily understood, these groups are substituted by groups which do not adversely affect the sulfonamidodiphenylamines or the corresponding sulfonimide dyes according to the invention. Examples of suitable substituted alkyl groups include trihaloalkyl, alkyl containing a sulfonamido group, such as $CH_3SO_2NHCH_2CH_2—$, a carboxamido group, an alkoxy group, such as methoxy or ethoxy, carboxyl (—COOH), an aryl group such as a phenyl or tolyl group, and carbonyl. Examples of suitable substituted aryl groups include phenyl containing an alkoxy group, such as methoxy or ethoxy, carboxy; alkyl, such as methyl, ethyl, propyl and butyl, and hydroxy. As especially useful substituted aryl group is an alkylsubstituted aryl group, such as tolyl, 2,4,6-triisopropylphenyl and t-butylphenyl.

An example of a useful class of color-forming para-sulfonamidodiphenylamines is represented by the formula:

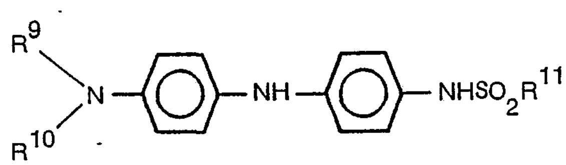

wherein:

$R^9$ is alkyl containing 1 to 20 carbon atoms, such as methyl, ethyl, propyl, decyl and eicosyl;

$R^{10}$ is hydrogen or alkyl containing 1 to 20 carbon atoms, such as methyl, ethyl, propyl, decyl and eicosyl;

$R^{11}$ is alkaryl containing 7 to 20 carbon atoms, such as methylphenyl, butylpheyl and 2,4,6-triisopropylphenyl.

Especially useful para-sulfonamidodiphenylamines and corresponding sulfonimide dyes, such as in imaging materials and processes, are those which comprise a stabilizer group, e.g. as $R^{11}$. The term stabilizer group herein means a group that is substituted on the sulfonamidodiphenylamine to provide increased stability to the sulfonamidodiphenylamine and the corresponding sulfonimide dye. A particularly useful stabilizer group is a 2,4,6-triisopropylphenyl group represented by the formula:

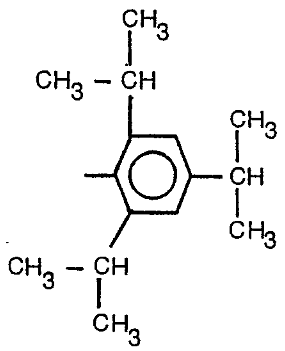

The group is alternatively herein represented by the formula:

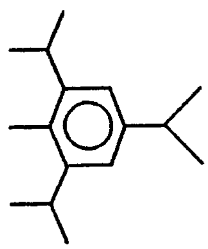

While a 2,4,6-triisopropylphenyl group is a particularly useful stabilizer group, other stabilizer groups are also useful.

Examples of color-forming para-sulfonamidodiphenylamines containing a stabilizer group are those within formula (I) wherein $R^5$ is a 2,4,6-triisopropylphenyl group. Examples of useful corresponding sulfonimide dyes are those within formula (II) wherein $R^5$ is 2,4,6-triisopropylphenyl.

Specific examples of color-forming para-sulfonamidodiphenylamine dye precursors according to the invention containing a stabilizer group are:

4-Dihexylamino-4'-(2,4,6-triisopropylbenzenesulfonamido)-diphenylamine represented by the formula:

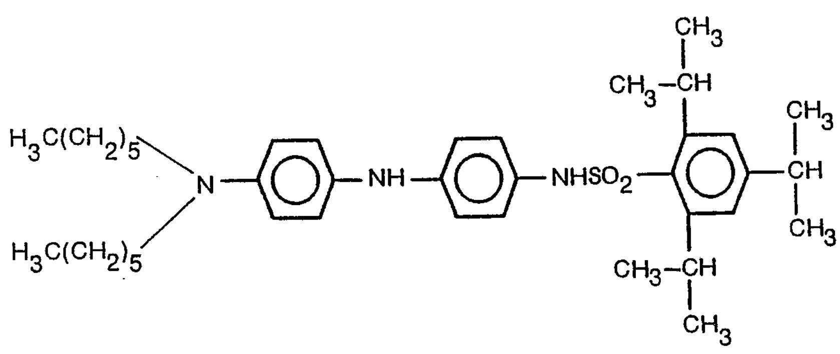

4-n-Hexyloxy-3'-methyl-4'-(2,4,6-triisopropylbenzenesulfonamido)-diphenylamine represented by the formula:

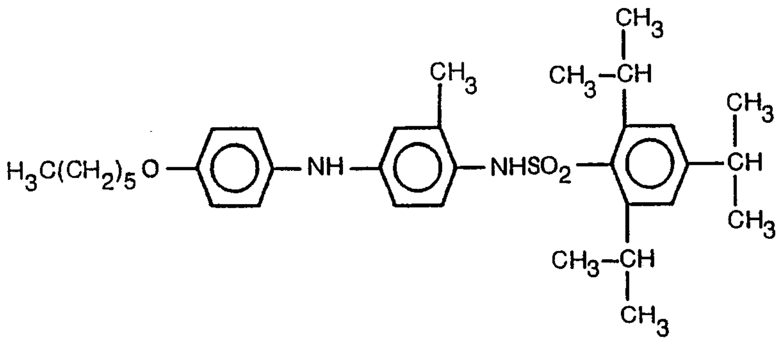

4-N,N-diethylamino-4'-(2,4,6-triisopropylbenzenesulfonamido)diphenylamine represented by the formula:

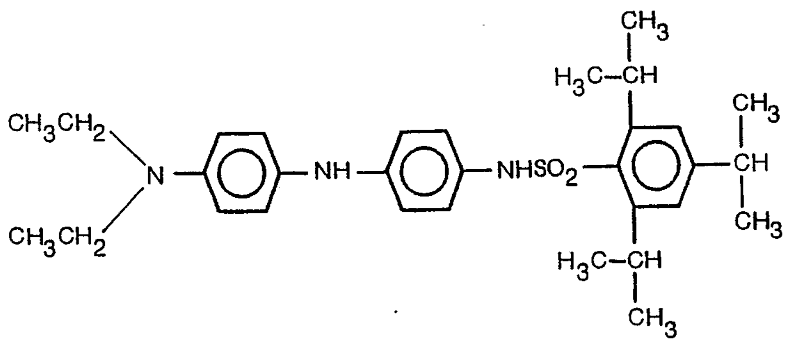

4-N,N-dimethylamino-2-phenylsulfonyl-4'-(2,4,6-triisopropylbenzenesulfonamido)diphenylamine represented by the formula:

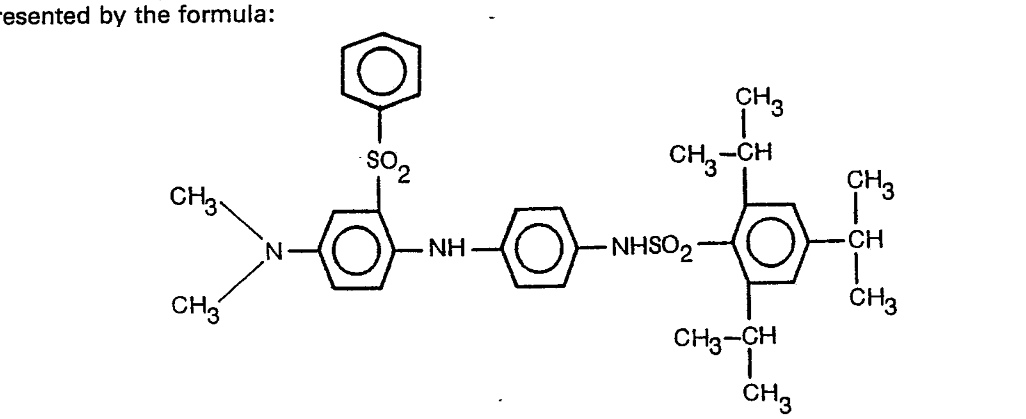

Another class of useful color-forming parasulfonamidodiphenylamines is the class of carboxamido substituted, color-forming para-sulfonamidodiphenylamines represented by the formula:

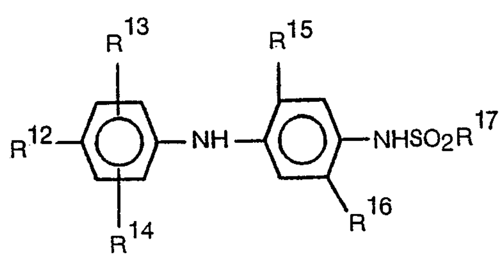

wherein:

$R^{12}$ is in the meta or para position and is an electron donating substituent selected from

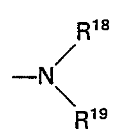

alkoxy containing 1 to 20 carbon atoms, such as methoxy, ethoxy, hexyloxy and dodecyloxy; aryloxy containing 6 to 12 carbon atoms, such as phenoxy and alkyl-substituted phenoxy; carboxamido groups, such as acetamido, N-methylacetamido; and ureido, such as octyl ureido;

$R^{13}$ is in the ortho or meta position and is hydrogen; alkyl containing 1 to 3 carbon atoms, such as methyl, ethyl and propyl; carbamoyl; alkoxy containing 1 to 3 carbon atoms, such as methoxy, ethoxy and propoxy; alkylsulfonyl containing 1 to 5 carbon atoms, such as methylsulfonyl, ethylsulfonyl and pentylsulfonyl; arylsulfonyl containing 6 to 12 carbon atoms, such as phenylsulfonyl and methylphenylsulfonyl; chlorine; bromine; iodine; fluorine; or, in the meta position is sulfonamido;

$R^{14}$ is hydrogen; alkyl containing 1 to 3 carbon atoms, such as methyl, ethyl or propyl; carbamoyl; alkoxy containing 1 to 3 carbon atoms, such as methoxy, ethoxy and propoxy; alkylsulfonyl containing 1 to 3 carbon atoms, such as methylsulfonyl, ethylsulfonyl and propylsulfonyl; arylsulfonyl containing 6 to 12 carbon atoms, such as phenylsulfonyl and tolylsulfonyl; chlorine; bromine; iodine or fluorine;

$R^{15}$ is hydrogen or carboxamido, such as acetamido, propionamido, pivalamido and ureido;

$R^{16}$ is hydrogen or carboxamido, such as acetamido, propionamido, butylamido and pivalamido;

$R^{17}$ is alkyl containing 1 to 20 carbon atoms, such as methyl, ethyl, propyl, decyl and eicosyl; aryl containing 6 to 20 carbon atoms, such as phenyl, naphthyl, tolyl and 2,4,6-triisopropylphenyl;

$R^{18}$ is hydrogen; alkyl containing 1 to 20 carbon atoms, such as methyl, ethyl, propyl, decyl and eicosyl; or aryl having 6 to 12 carbon atoms such as phenyl or tolyl; and

$R^{19}$ is hydrogen; alkyl containing 1 to 20 carbon atoms, such as methyl, ethyl, propyl, decyl and eicosyl; wherein when $R^{16}$ is carboxamido, then $R^{15}$ is carboxamido, and wherein all alkyl, aryl, alkoxy and aryloxy groups are optionally substituted.

The preferred sulfonamido groups employed are represented by the formula:

$$—NHSO_2R^{20}$$

wherein $R^{20}$ is a substituent which does not adversely affect the diphenylamine compound or imide dye according to the invention. $R^{20}$ is, for example, alkyl containing 1 to 20 carbon atoms, such as methyl, ethyl, propyl, butyl, decyl and eicosyl, or aryl containing 6 to 20 carbon atoms, such as phenyl, tolyl, and 2,4,6-triisopropylphenyl. Examples of such groups include 2,4,6-triisopropylphenylsulfonamido, methylsulfonamido and tolylsulfonamido.

An especially useful carboxamido substituted, color-forming para-sulfonamidodiphenylamine is represented by the formula:

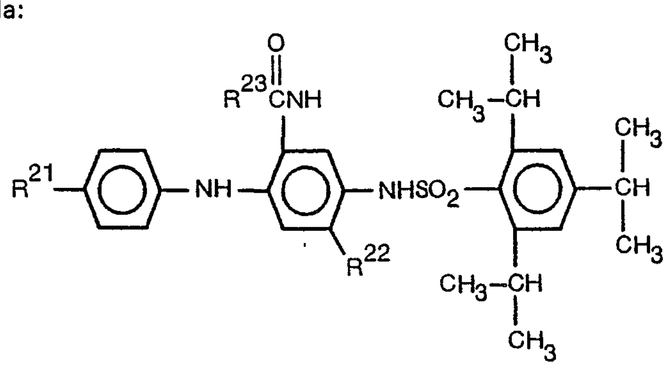

wherein:

$R^{21}$ is alkoxy containing 1 to 20 carbon atoms or 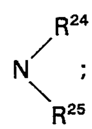 ;

$R^{22}$ is hydrogen or 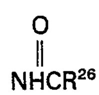 ;

$R^{23}$ is alkyl containing 1 to 20 carbon atoms, such as methyl, ethyl, propyl, butyl, decyl, dodecyl and eicosyl; aryl containing 6 to 12 carbon atoms, such as phenyl and 2,4-diisopropylphenyl; alkoxy containing 1 to 4 carbon atoms, such as methoxy, ethoxy and butoxy; aryloxy containing 6 to 12 carbon atoms, such as phenoxy and 3,4,5-trimethylphenoxy; or NH—$R^{27}$;

$R^{24}$ is hydrogen or alkyl containing 1 to 20 carbon atoms, such as methyl, ethyl, propyl, decyl and eicosyl;

$R^{25}$ is hydrogen; alkyl containing 1 to 20 carbon atoms, such as methyl, ethyl, propyl, butyl, decyl and eicosyl; or aryl containing 6 to 12 carbon atoms, such as phenyl and 2,4-diisopropylphenyl;

$R^{26}$ is alkyl containing 1 to 20 carbon atoms, such as methyl, ethyl, propyl, decyl and eicosyl; cycloalkyl containing 5 to 20 carbon atoms, such as cyclopentyl, cyclohexyl and substituted cyclohexyl; or aryl containing 6 to 12 carbon atoms, such as phenyl and tolyl; alkoxy containing 1 to 4 carbon atoms, such as

methoxy, ethoxy and butoxy; aryloxy containing 6 to 12 carbon atoms, such as phenoxy and 3,4,5-trimethylphenoxy; or NH—$R^{28}$;

$R^{27}$ and $R^{28}$ are each alkyl containing 1 to 20 carbon atoms, such as methyl, ethyl, propyl, butyl, decyl and eicosyl; aryl containing 6 to 12 carbon atoms, such as phenyl and tolyl; alkoxy containing 1 to 4 carbon atoms, such as methoxy, ethoxy and butoxy; or aryloxy containing 6 to 12 carbon atoms, such as phenoxy and 2,4,5-trimethylphenoxy, and wherein all alkyl, aryl, alkoxy, and aryloxy groups are optionally substituted. Examples of further useful carboxamido substituted color-forming para-sulfonamidodiphenylamines are:

4-[N-ethyl-N-(p-methanesulfonamidoethyl)amino]-2-methyl-2',5'-dipivalamido-4'-(2,4,6-triisopropylbenzenesulfonamido)diphenylamine represented by the formula:

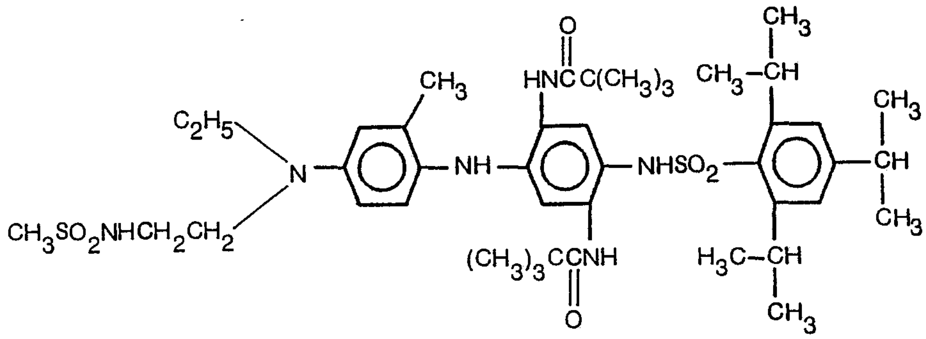

4-n-Hexyloxy-2',5'-dipivalamido-4'-(2,4,6-triisopropylbenzenesulfonamido)diphenylamine represented by the formula:

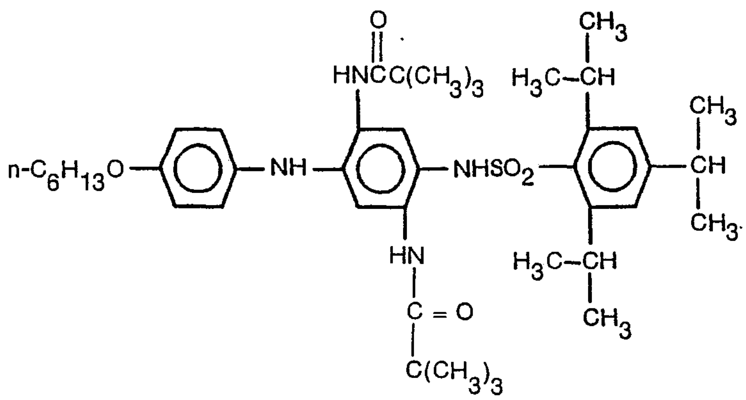

Other color-forming para-sulfonamidodiphenylamine compounds containing a carboxamido group and at least two sulfonamido groups are represented by the formula:

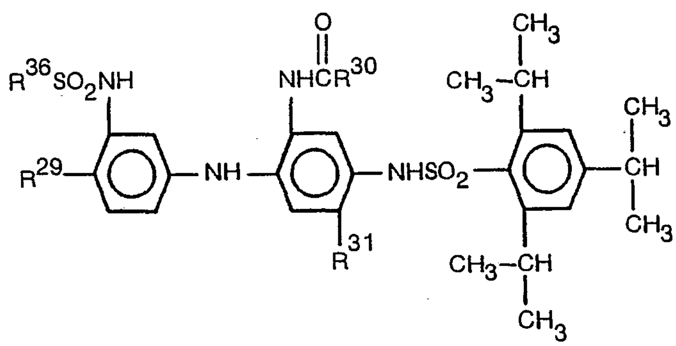

wherein:

$R^{29}$ is alkyl containing 1 to 20 carbon atoms, such as methyl, ethyl, propyl, decyl and eicosyl; alkoxy containing 1 to 20 carbon atoms, such as methoxy, ethoxy, hexyloxy and dodecyloxy; or

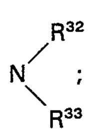 ;

$R^{30}$ is alkyl containing 1 to 20 carbon atoms, such as methyl, ethyl, propyl, butyl, decyl and eicosyl; aryl containing 6 to 12 carbon atoms, such as phenyl and 2,4-dimethylphenyl;

$R^{31}$ is hydrogen or $NH\overset{O}{\overset{\|}{C}}R^{35}$ ;

$R^{32}$ is hydrogen or alkyl containing 1 to 20 carbon atoms, such as methyl, ethyl, propyl, decyl and eicosyl;

$R^{33}$ is hydrogen; alkyl containing 1 to 20 carbon atoms, such as methyl, ethyl, propyl, decyl and eicosyl; or aryl containing 6 to 12 carbon atoms, such as phenyl and 2,4-dimethylphenyl;

$R^{35}$ is alkyl containing 1 to 20 carbon atoms, such as methyl, ethyl, propyl, decyl and eicosyl; aryl containing 6 to 12 carbon atoms, such as phenyl and 2,4-dimethylphenyl; alkoxy containing 1 to 4 carbon atoms, such as methoxy, ethoxy and butoxy; or aryloxy containing 6 to 12 carbon atoms, such as phenoxy and 3,4,5-trimethylphenoxy; and

$R^{36}$ is alkyl containing 1 to 12 carbon atoms, such as methyl, ethyl, propyl and decyl and wherein all alkyl, aryl, alkoxy, and aryloxy groups are optionally substituted.

Examples of such color-forming parasulfonamidodiphenylamines containing a carboxamido group and at least two sulfonamido groups include:

3-Methanesulfonamido-4-methyl-2'-palmitamido-4'-(2,4,6-triisopropylbenzenesulfonamido)-diphenylamine represented bythe formula:

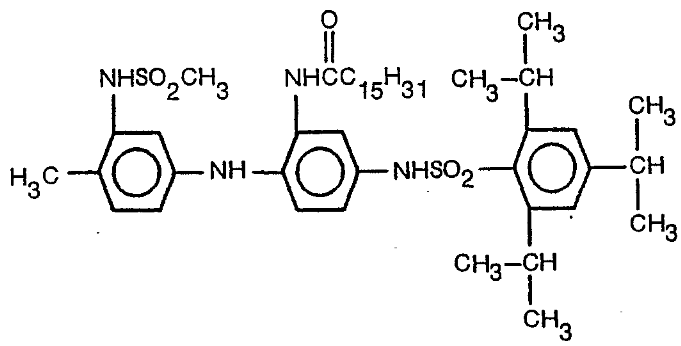

3-Methanesulfonamido-4-methoxy-2'-pivalamido-4'-(2,4,6-triisopropylbenzenesulfonamido)-diphenylamine represented by the formula:

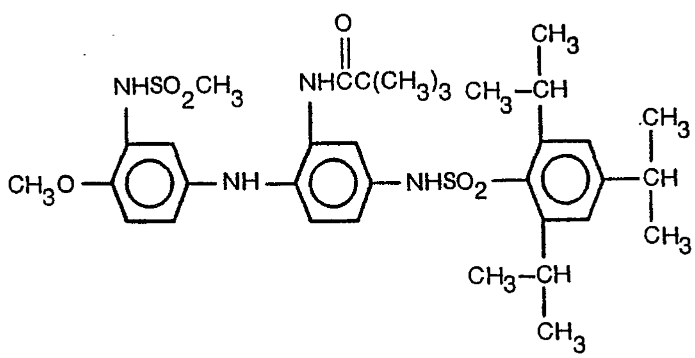

The color-forming para-sulfonamidodiphenylamines according to the invention are prepared by at least one of the following four methods:

1. The first method comprises condensation of a phenylenediamine or ether substituted aniline with a

substituted halonitrobenzene followed by reduction of the nitro group and subsequent sulfonylation of the amine. This is illustrated by the following synthesis:

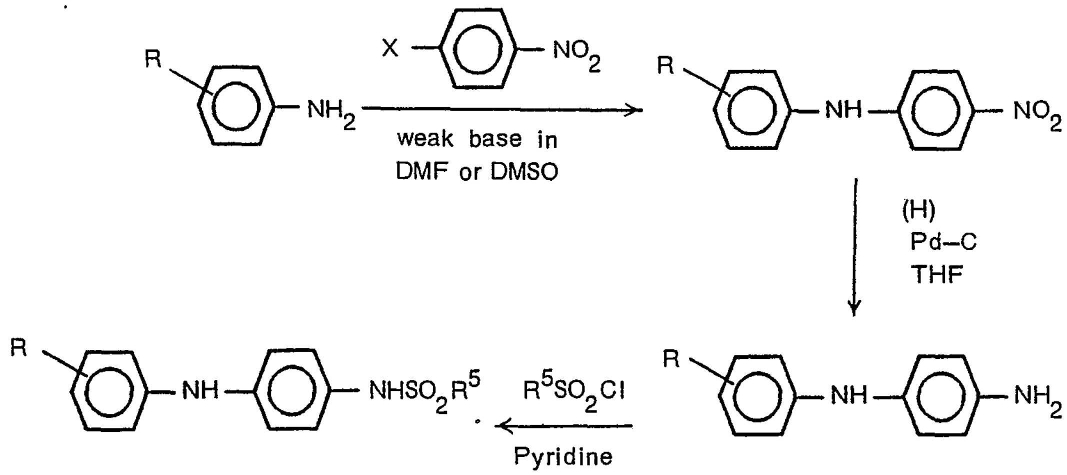


X represents halogen, such as bromine, chlorine or fluorine, and R and $R^5$ are as defined. DMF herein means dimethylformamide. DMSO herein means dimethylsulfoxide. THF herein means tetrahydrofuran. Pd-C herein means a palladium-charcoal catalyst suitable for catalyzing hydrogen reduction of a nitro group.

2. The second method comprises condensation of a halonitroaniline with a sulfonyl chloride, followed by condensation with a phenylenediamine or aniline; and, then reduction of the nitro group, followed by acylation of the amine to yield a carboxamido-substituted sufonamidodiphenylamine. The sulfonylation step is avoidable by using a halonitrosulfonamidobenzene that condenses directly with the phenylenediamine or aniline. The second method is illustrated by the following synthesis:

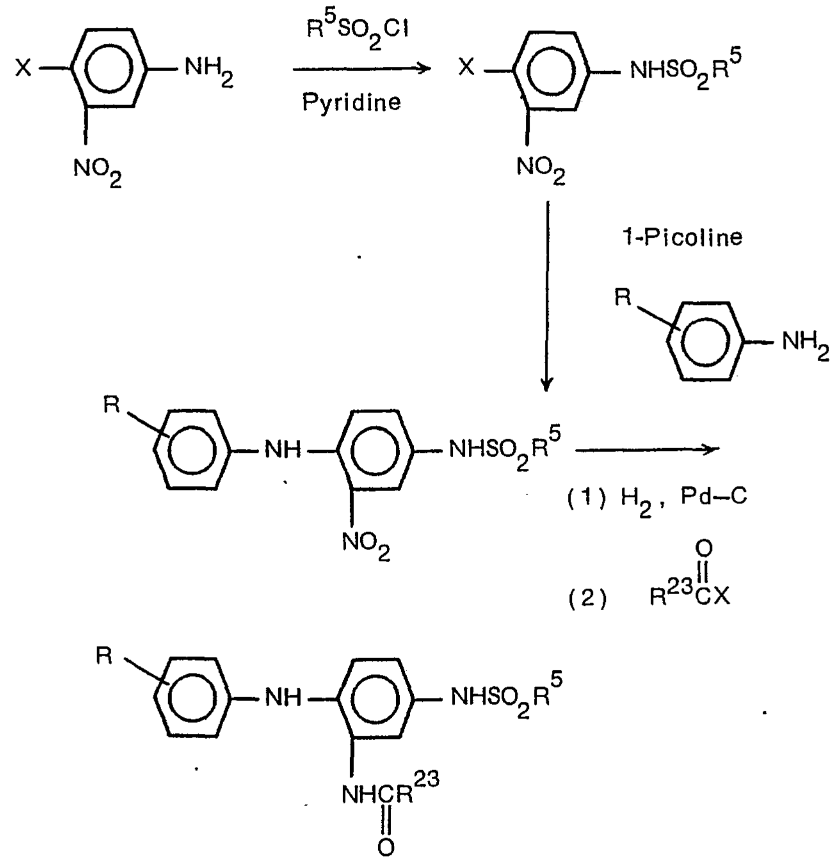


wherein X, R, $R^5$ and $R^{23}$ are as defined.

3. The third method comprises condensation of a substituted aniline with a sulfonyl chloride followed by oxidative coupling with a phenylenediamine in the presence of ferricyanide and base to yield a dye that is subsequently reduced to its leuco state. Carboxamido groups are introduced prior to oxidative coupling. The third method is illustrated by the following synthesis:

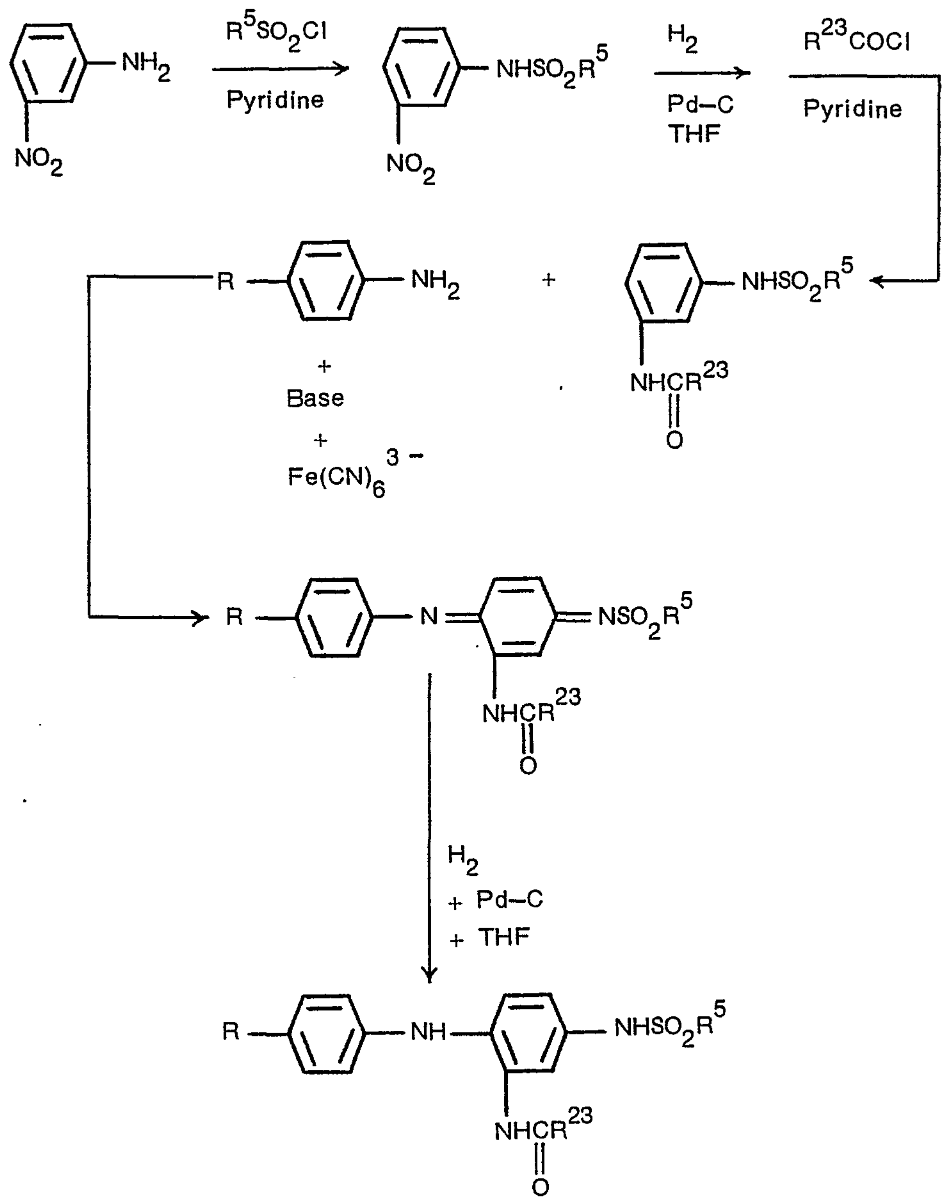


wherein R, $R^5$ and $R^{23}$ are as defined.

4. The fourth method comprises a Smiles rearrangement method for those preparations in which direct nucleophilic condensation is not satisfactory. The Smiles rearrangement is applicable to weakly basic

anilines or ortho-sterically hindered anilines that are not satisfactorily condensable with 1-halo-4-nitrobenzenes by direct nucleophilic condensation. This is illustrated by the following synthesis:

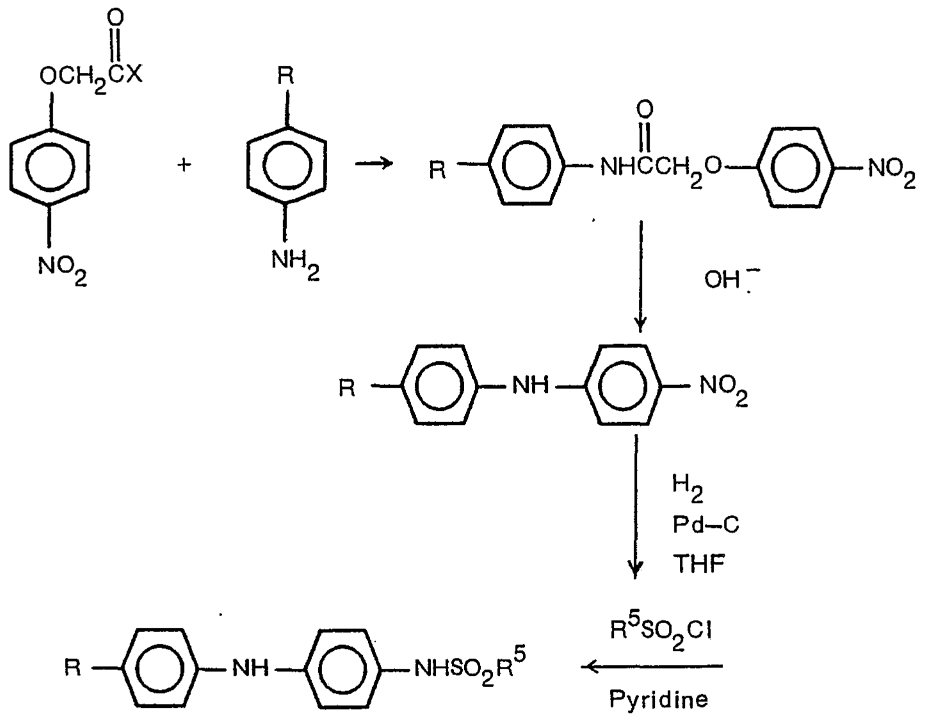


wherein R and $R^5$ are as defined.

Examples of compounds that are preferably prepared by the fourth method are:

4-N,N-Dimethyl-2-phenylsulfonyl-4′-(2,4,6-triisopropylbenzenesulfonamido)diphenylamine represented by the formula:

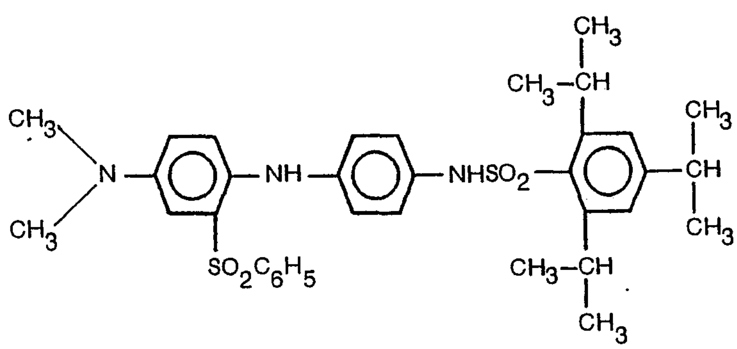

4-(N,N-Diethylamino)-2-methyl-3′-methyl-4′-(2,4,6-triisopropylbenzenesulfonamido)diophenylamine represented by the formula:

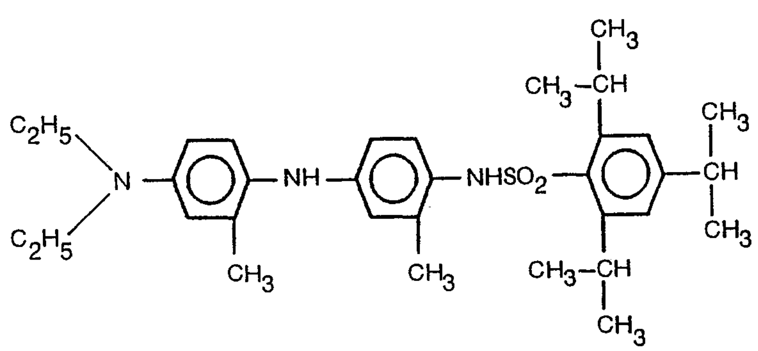

The optimum reaction conditions and concentrations of reactants in methods 1, 2, 3 and 4 will depend upon such factors as the particular para-sulfonamidodiphenylamine to be prepared and the particular reactants.

The color-forming sulfonamidodiphenylamines and their corresponding sulfonamide dyes are shown in their non-salt form. The color-forming sulfonamidodiphenylamines and their corresponding dyes herein include either of the appropriate forms. Examples of suitable salts of the described para-sulfonamidodiphenylamines include paratoluenesulfonate, 1,5-naphthalene disulfonate and benzenesulfonate.

The para-sulfonamidodiphenylamines are useful in a photographic material in a range of concentrations. Selection of an optimum concentration of para-sulfonamidodiphenylamine will depend upon such factors as the desired image, the particular photographic material, processing steps and conditions, other components in the photographic material, and particular para-sulfonamidodiphenylamine. A useful concentration of para-sulfonamidodiphenylamine is within the range of 0.08 to 0.6 mole of para-sulfonamidodiphenylamine per mole of silver halide in the photographic material. An especially useful concentration is within the range of 0.1 to 0.2 mole of para-sulfonamidodiphenylamine, as described, per mole of silver halide in the described photographic material. In a silver halide photographic element, a useful concentration of para-sulfonamidodiphenylamine is within the range of 0.5 to 22 mg of para-sulfonamidodiphenylamine per square decimeter of support, preferably a concentration within the range of 5 to 11 mg per square decimeter of support.

The hues of the dyes produced from the color-forming para-sulfonamidodiphenylamines vary, depending on such factors as the particular groups on the color-forming agents, processing conditions and other components in a photographic material containing the para-sulfonamidodiphenylamines, such as dispersion of solvents. In a photographic material, a para-sulfonamidodiphenylamine is generally colorless or very slightly colored prior to processing. Some of the suitable para-sulfonamidodiphenylamine color-forming agents have a slight yellow color in the photographic material. This slight color is not considered unacceptable.

In some cases the para-sulfonamidodiphenylamine absorbs radiation in certain areas of the electromagnetic spectrum which do not adversely effect the described properties or the desired image formed upon processing.

The present invention also provides a photographic element comprising a support having thereon, in reactive association in a binder:

(a) a photosensitive silver halide; and

(b) a color-forming dye precursor compound accordingto the present invention.

The term "in reactive association" herein means that the photosensitive silver halide and the described para-sulfonamidodiphenylamine color-forming agent are in a location with respect to each other which enables the photographic material upon processing to produce a desired dye image and a desired silver image.

Color-forming para-sulfonamidodiphenylamines according to the invention are especially useful in a photographic material comprising a photosensitive component which consists essentially of photographic silver halide. Many photographic silver halides are useful in the photographic material. Examples of useful photographic silver halides are silver chloride, silver bromide, silver bromoiodide, silver chlorobromoiodide, silver iodide or mixtures thereof. The photographic silver halide is generally present in the photograhic material in the form of an emulsion which is a dispersion of the photographic silver halide in a suitable binder. The photographic silver halide is present in a range of grain sizes from fine grain to coarse grain. A composition containing the photographic silver halide is prepared by any of the well-known procedures in the photographic art, such as described in *Research Disclosure,* December 1978, Item No. 17643. The photographic silver halide composition is generally chemically sensitized.

The silver halide is spectrally sensitized with spectral sensitizing dyes as described in, for example, the above *Research Disclosure,* December 1978, Item No. 17643, including dyes from a variety of classes, such as polymethane dyes which include the cyanines, merocyanines, complex cyanines and merocyanines (including tri, tetra and polynuclear cyanines and merocyanines), as well as oxanols, hemioxanols, styryls, merostyryls and streptocyanines. Combinations of spectral sensitizing dyes are useful.

The color-forming para-sulfonamidodiphenylamines are useful in any suitable location in the photographic element which produces the desired dye upon processing. The para-sulfonamidodiphenylamine should be in a location with respect to the photosensitive silver halide whcih produces the desired dye image and the desired silver image upon processing. The para-sulfonamidodiphenylamine is preferably in a location with respect to the photographic silver halide that produces a dye enhanced silver image upon appropriate processing. Alternatively, a proportion of the sulfonamidodiphenylamine is in a layer contiguous to the layer of the photographic element comprising photosensitive silver halide.

A para-sulfonamidodiphenylamine according to the invention forms a sulfonimidie dye by reaction with a suitable oxidizing agent. Suitable oxidizing agents include potassium ferricyanide, potassium dichromate or permanganate, organic peroxides, inorganic peroxides and the oxidized form of a silver halide developing agent, such as the oxidized from of a 3-pyrazolidone developing agent. Oxidation of the para-sulfonamidodiphenylamine preferably is carried out in a photographic silver halide material. However, oxidation of the para-sulfonamidodiphenylamine is also suitable in other environments, such as in clinical chemical analysis in which suitable oxidizing agents are present and in imaging materials in the graphic arts and carbonless copy papers.

Many developing agents are useful for developing an image in a photographic material containing a color-forming para-sulfonamidodiphenylamine. Any silver halide developing composition is useful,

provided it comprises a cross-oxidizing developing agent which will cross-oxidize with the sulfonamidodiphenylamine. Such a silver halide developer, called a cross-oxidizing developing agent herein, becomes oxidized during development by reducing exposed silver halide to silver metal. The oxidized developer then cross-oxidizes the sulfonamidodiphenylamine.

A cross-oxidizing developing agent (COD) enables the sulfonamidodiphenylamine to become oxidized in a photographic material without the sulfonamidodiphenylamine itself developing silver. It is viewed as an electron transfer agent which shuttles electrons between the developing silver halide and the sulfonamidodiphenylamine.

The requirements for a cross-oxidizing developing agent generally are:

(a) it must have sufficient electrochemical potential under the conditions of use to develop exposed silver halide ;

(b) in its oxidized form, it must be of such electrochemical potential as to oxidize the sulfonamidodiphenylamine; and

(c) in its oxidized form, it must be stable to decomposition by other chemical reactions long enough to undergo the redox reaction with the sulfonamidodiphenylamine.

If any of the conditions (a), (b) or (c) are not met, the developing agent is not a cross-oxidizing developing agent.

Whether a particular developing agent meets the requirements of a cross-oxidizing developing agent, as described, depends upon the conditions under which development occurs. Other components in the developing composition, the pH of the developing composition, the temperature of the development process and the length of development time all effect whether the requirements for a cross-oxidizing developing agent are met. Any developing agent which meets the requirements of a cross-oxidizing developing agent under development conditions is useful. Examples of developing agents which are useful as cross-oxidizing developing agents and are also preferred include 1-phenyl-3-pyrazolidone, 1-phenyl-4,4-dimethyl-3-pyrazolidone and 4-hydroxymethyl-4-methyl-1-phenyl-3-pyrazolidone. Such cross-oxidizing developing agents are described in, for example, U.S. Patent 3,938,995. Combinations of developing agents are useful, if desired. Combinations of non-cross-oxidizing developing agents and cross-oxidizing developing agents are useful, provided a minor proportion, generally up to 10 percent by weight, of the non-cross-oxidizing developing agent is present. Examples of combinations of a non-cross-oxidizing developing agent and cross-oxidizing agents include 4-hydroxymethyl-4-methyl-1-phenyl-3-pyrazolidone with a minor proportion of at least one of the non-cross-oxidizing developing agents, such as ascorbic acid, hydroquinone or a pyrimidine. Selection of an optimum silver halide developing agent or developing agent combination will depend upon the described factors, including the desired image, the particular photosensitive silver halide, processing conditions and the like.

It is useful to incorporate a silver halide developing agent, silver halide developing agent combination or precursors thereof in the photographic material. Typically, however, the developing agent is most useful in a processing solution in which the described photographic material is processed to produce a desired dye image and silver image.

The tone of the combined silver image and dye image produced in a photographic material will vary, depending upon such factors as the silver morphology of the developing silver image, the covering power of the silver materials, the particular dye or dye combination formed, the particular developing agent, processing conditions and the like. In photographic materials according to the invention that provide a brown silver image, a dye produced from the described color-forming agent is especially useful which is complimentary in hue to the silver image.

The photographic materials comprise a variety of binders, alone or in combination. The described binders include both naturally occurring substances such as proteins, or example, gelatin, gelatin derivatives, cellulose derivatives, polysaccharides such as dextran, gum arabic and the like; and synthetic polymeric materials, such as water soluble polyvinyl compoiunds like poly(vinyl pyrrolidone) and acrylamide polymers.

If desired, the described photographic elements contain an overcoat layer and/or inner layer and/or subbing layer to provide desired properties. The overcoat layer, for example, increases resistance to abrasion and other markings on the element. The overcoat layer, inner layer or subbing layer contain, alone or in combination, the described vehicles or binders. Gelatin is an especially useful binder.

The photographic element comprises a variety of supports. Useful supports include those which are resistant to adverse changes in structure due to processing conditions and which do not adversely effect the desired sensitometric properties of the photographic materials. Typical supports include cellulose ester, poly(vinyl acetal), poly(ethylene terephthalate) and polycarbonate films, as well as related films and resinous materials. Glass, paper, metal and the like supports are also useful. Typically, a flexible support is most useful.

In preparing a composition comprising a color-forming para-sulfonamidodiphenylamine, a dispersion solvent, also called a coupler solvent, is useful to produce a coating composition. Any suitable coupler solvent known in the photographic art is useful for aiding dispersion of the sulfonamidodiphenylamine compound. Examples of useful coupler solvents include N-*n*-butylacetanilide, diethyl lauramide, di-n-butyl phthalate and 2,4-di-tert amylphenol. The sulfonamidodiphenylamine may also be loaded into a latex, or a non-solvent dispersion may be prepared, if desired.

Other addenda known to be useful in the photographic art are also useful in the photographic materials. These addenda include, for instance, brighteners, antifoggants and stabilizers, light absorbing and scattering materials, hardeners, coating aids, plasticizers, lubricants, antistatic materials and matting agents. These addenda are also descdribed in *Research Disclosure*, December 1978, Item No. 17643.

Photographic materials containing color-forming para-sulfonamidodiphenylamines are coated on a suitable support by procedures known to be useful in the coating of photographic layers in the photographic art. Such procedures include, for example, immersion or dip-coating, roller coating, reverse roll coating, airknife coating, doctor blade coating, spray coating, extrusion coating, bead coating, stretch-flow coating and curtain coating.

The photographic elements are imagewise exposed by means of various forms of energy. Such forms of energy include those to which the photosensitive silver halide is sensitive and encompass the ultraviolet, visible and infrared regions of the electromagnetic spectrum, as well as electron beam and beta radiation, gamma-ray, X-ray, alpha particle , neutron radiation and other forms of corpuscular wave-like radiant energy in either non-coherent (random phase) forms or coherent (in phase) forms as produced by lasers. Exposures of monochromatic, orthochromatic or panchromatic, depending upon the spectral sensitization of the photosensitve silver halide. Imagewise exposure is generally for a sufficient time and intensity to produce a developable latent image in the photographic element.

The described photographic elements may be processed either in a process which produces a positive dye image or in a process which produces a negative dye image with or without a silver image in the photographic element. The light sensitive silver halide contained in the photographic element, as described, is processed following exposure to form a visible image by reactively associating the silver halide with an aqueous alkaline medium in the presence of a developing agent contained in the medium or the element.

If a reversal dye image is desired in the photographic element, a process is most useful in which the latent image in the exposed element is developed by means of a non-cross-oxidizing developing composition as a first development step. During this step, the exposed silver halide is reduced to elemental silver by the non-cross-oxidizing developing composition. The non-cross-oxidizing developing composition does not, when oxidized, oxidize the sulfonamidodiphenylamine to its corresponding dye.

The non-cross-oxidizing compositions useful in this step are generally alkaline solutions comprising a non-cross-oxidizing developing agent. Non-cross-oxidizing developing agents are well known in the photographic art and include many silver halide developing agents which will reduce exposed silver halide to silver, but will not oxidize the para-sulfonamidodiphenylamine to a corresponding dye.

In a second step of the process for forming a reversal dye image, fogging is accomplished by exposing the photographic element to light or by chemical fogging by means of fogging compositions known in the photographic art. This fogging does not adversely affect the color-forming para-sulfonamidodiphenylamine.

Following the described fogging step, a second silver halide developing step is carried out. This is carried out by means of a cross-oxidizing developing composition. It is in this step that the dye image is formed. Any silver ahlide developing composition is useful in this step, provided it cross-oxidizes the para-sulfonamidodiphenylamine to a desired dye. Such silver halide developing compositions include an alkaline solution comprising a cross-oxidizing silver halide developing agent. This cross-oxidizing developing agent becomes oxidized during development by reducing exposed or fogged silver halide to silver metal. The oxidized developer then cross-oxidizes the para-sulfonamidodiophenylamine to produce a desired dye which contains an amount of dye in inverse proportion to the amount of exposure of the photographic element. That is, a positive dye image, also called a reversal dye image, is formed. Any unwanted silver image may be removed by a bleach step and a later fix step or a combined bleach fix-step.

An example of a process for using a color-forming compound according to the invention is a process of producing a positive dye image in an imagewise exposed photographic element comprising a support having thereon, in reactive association, in a gelatino binder: (a) photo-sensitive silver halide gelatino emulsion, and (b) a sulfonamidodiphenylamine color-forming agent consisting essentially of 4-dihexylamino-4'-(2,4,6-triisopropylbenzenesulfonamido) diphenylamine. This process comprises (A) developing the photographic element in an alkaline photographic developer in the absence of a cross-oxidizing, silver halide developing agent, and then (B) uniformly exposing the resulting element to a flash exposure of light, followed by (C) developing the photographic element in an alkaline cross-oxidizing developer comprising an aqueous alkaline solution of 4-methyl-4-hydroxymethyl-1-phenyl-3-pyrazolidone, and (D) bleaching and fixing the photographic element in a silver halide bleaching and fixing solution to produce a positive dye image in the photographic element. It is especially useful to treat the photographic element by means of a development stop bath after step (A) and before step (B).

Photographic elements according to the invention comprising direct-positive photographic silver halide are useful for forming positive, dye images and positive, silver images. A process of producing a positive, dye image and a positive, silver image in an imagewise exposed photographic element comprising a support having thereon, in reactive association, in binder, (a) direct-positive photographic silver halide, and (b) a color-forming para-sulfonamidodiphenylamine dye precursor, comprising (A) developing the photographic element in an alkaline, cross-oxidizing photographic silver halide developing composition; then (B) fixing rhe resulting photographic element to produce a positive, dye image and a positive silver image. Useful direct-positive silver halide is described in, for example, *Research Disclosure*,

December 1978, Item No. 17643, pages 22 through 31. Fixing the photographic element is accomplished by means of fixing compositions known in the photographic art, such as a sodium thiosulfate fixing composition.

An advantage of the color-forming para-sulfonamidodiphenylamines according to the invention is that the sulfonimide dye images produced upon processing exhibit a desired degree of stability to post-processing conditions and visible light exposure. A simple test is useful for establishing the degree of stability which is desired for a dye image produced from a para-sulfonamidodiphenylamine color-forming agent according to the invention. One such test is a test well known in the photographic art in which the processed photographic element is exposed to a Simulated Average North American Skylight (SANS) with continuous 5400 LUX of exposure at an average temperature of 21°C at 45 percent relative humidity. A comparison of the stability of the tested dye to a control in this test provides an indication of the degree of stability of the dye.

In one embodiment of the invention, the described photographic material contains a silver halide developing agent. When a silver halide developing agent is present in the described photographic material, a developed image is produced after imagewise exposure of the photographic material by contacting the element with an alkaline activator solution which enables development of the exposed silver halide, as well as production of the desired dye.

Many alkaline activators are useful for developing an image in a photographic element, as described, containing an incorporated silver halide developing agent. Any of the alkaline activators commonly used in the photographic art, such as in stabilization processing, are useful for developing an image in the described photographic element. Examples of useful alkaline activators include sodium hydroxide, potassium hydroxide, trisodium phosphate·$12H_2O$ (pH 12), sodium metaborate (pH 12), disodium phosphate and monosodium phosphate. The optimum alkaline activator will depend upon such factors as the desired image, the particular developing agent, processing conditions and the like. An especially useful alkaline activator comprises trisodium phosphate (pH 12).

The alkaline activator is useful in a range of concentrations. A useful concentration of alkaline activator is within the range of 10 to 50 grams per liter of activator solution which produces a pH within the range of 11 to 12.

An optimum concentration of alkaline activator will depend upon such factors as the particular activator, the desired image, processing conditions, particular photosensitive silver halide and the like.

After exposure and processing of the photographic material according to the invention, the photographic material comprises a sulfonamide dye image or, alternatively, a sulfonamide dye image and a silver image. The sulfonamide dye image consists essentially of a sulfonimide dye represented by the formula:

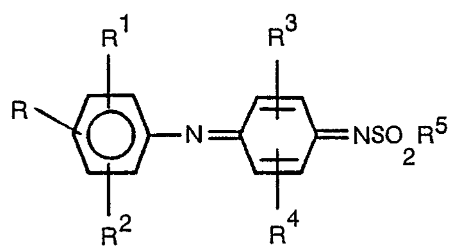

wherein R, $R^1$, $R^2$, $R^3$, $R^4$ and $R^5$ are as previously defined. Preferably, $R^5$ in this dye is a stabilizer group, such as a 2,4,6-triisopropylphenyl group.

Examples of useful sulfonamide dyes in exposed and processed photographic materials according to the invention are as follows:

N-(4-dihexylaminophenyl)-N'-(2,4,6-triisopropylbenzenesulfonyl)-p-benzoquinonediimine represented by the formula:

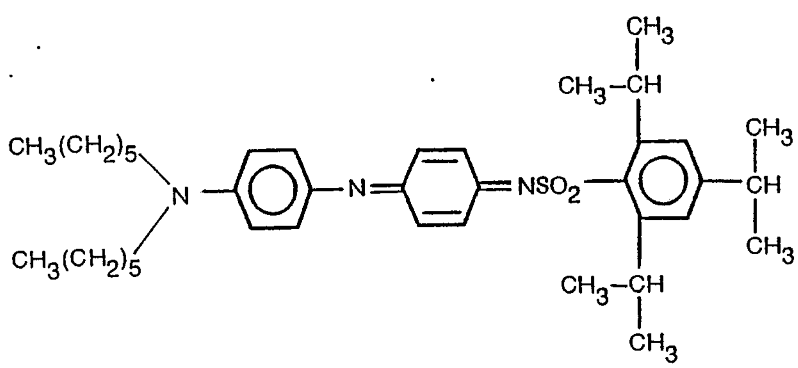

N-(4-hexyloxyphenyl)-N′-(2,4,6,-triisopropylbenzenesulfonyl)-3-methyl-*p*-benzoquinonediimine represented by the formula:

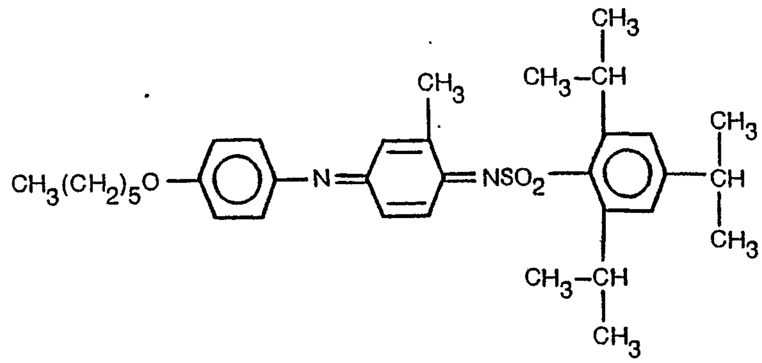

N-(dihexylaminophenyl)-N′-(2,4,6-triisopropylbenzenesulfonyl)-3-methyl-*p*-benzoquinonediimine represented by the formula:

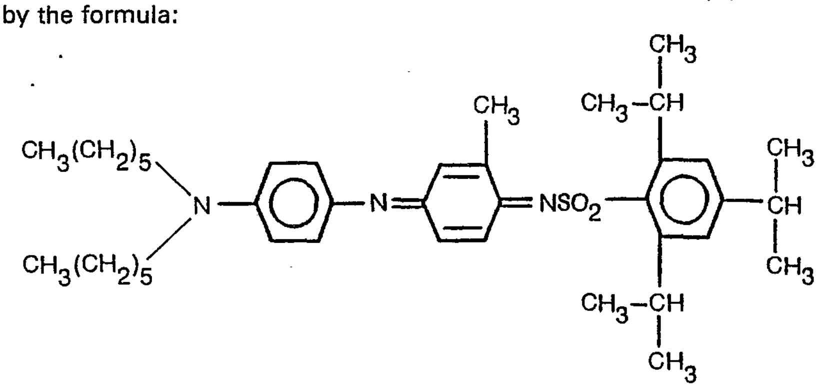

N-(4-dihexylaminophenyl)-N′-(2,4,6,k-triisopropylbenzenesulfonyl)-2-methylsuflonyl-*p*-benzoquinonediimine represented by the formula:

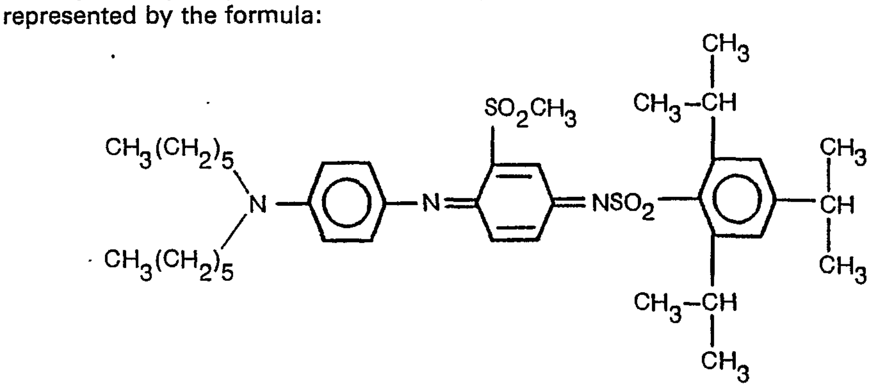

N-(4-dihexylaminophenyl)-N′-(2,4,6-triisopropylbenzenesulfonyl)-2-pivalamido-*p*-benzoquinonediimine represented by the formula:

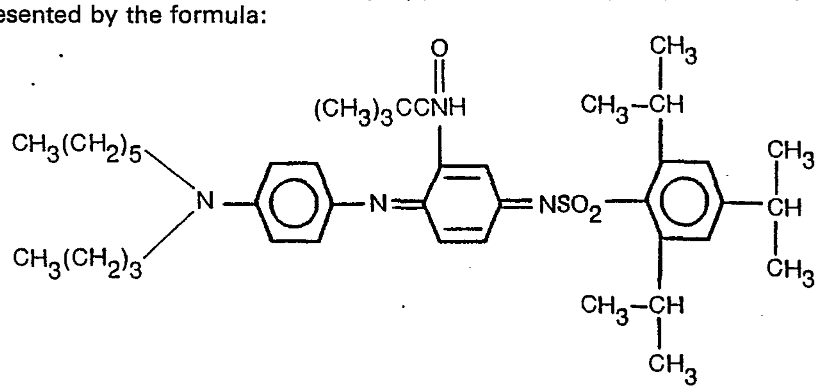

N-(4-hexyloxyphenyl)-N′-(2,4,6-triisopropylbenzenesulfonyl)-*p*-benzoquinonediimine represented by the formula:

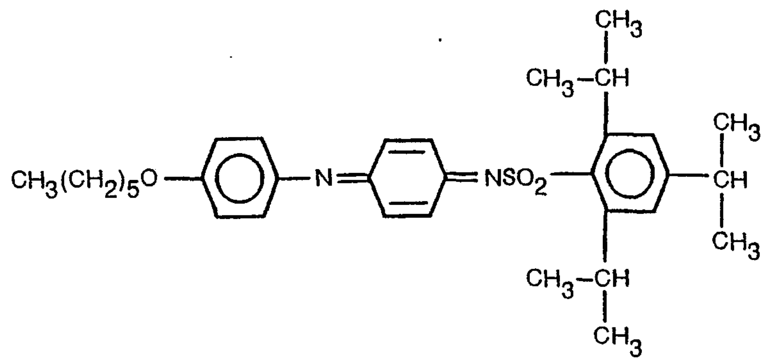

N-[4-N-ethyl-N-(ρ-methanesulfonamidoethyl)amino]-N′-(2,4,6-triisopropylbenzenesulfonyl)-2,5-dipivalamido-*p*-benzoquinonediimine represented by the formula:

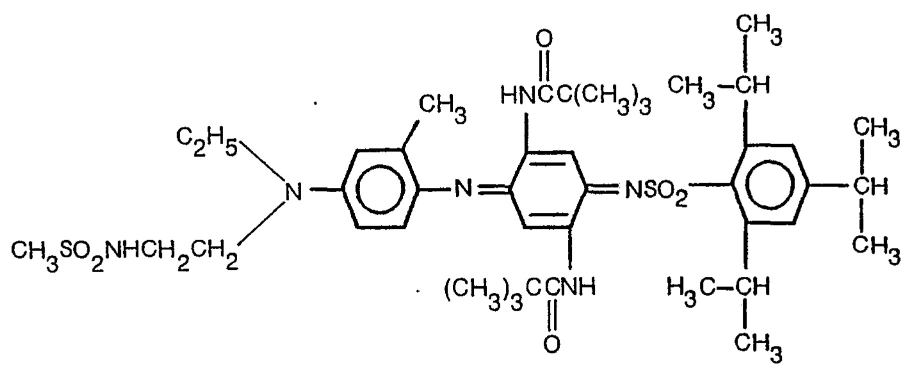

N-(4-n-hexyloxyphenyl)-N′-(2,4,6-triisopropylbenzenesulfonyl)-2,5-dipivalamido-*p*-benzoquinonediimine represented by the formula:

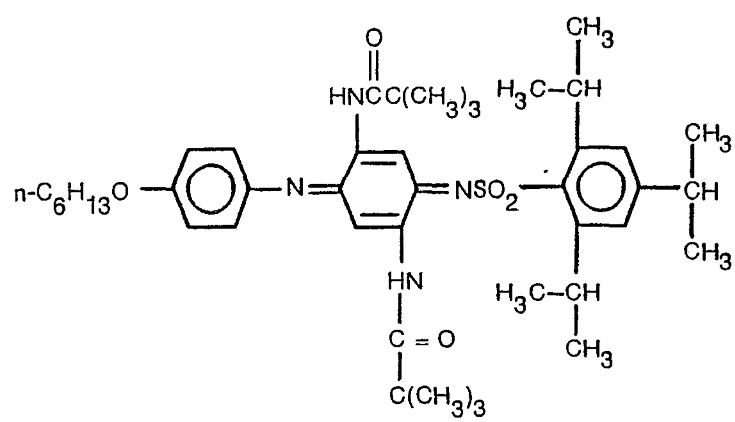

N-(4-methyl-3-methanesulfonamidophenyl)-N′-(2,4,6-triisopropylbenzenesulfonyl)-2-palmitamido-*p*-benzoquinonediimine represented by the formula:

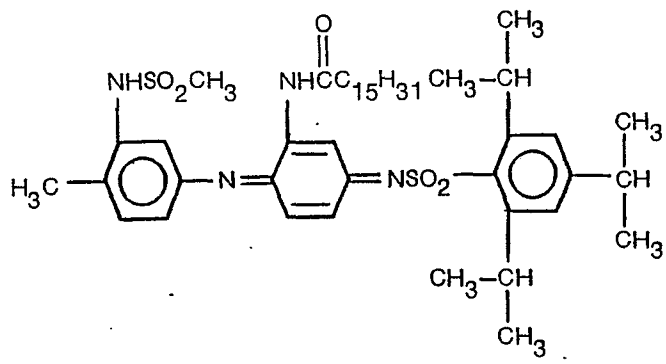

N-(4-methoxy-3-methanesulfonamidophenyl)-N'-(2,4,6-triisopropylbenzenesulfonyl)-2-pivalamido-*p*-benzenequinone-diimine represented by the formula:

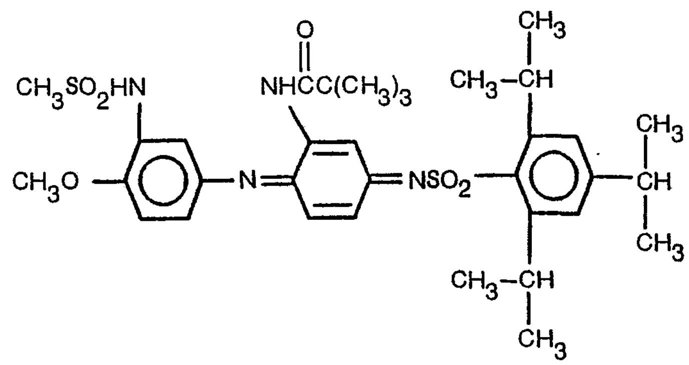

The following examples are included for a further understanding of the invention.

Example 1

Preparation of 4-dihexylamino-4'-benzenesulfonamidodiphenylamine

A sample of N,N-dihexyl-*p*-phenylenediamine-di-*p*-toluenesulfonic acid salt (30.8 grams, 0.05 mole) in dimethylformamide (DMF) (150 ml) was stirred under a nitrogen atmosphere. Successive additions of sodium bicarbonate (16.8 grams) and *p*-fluoronitrobenzene (7.05 grams, 0.05 moles) were made to the mixture. After stirring the mixture overnight at 90 to 100°C, the reaction mixture was poured into ice water and extracted with ethyl acetate. The extract was washed with water, dried and freed of solvent. The filtrate residue was chromatographed from Woelm's silica gel using benzene as eluent to provide 4-dihexylamino-4'-nitrodiphenylamine as a red oil (12.4 grams). This intermediate was characterized by nuclear magnetic resonance.

This nitro intermediate was reduced to the corresponding amine as described in the following example and converted to the crude benzenesulfonamidodiphenylamine (17 grams, dark grey oil). This was purified by chromatography from Woelm's silica gel using chloroform as eluent. The filtrate residue was recrystallized from a mixture of methanol and hexane to provide tan leaflets (4.7 grams) comprising 4-dihexylamino-4'-benzenesulfonamidodiphenylamine having a melting point of 108 to 112°C. The desired product was identified by conventional analytical techniques.

Example 2

Preparation of 4-diethylamino-4'-benzenesulfonamidodiphenylamine

A solution of N,N-diethyl-*p*-phenylenediamine (16.4 grams, 0.10 mole) and *p*-fluoronitrobenzene (14.1 grams, 0.10 mole) in 200 ml of DMF was stirred overnight with sodium bicarbonate (16.8 grams, 0.20 mole) at 85 to 90°C under a nitrogen atmosphere. This reaction mixture was poured into ice water and extracted with ethyl acetate. Evaporation of the solvent provided 4-diethylamino-4'-nitrodiphenylamine. This product was recrystallized from methanol to provide 6.2 grams of red-violet leaflets having a melting point of 139 to 141°C. This product was identified by conventional analytical techniques.

The nitro intermediate (5.7 grams) in tetrahydrofuran (100 ml) was hydrogenated over palladium-charcoal catalyst (1.2 grams) in a Parr apparatus at 275 kilopascals (kPa). The corresponding amine was converted to its benzenesulfonimidodiphenylamine by means of benzenesulfonyl chloride. Recrystallization from methanol yielded a gray solid (3.58 grams) having a melting point of 145 to 146°C. This compound was characterized by nuclear magnetic resonance and other conventional analytical techniques.

Example 3

Preparation of 4-methoxy-4'-benzenesulfonamidodiphenylamine

A solution of *p*-anisidine (49.2 grams, 0.4 mole) and *p*-fluoronitrobenzene (28.2 grams, 0.2 mole) in dimethylsulfoxide was stirred for 24 hours on a steam bath. The red reaction mixture was poured into water (500 ml) and extracted with ethyl acetate. The extract was washed with water and then dried over anhydrous magnesium sulfate. The residue was slurried in ligroin and filtered to provide a brick-red solid. This was dissolved in ethyl acetate, warmed with charcoal, and the filtrate filtered through a filtering composition. The filtrate was evaporated and the residue recrystallized from ethyl acetate to provide 4-methoxy-4'-nitrodiphenylamine (28 grams) having a melting point of 149 to 151°C as a bright-orange needles. This intermediate was identified by conventional chemical analytical techniques.

A solution of the above nitro compound intermediate (24.4 grams, 0.1 mole) in ethyl acetate (250 ml) was converted to the corresponding amine by hydrogenation over 5 percent palladium-charcoal catalyst (1.5 grams) at 415 kPa. After filtration, the solvent was removed under vacuum and the light-purple solid dissolved in pyridine (150 ml). This was reacted with benzenesulfonyl chloride (17.7 grams, 0.1 mole) by stirring for 3 hours under a nitrogen atmosphere at 25°C. After dilution with water (500 ml), the organic

phase was washed with water and then freed of solvent and dried over magnesium sulfate. The red oil resulting as dissolved in chloroform and filtered through 75 grams of a filtering composition (Florisil). The filtrate residue was recrystallized three times from chloroform-ligroin to provide a white powder (12 grams) having a melting point of 133 to 135°C. This desired product was identified by conventional chemical analytical techniques.

Example 4

Preparation of 4-dihexylamino-4′-(2,4,6-triisopropylbenzenesulfonamido)diphenylamine

A sample (5.24 grams, 0.013 mole) of 4-dihexylamino-4′-nitrodiphenylamine (prepared as in Example 1) was reduced with hydrogen in a Parr apparatus (275 kPa) in dry tetrahydrofuran (100 ml) containing palladium-charcoal catalyst (1.2 grams). The filtrate was freed of solvent under vacuum and the resulting 4′-amino derivative dissolved in dry pyridine (25 ml) and reacted at 5°C with 2,4,6-triisopropylbenzenesulfonyl chloride (4.5 grams, 0.015 mole). After stirring for three hours at 25°C, the reaction mixture was poured into chloroform (200 ml) and ice water. The organic phase was washed five times with water, dried, concentrated to about 50 ml and chromatographed on Woelm's silica gel. The chloroform eluate was freed of solvent and the filtrate residue recrystallized from methanol. The crystalline product was washed with a methanol and water composition (10:1 parts by volume), dried and characterized by nuclear magnetic resonance and elemental analysis. The desired product (4.85 grams) had a melting point of 127 to 129°C.

Example 5

Preparation of 4-diethylamino-4′-(2,4,6-triisopropylbenzenesulfonamido)diphenylamine

A solution of N,N-diethyl-*p*-phenylenediamine (16.4 grams, 0.10 mole) and *p*-fluoronitrobenzene (14.1 grams, 0.10 mole) in 200 ml of dimethylformamide was stirred overnight with sodium bicarbonate (16.8 grams, 0.20 mole) at 85 to 90°C under a nitrogen atmosphere. This reaction mixture was poured into ice water and extracted with ethyl acetate. Evaporation of the solvent provided 4-diethylamino-4′-nitro-diphenylamine which was recrystallized from methanol to provide red-violet leaflets (6.2 grams) having a melting point of 139 to 141°C. The desired product was also identified by elemental analysis.

A sample of the intermediate produce was reduced to provide 0.015 mole of 4-diethylamino-4′-amino-diphenylamine which was then dissolved in dry pyridine (25 ml) at 5°C under a nitrogen atmosphere and reacted with 2,4,6-triisopropylbenzenesulfonyl chloride (4.52 grams, 0.015 mole). The corresponding triisopropylbenzenesulfonamide was purified by chromatography from Woelm's silica gel, using chloroform as an eluent. The produce was recrystallized from aqueous methanol. A grayish-tan solid (2.9 grams) was produced having a melting point of 152 to 154°C. The desired product was also identified by elemental analysis.

Example 6

Preparation of 4-hexyloxy-3′-methyl-4′-(2,4,6-triisopropylbenzenesulfonamido)diphenylamine

A solution of *p*-hexyloxyaniline (15 grams, 0.08 mole) and 5-fluoro-2-nitrotoluene (6.4 grams, 0.04 mole) in dimethylsulfoxide (150 ml) was heated overnight at 90°C. The reaction mixture was poured into ice water and extracted with diethyl ether. The dried extract was freed of solvent and the filtrate residue chromatographed on Woelm's silica gel, using a mixture of benzene and hexane (1:1 parts by volume) as eluent. The column held fractions were then eluted with ethyl acetate and rechromatographed to yield 2.75 grams (melting point 74 to 75°C) of 4-hexyloxy-3′-methyl-4′-nitrodiphenylamine which was characterized by its nuclear magnetic resonance spectrum. This was reduced to the corresponding 4′-amino derivative which was converted to the 2,4,6-triisopropylbenzenesulfonamide, as described above. This was then recrystallized from isopropanol-acetone to provide a tan solid (3.1 grams) having a melting point of 151 to 152°C. The desired product was characterized by nuclear magnetic resonance. It was also identified by elemental analysis.

Example 7

Preparation of 4-dihexylamino-2′-[delta-2,4-di-tertiary-amylphenoxy)butylsulfamyl]-4′-benzenesulfonamidodiphenylamine

A solution of 2,4-di-tertiary-amylphenoxybutylamine (3.05 grams, 0.01 mole) in dry dioxane (25 ml) was added to a solution of 2-chloro-5-nitrobenzenesulfonyl chloride in dry dioxane and the mixture stirring for three hours at 100°C. This was poured into water (200 ml), stirred for one hour, and the pale yellow solids recrystallized from methanol. The resulting nitro intermediate (2.6 grams) had a melting point of 154 to 156°C. The desired intermediate was identified by elemental analysis.

This intermediate was condensed with N,N-dihexyl-*p*-phenylenediamine paratoluenesulfonate, as described, and the chromatographed was characterized by elemental analysis. The product was an orange oil (2.45 grams).

This latter product was reduced to the corresponding amine and converted, as described above, to the benzenesulfonamide. This product was an amber glass (1.4 grams) which crystallized on standing. The desired product was identified by elemental analysis.

Example 8

Preparation of 4-[N-ethyl-N-(ρ-methanesulfonamidoethyl)amino]-2-methyl-2′-octanamido-4′-(2,4,6-triisopropylbenzenesulfonamido)diphenylamine

The following preparation of a desired intermediate was carried out:

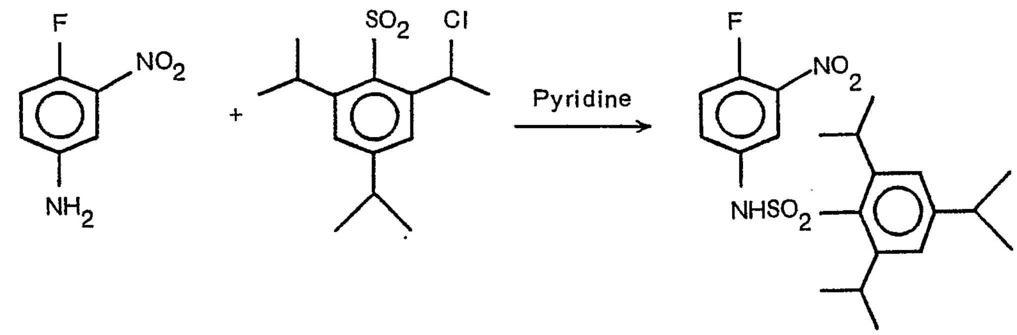


A solution of 4-fluoro-3-nitroaniline (15.6 grams, 0.1 mole) in pyridine (400 ml) was stirred at room temperature and 2,4,6-triisopropylbenzenesulfonyl chloride (30.2 grams, 0.1 mole) was added in bulk. The resulting solution was stoppered tightly and stirred at room temperature (about 20°C) overnight (about 18 hours). The reaction mixture was then poured over an ice hydrochloric acid (aqueous) mixture (500 grams of ice and 500 ml of concentrated aqueous HCl). An oily solid separated and was removed by filtration. Repeated recrystallization from methanol and water provided 30.2 grams of light golden crystals having a melting point of 151 to 152°C. The desired intermediate product was identified by elemental analysis.

The following reaction was then carried out:

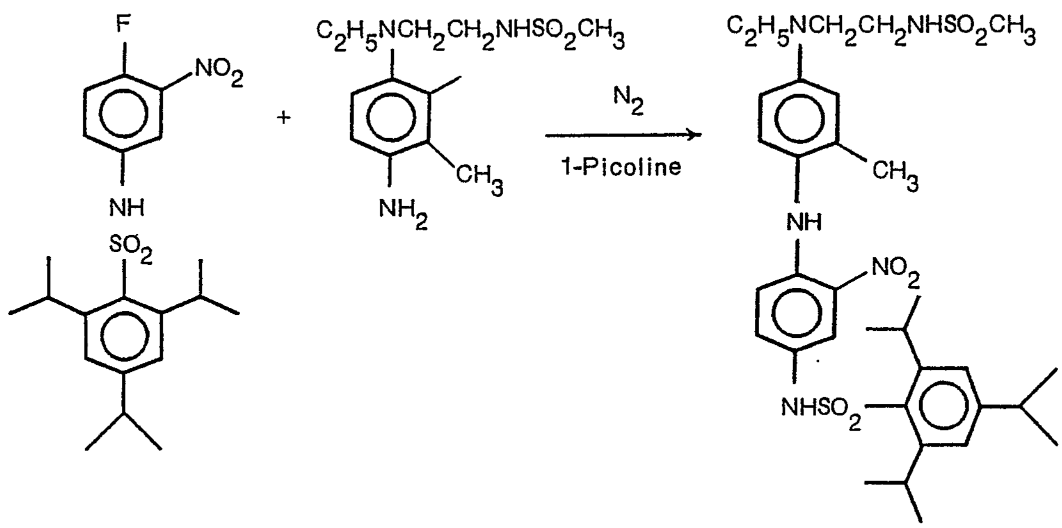


This reaction was carried out as follows:

42.2 grams (0.1 mole) of 2-fluoro-5-(2,4,6-triisopropylbenzenesulfonamido)nitrobenzene in 275 ml of 1-picoline was stirred at reflux under nitrogen for three days with 40.6 grams (0.15 mole) of 4-amino-3-methyl-N-ethyl-N-(ρ-methanesulfonamidoethyl) aniline (in the form of a free base). The reaction solution was allowed to cool to room temperture and was poured over an ice water mixture (1.5 liters). The mixture was allowed to stand until a red-brown oil separated. The aqueous layer was decanted from the oil. The oil was dissolved in $CH_2Cl_2$ (about 400 ml). The methylene chloride solution was then washed with vigorous agitation with 5 percent hydrochloric acid (50 ml concentrated HCl plus 380.5 ml of water) four times (500 ml), then with 5 percent $NaHCO_3$ (four times, 500 ml) and finally with 500 ml of water (four times). The methylene chloride layer was dried by means of sodium sulfate and then swirled with a filtering composition (Florisil) to remove a purple residue. Evaporation of the solvent provided a red oil which was taken up in about 150 ml of boiling methanol. The methanol solution was allowed to cool to room temperature overnight. A yellow-orange crystalline product (42.5 grams) having a melting point of 164 to 166°C was produced. Thin layer chromatography on silica gel-glass and recrystallization from ethyl acetate provided the desired pure product which was identified by elemental analysis.

The following reaction was then carried out:

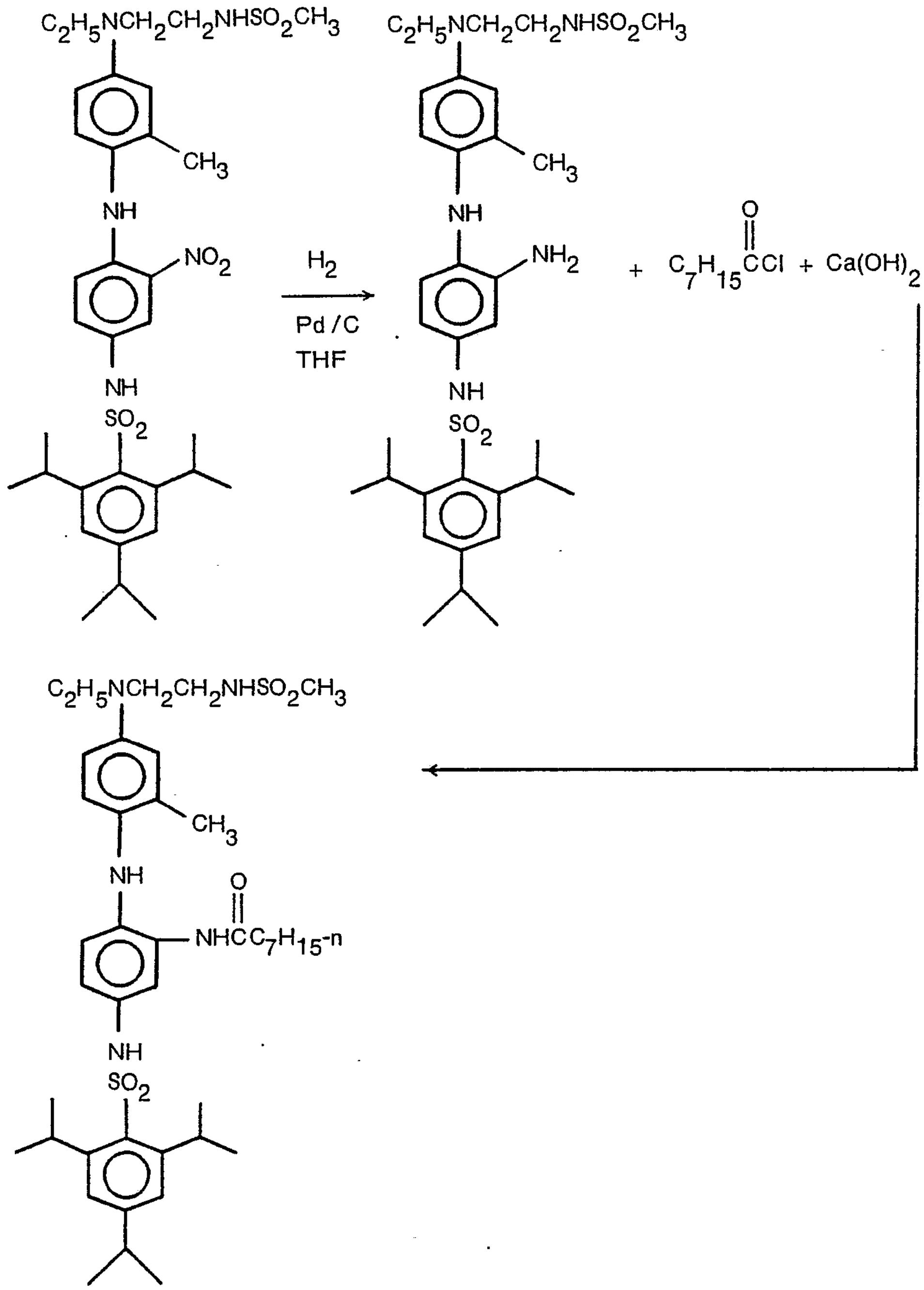


6.7 grams (0.01 mole) of the nitro compound in about 75 ml of tetrahydrofuran was reduced over 10 percent palladium on charcoal at 275 kPa in a hydrogen atmosphere until the hydrogen uptake ceased (within about 2.5 hours). The reaction mixture was blanketed with nitrogen and removed from the Parr apparatus. No attempt was made to remove the catalyst at this point. The calcium hydroxide (0.41 grams, 0.055 mole), used as an HCl scavenger, was added in bulk to the reaction mixture. Next, the octanoyl chloride (1.8 grams, 0.011 mole) was added in bulk to the reduction mixture. The resulting reaction mixture was stoppered tightly and allowed to be stirred at room temperature for 3 hours. No exothermic properties were observed. The catalyst and calcium salts were removed by filtration. The solvent was evaporated to yield a brown oil. The oil was taken up in boiling ether. The oil dissolved, and a precipitate began to form. Filtering provided a colorless solid with a strong octanoyl chloride odor. The solid was re-suspended in boiling ether (100 ml), then filtered and vacuum dried at room temperature to yield 6.0 grams of a very faintly yellow-tinted solid having a melting point of 98 to 100°C. Thin layer chromatography with silica gel on glass showed one component with a variety of solvents (ethyl acetate, methylene chloride, acetone and acetonitrile). The compound was further characterized by infrared analysis, nuclear magnetic resonance, mass spectrography and elemental analysis. Oxidation with aqueous potassium ferricyanide yielded a green dye.

Example 9

Preparation of 4-hexyloxy-2'-pivalamido-4'-(2,4,6-triisopropylbenzenesulfonamido)diphenylamine

42.2 grams (0.10 mole) of the fluoronitro compound identified in Example 8 as the product of the reaction of 4-fluoro-3-nitroaniline and 2,4,6-triisopropylbenzenesulfonyl chloride was stirred at reflux under nitrogen overnight (about 24 hours) with 21.2 grams (0.11 mole) of *p*-hexyloxyaniline in 100 ml of picoline. This reaction is illustrated as follows:

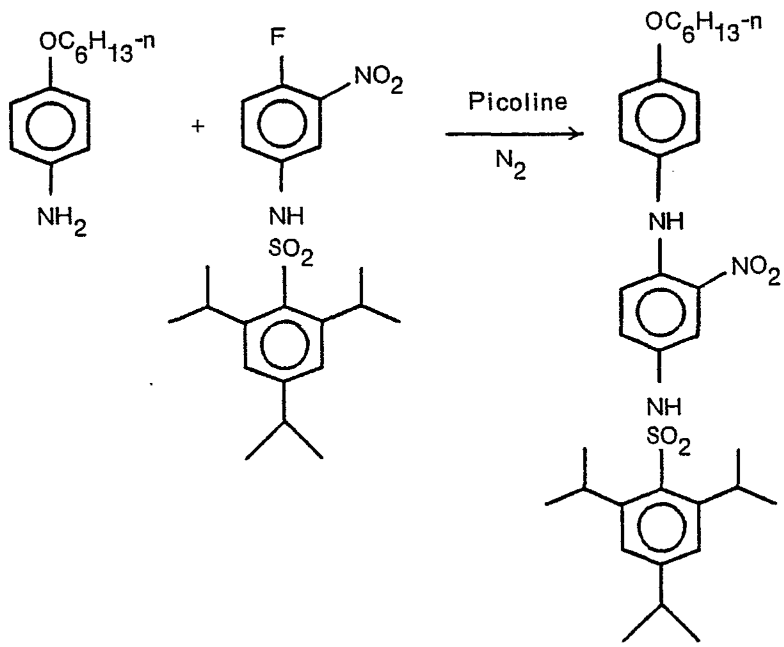


The reaction mixture was then poured over an ice and water mixture (about 1.5 liters). An oil separated, but failed to crystallize. The water was decanted and the oil was taken up in methylene chloride (150 ml). The methylene chloride solution was washed well with water, dried by means of sodium sulfate and evaporated to a reddish-brown oil. The oil was taken up in boiling 95 percent ethanol. Upon cooling, a red crystalline solid separated. Thin layer chromatography with silica gel on glass and then purification with ethyl acetate-ligroin (1:4 parts by volume) showed some slight impurity. Recrystallization a second time from 95 percent ethanol provided a red crystalline solid with a strong odor of picoline. The solid was stirred in 250 ml of a mixture of 1:1 parts by volume of (a) 95 percent methanol and 5 percent ethanol, with (b) water, for 30 minutes, then filtered and air dried to yield the desired product (49.5 grams) having a melting point of 147 to 148°C. The desired product was also identified by elemental analysis. The following reaction was then carried out:

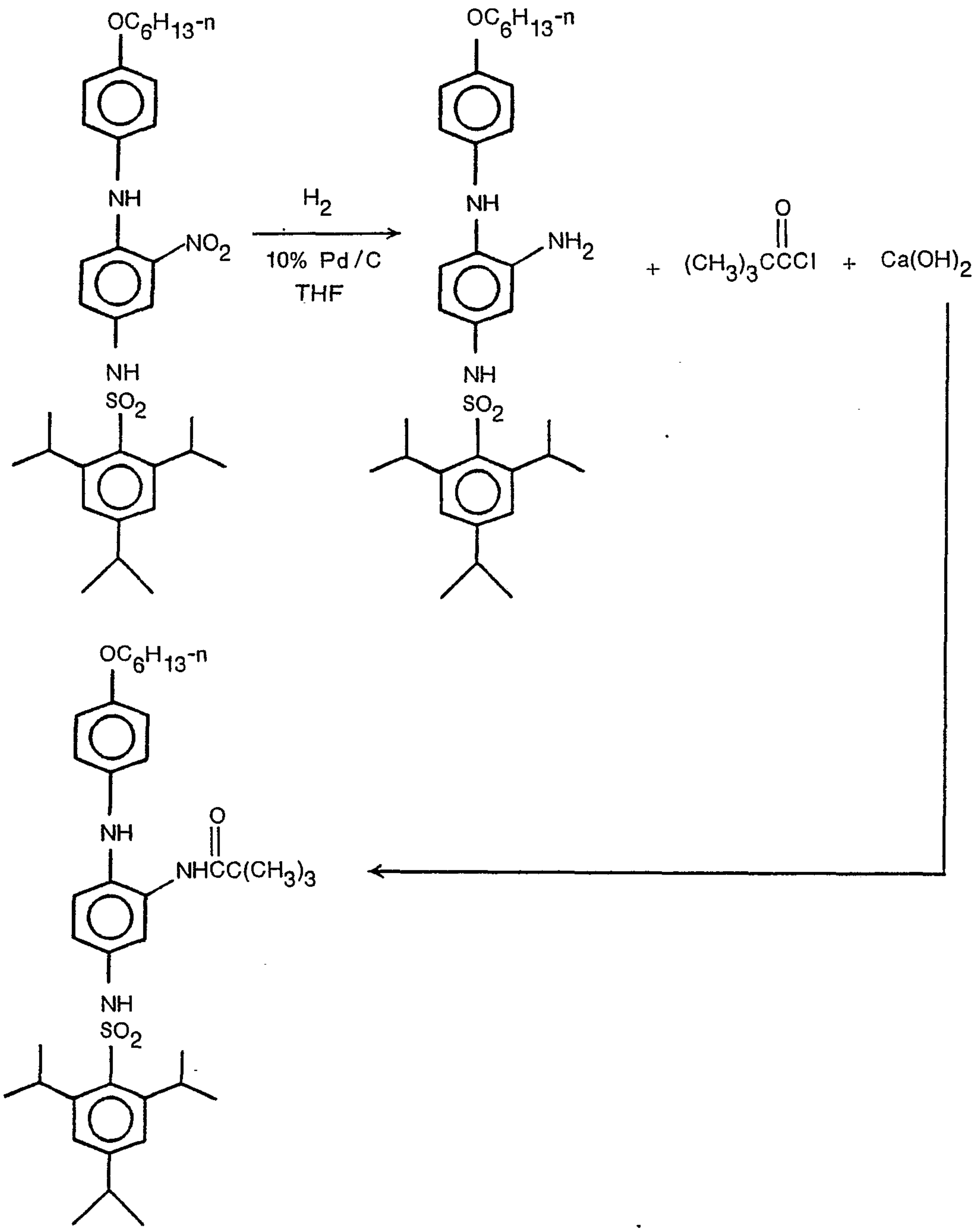


15.0 grams (0.025 mole) of the nitro compound was dissolved in 100 ml of tetrahydrofuran at room temperature and was reduced at 275 kPa hydrogen pressure under 10 percent palladium on charcoal on a Parr shaker until hydrogen uptake ceased (about two hours). The originally orange solution was colorless at this point. In previous preparations, the catalyst, was removed by filtration under nitrogen. This resulted in some discoloration as the amine is prone to oxidation. Therefore, calcium hydroxide (1.11 grams, 0.015 mole) was added directly to the reduction mixture, followed by bulk addition of pivaloyl chloride (3.63 grams, 0.03 mole). The mixture was stoppered tightly and stirred for one hour. Thin layer chromatography with silica gel/glass using ethyl acetate:ligroin (1.4 parts by volume) showed no unreacted amine (both amine and product are oxidized by aqueous potassium ferricyanide to red dyes). The mixture was then filtered to remove the calcium chloride and catalyst. The solvent was removed at reduced pressure to yield a light rose-colored oil. The oil was taken up in 100 ml of hot ligroin. Upon cooling, a few crystals formed but the majority of product boiled out. The flask was placed on a vacuum evaporator and solvent evaporated. After only a few milliliters of solvent were removed, the product solidifed. The colorless solid was removed from the red mother liquor by filtration and was washed with a small quantity of ligroin. 15.0 grams of colorless air dried solid having a melting point of 122 to 124°C were obtained. The desired product was identified by elemental analysis.

Example 10

Preparation of 4-diethylamino-2-methyl-2′-methoxy-5′-pivalamido-4′-(2,4,6-triisopropylbenzenesulfonamido)diphenylamine

The following reaction was carried out:

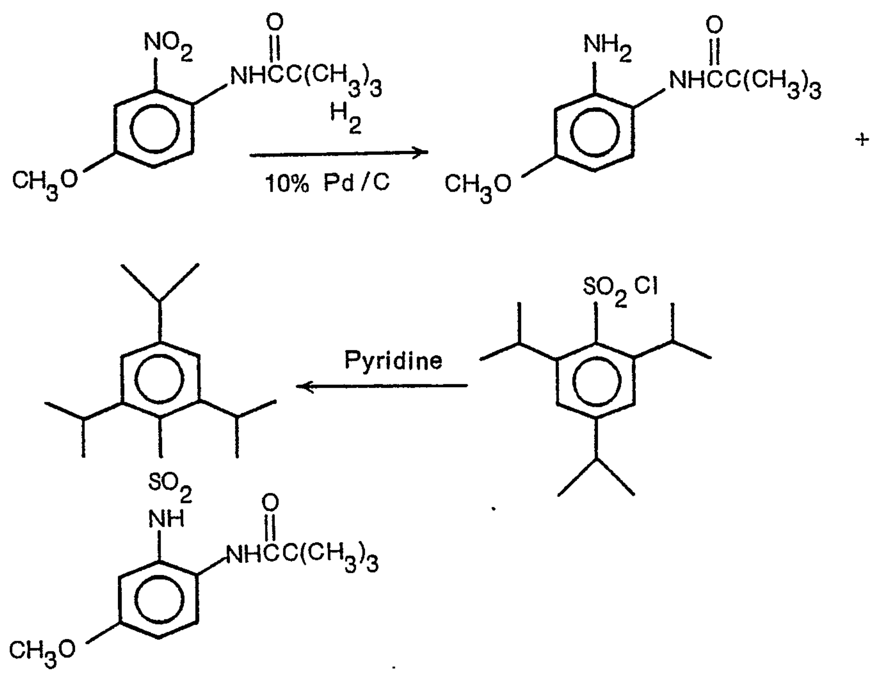


13.3 grams (0.05 mole) of the nitro compound in 150 ml of tetrahydrofuran was reduced at 275 kPa hydrogen pressure over 10 percent palladium on charcoal at room temperature (about 20°C) until hydrogen uptake ceased (1.5 hours). The catalyst was removed by filtration, and the solvent by evaporation, to yield a colorless crystalline solid which was the desired amine, and which was used directly. The colorless solid was dissolved in 250 ml of pyridine, and the resulting solution cooled in an ice bath. Next, triisopropylbenzenesulfonyl chloride (15.1 grams, 0.05 mole) was added portion-wise to yield a bright-yellow solution which was allowed to warm to room temperature and was stirred overnight (about 18 hours). The mixture was poured into a mixture of ice (400 grams) and concentrated hydrogen chloride (300 ml) to produce a colorless solid. Filtration and recrystallization from acetonitrile produced 18.6 grams of colorless crystalline solid having a melting point of 177 to 178°C. This desired intermediate was identified by elemental analysis.

Then the following reaction was carried out:

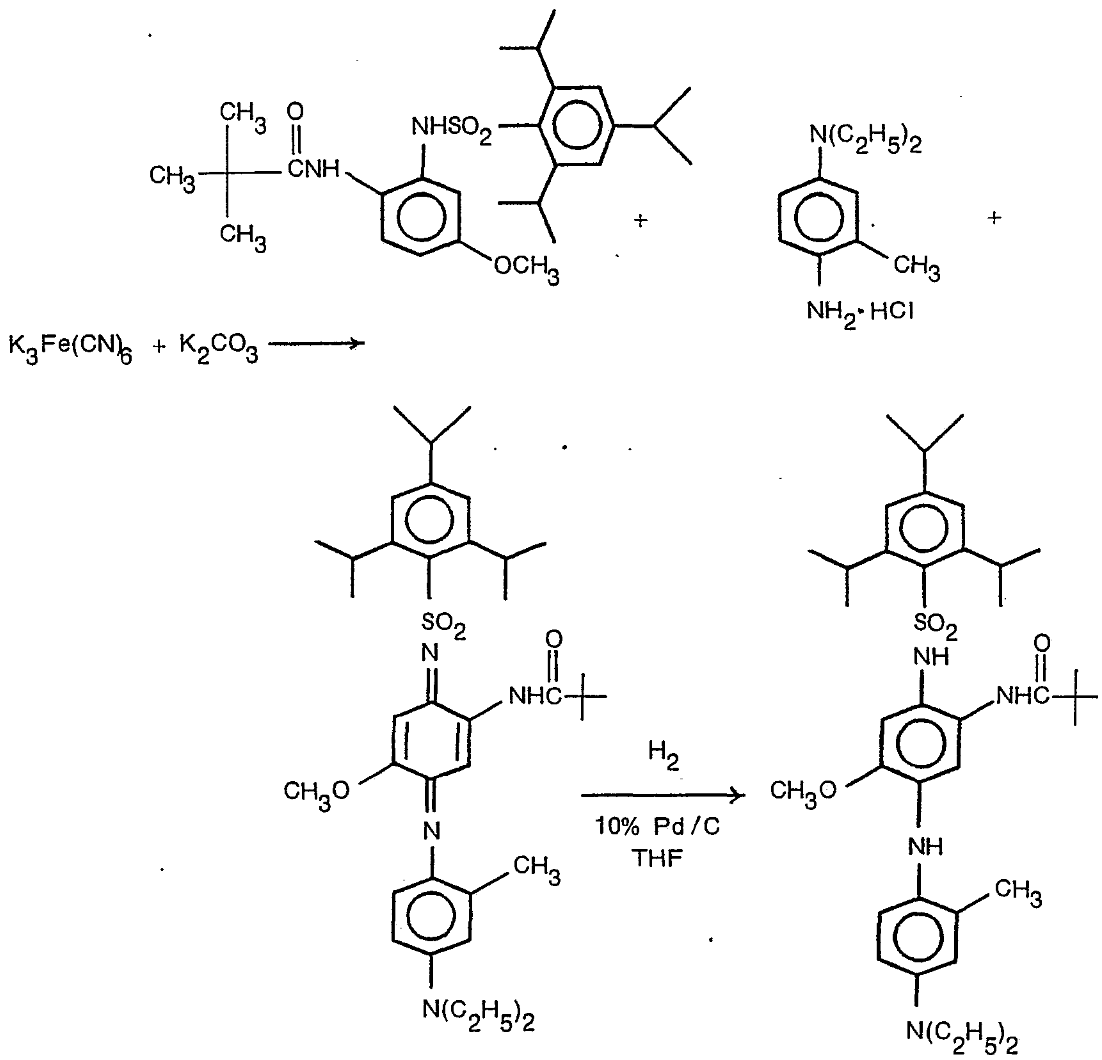


The group 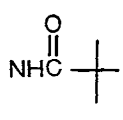 herein means 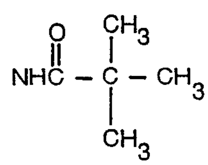.

The following solutions were prepared:

*Solution A:* 10.0 grams (0.02 mole) of the starting intermediate in 150 ml of tetrahydrofuran;

*Solution B:* 4.2 grams (0.02 mole) of N,N-diethyl-3-methyl-*p*-phenylenediamine hydrochloride in 60 ml of water;

*Solution C:* 26.3 grams (0.08 mole) of potassium ferricyanide in 125 ml of water; and,

*Solution D:* 11.0 grams (0.08 mole) of potassium carbonate in 25 ml of water.

Addition of Solution A and then Solution B to Solution D produced no color change. Next, Solution C was added to the previous mixture dropwise in 15 minutes. A green dye formed. The mixture was stirred for two hours following the addition; then diluted to one liter with water. The dye was extracted into methylene chloride, washed well with water, dried by means of sodium sulfate and evaporated under reduced pressure to yield the crude green dye as a thick oil (approximately 15 grams). The crude dye was dissolved in tetrahydrofuran and reduced over 10 percent palladium on charcoal at 275 kPa hydrogen pressure, at room temperature, until hydrogen uptake ceased (30 minutes). Filtration provided a brown-magenta solution. Solvent was evaporated and replaced with methylene chloride (about 300 ml). The magenta-brown solution was slurried with a filtering composition (Florisil) (10 grams) and filtered to yield a pale green solution. The solvent was evaporated to yield a crude pale green solid. Recrystallization from methanol-water failed to remove the trace of dye present. The sample was then repeatedly recrystallized

from ether-hexane until constant melting point was reached. The melting point of the desired product was 201 to 202°C. The desired product was identified by elemental analysis.

Example 11

Preparation of 4-[N-ethyl-N-(β-methanesulfonamidoethyl)-amino]-2-methyl-2′,5′-dipivalamido-4′-(2,4,6-triisopropylbenzenesulfonamido)diphenylamine

The following reaction was carried out:

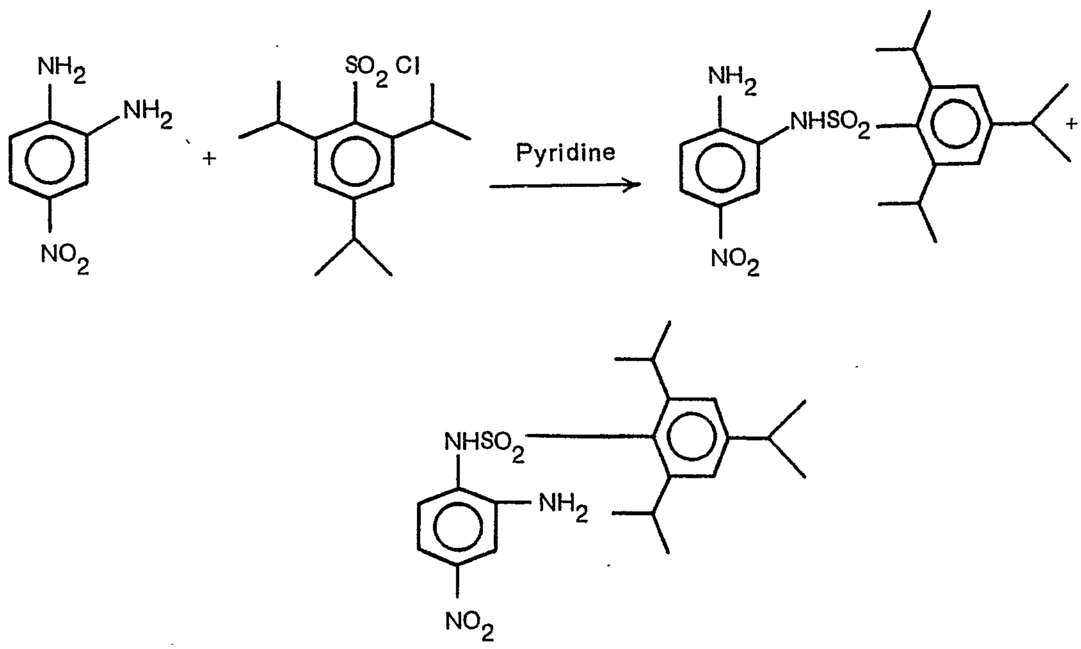


15.3 grams (0.1 mole) of the 4-nitro-*o*-phenylenediamine was dissolved in 200 ml of pyridine and the solution cooled in an ice bath. After one hour, a solution of 31.2 grams (0.1 mole) of 2,4,6-triisopropylbenzenesulfonyl chloride in 100 ml of tetrahydrofuran was added to the amine solution. The resulting mixture was stirred overnight at room temperature and was next poured over ice (400 grams) plus 300 ml of glacial acetic acid. An oil separated and solidified upon standing. The crude solid was removed by filtration and recrystallized twice from methanol-water to yield a yellow crystalline solid (27.6 grams) having a melting point of 187 to 191°C. Thin layer chromatography on silica gel (hexane:ethyl acetate; 3:2 by volume) indicated a major and minor component mixture, as indicated by the structures above. The desired intermediate was identified by elemental analysis.

The following reaction was then carried out:

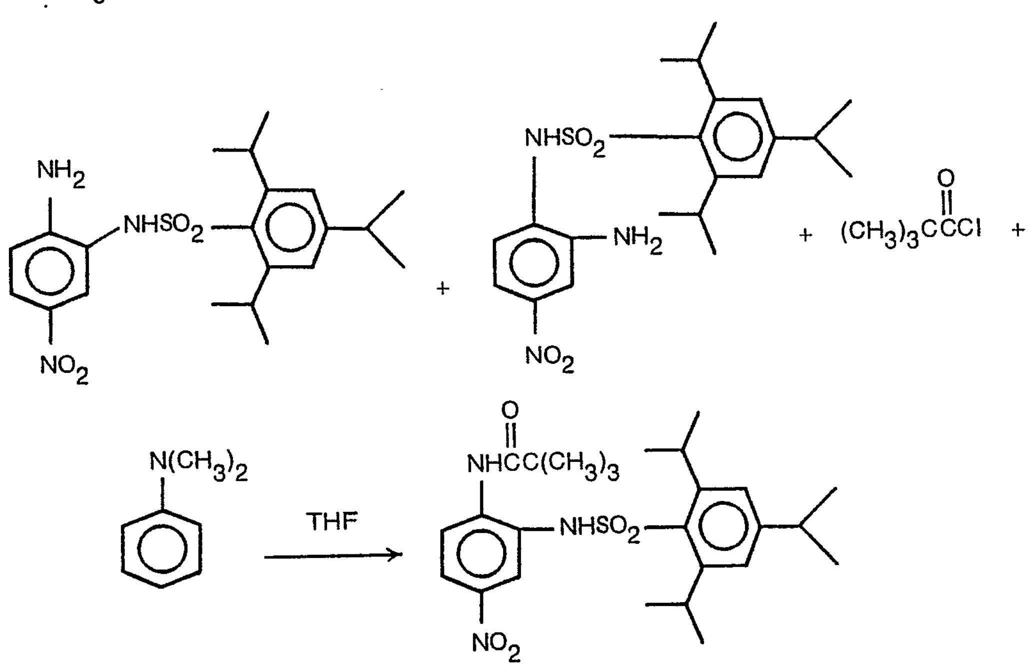

21.0 grams (0.05 mole) of the crude amine was dissolved in 250 ml of tetrahydrofuran and 6.6 grams (0.05 mole) of the acid scavenger, N,N-dimethylaniline, was added in bulk. To this solution was added, dropwise in 15 minutes, 6.6 grams (0.05 mole) of the pivaloyl chloride. After stirring at room temperature overnight (at about 20°C), thin layer chromatography indicated an incomplete reaction. Thus, an additional 5 millimoles of acid chloride and base were added, and the mixture stirred overnight again. The mixture was diluted with methanol (100 ml), then quenched in one liter of water. An oil separated and solidified. The solid obtained was recrystallized from methanol-water to provide 24.6 grams of solid having a melting point of 160 to 162°C. This material contained a small amount (less than 2 percent) of the following isomeric compound:

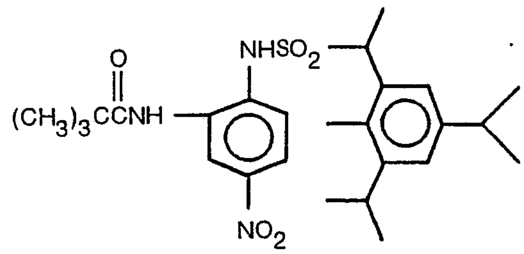

The desired product was identified by elemental analysis.

The following reaction was then carried out:

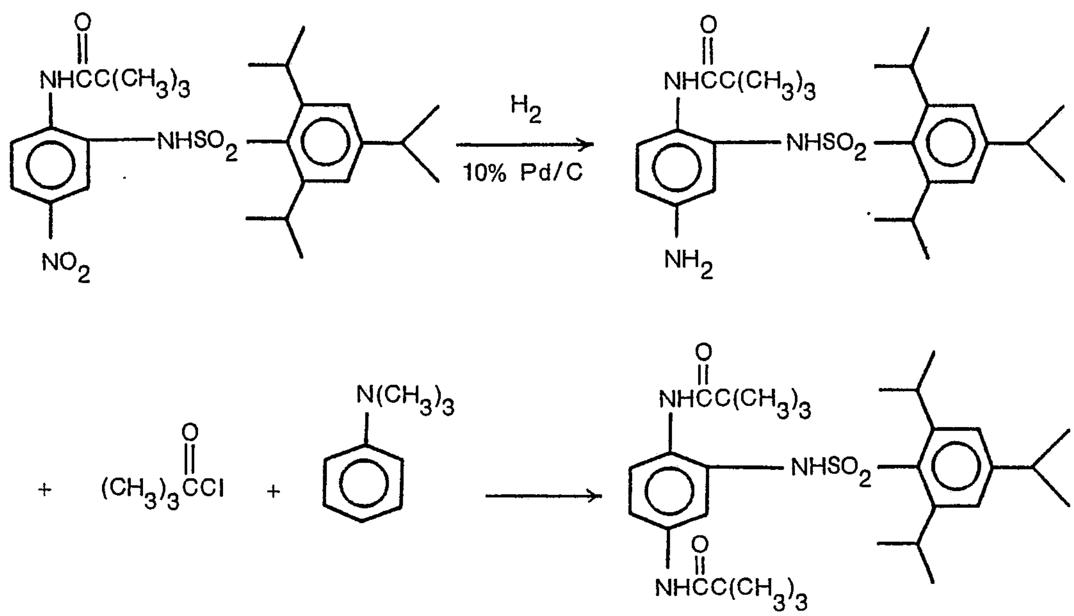


10.1 grams (0.02 mole) of the nitro compound were reduced at room temperature in 125 ml of tetrahydrofuran over 10 percent palladium on charcoal at 275 kPa hydrogen pressure until hydrogen uptake ceased (1.5 hours). The catalyst was removed by filtration. 2.5 grams (0.021 mole) of the acid scavenger, N,N-dimethylaniline, was added in bulk; followed by bulk addition of 2.5 grams (0.021 mole) of pivaloyl chloride. The mixture was stopped and stirred overnight at room temperature. Solvent was then evaporated to yield an amber oil. The oil was crystallized from ethanol-water to yield 10.2 grams of colorless solid having a melting point of 196°C. This desired intermediate was identified by elemental analysis.

The structure of the intermediate was confirmed by making the same compound by an alternate synthetic route:

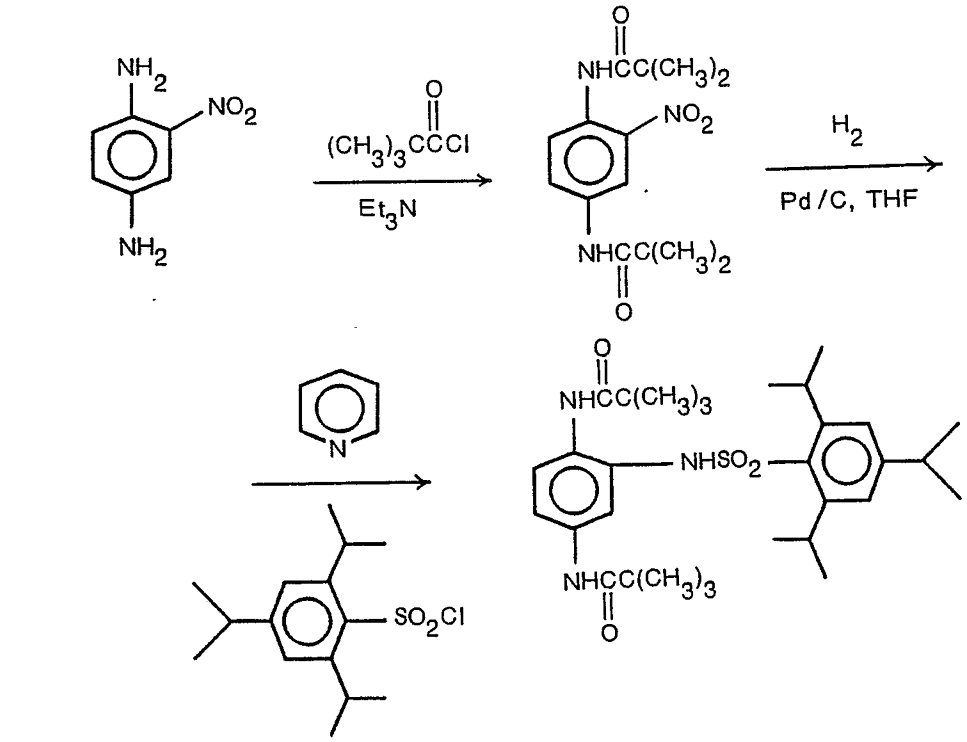


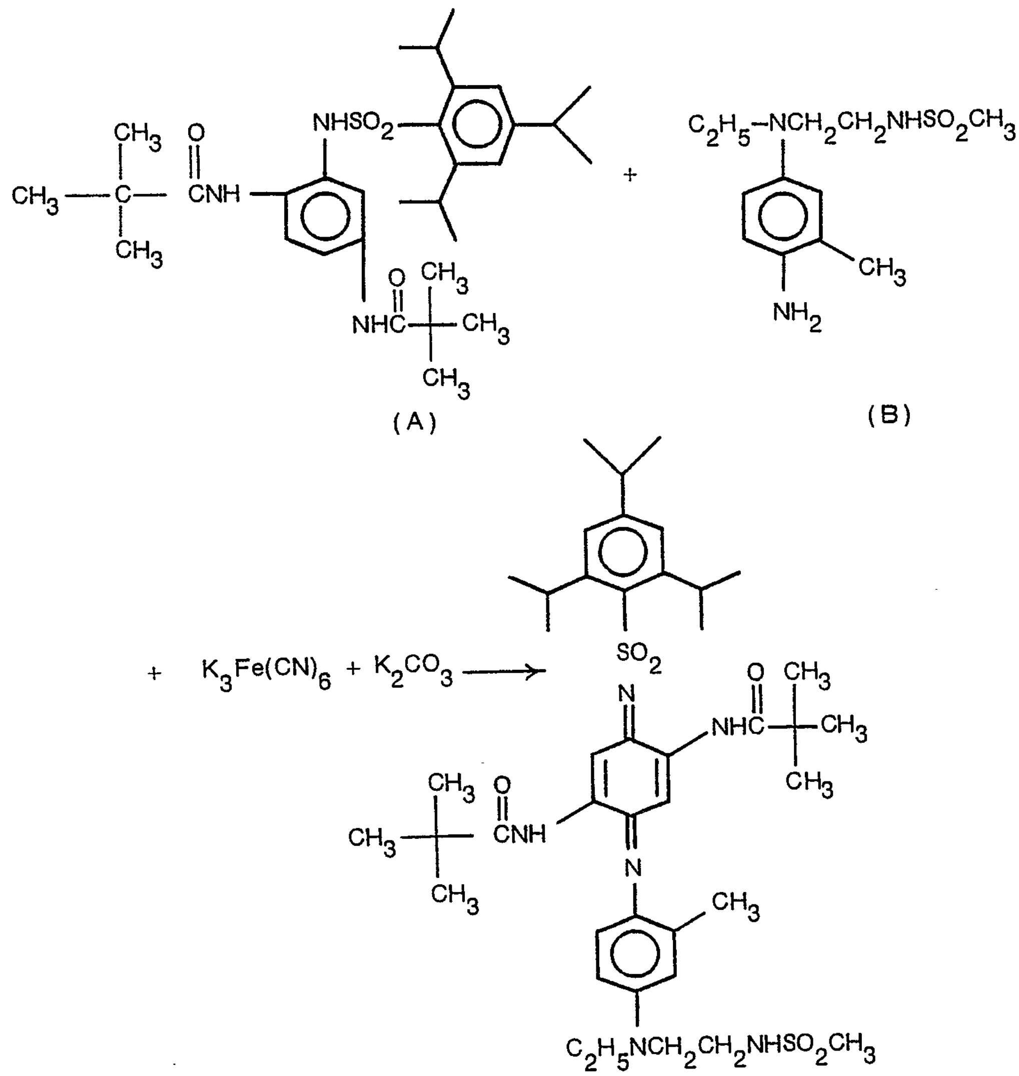


(A)

(B)

10.5 grams (0.02 mole) of the coupler (A) and 5.4 grams (0.02 mole) of the reducing agent (B) were dissolved in 200 ml of tetrahydrofuran. With rapid stirring, the aqueous potassium carbonate solution (11.0 grams, 0.08 mole in 50 ml of water) was added to the tetrahydrofuran solution of (A) and (B). Finally, the aqueous potassium ferricyanide solution (26.3 grams, 0.08 mole in 150 ml of water) was added dropwise to the above solution. A green dye began to form during the addition. Following the addition, the reaction mixture was allowed to be stirred for 45 minutes and then was quenched in one liter of water. The dye was extracted into methylene chloride, washed well with water, and dried by means of sodium sulfate. It was then evaporated to yield a green oil. The oil was chromatographed in Woelm's silica gel with an ethyl acetate-hexane (8:2 parts by volume) eluent to yield 12.0 grams of green dye as a green glass (maximum absorption in butyl acetate of 672 nm). The glass was used directly without further purification.

The following reaction was carried out:

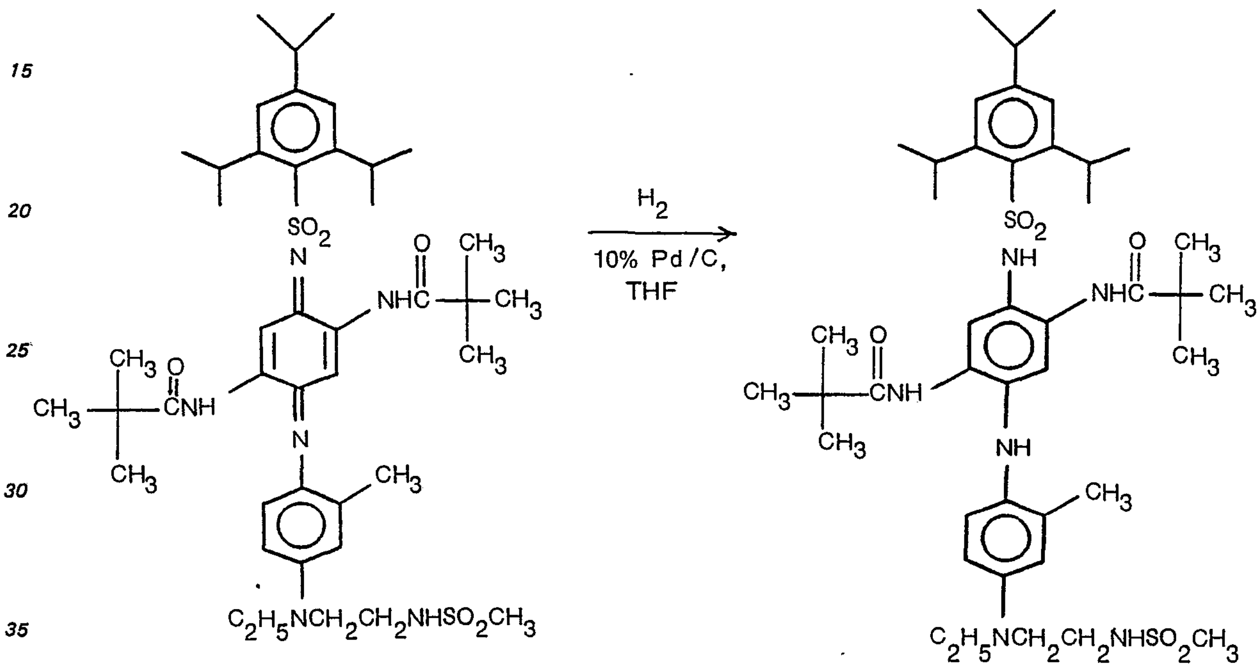


The glass obtained above was dissolved in tetrahydrofuran and reduced over 10 percent palladium on charcoal at room temperature (about 20°C) and 275 kPa hydrogen pressure until hydrogen uptake ceased (about 5 minutes). The catalyst was removed by filtration and the solvent was evaporated at reduced pressure to yield a light blue oil. The oil was recrystallized from ether-hexane (2.5:1 parts by volume) to yield 8 grams of colorless solid having a melting point of 166 to 168°C. The desired product was identified by elemental analysis.

Example 12

Preparation of 3-Methanesulfonamido-2′-octanamido-4′-(2,4,6-triisopropylbenzenesulfonamido)diphenylamine

The following reaction was carried out:

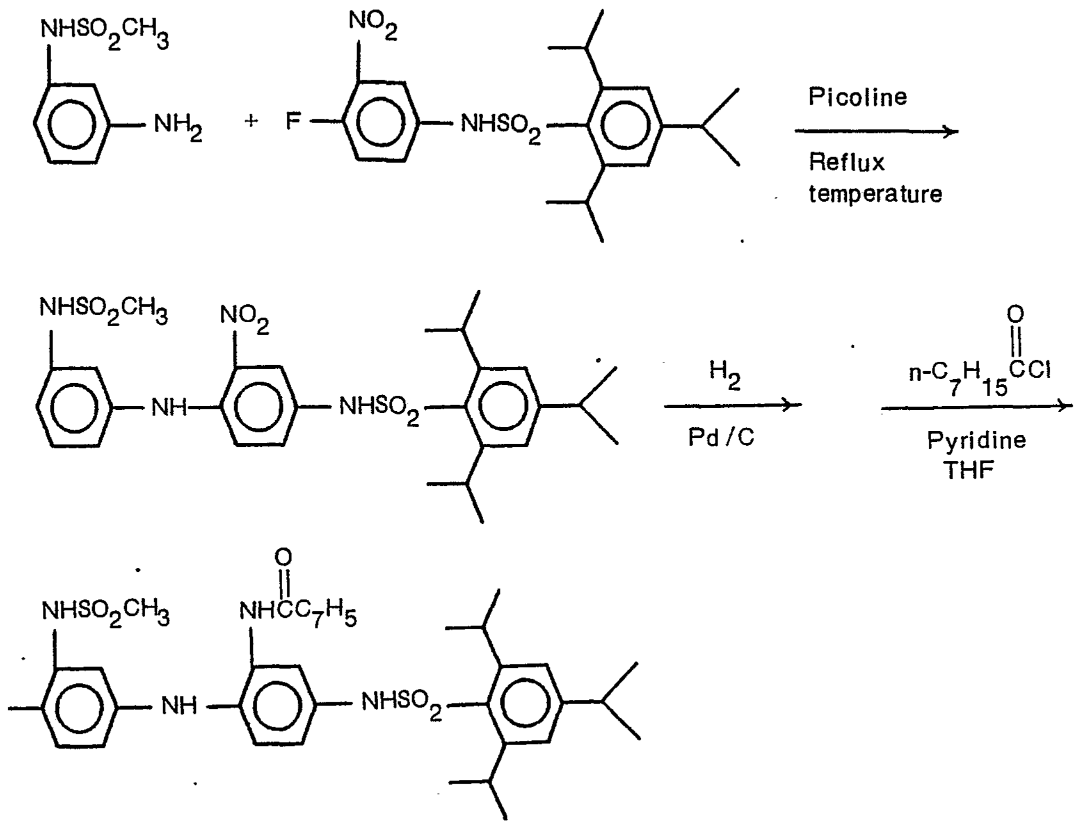


A mixture of meta-methanesulfonamidoaniline (1.86 grams, 0.01 mole) and 2-fluoro-5-(2,4,6-triisopropylbenzenesulfonamido)nitrobenzene (4.29 grams, 0.01 mole) in 25 ml of α-picoline was refluxed for 29 hours. This mixture was poured into a mixture of 100 grams of ice and 100 ml of 1N hydrochloric acid, and the separated oil extracted with 100 ml of ethyl acetate. The extract was washed with water, dried by means of anhydrous sodium sulfate, and freed of solvent. The resulting oil was chromatographed on Woelm's silica gel using methylene chloride as the eluent. The column held material was eluted with 1:1 parts by volume methylene chloride-ethyl acetate, freed of solvent, and characterized as 3-methanesulfonamido-2′-nitro-4′-(2,4,6-triisopropylbenzenesulfonamido)diphenylamine. This compound was identified by nuclear magnetic resonance. 2.9 grams of the oily product were dissolved in 150 ml of 1:1 methanol-tetrahydrofuran and reduced with hydrogen over a palladium-charcoal catalyst by means of a Parr apparatus. After removal of catalyst and solvent, the solid product was characterized by nuclear magnetic resonance as 3-methanesulfonamido-2′-amino-4′-(2,4,6-triisopropylbenzene-sulfonamido)diphenylamine. 1.5 grams (0.003 mole) of this compound were then dissolved in 20 ml of dry pyridine and reacted at 5°C with 6.5 grams of octanoyl chloride in 20 ml of dry tetrahydrofuran. After 18 hours at 25°C, the reaction mixture was poured into ice and 20 ml of concentrated hydrochloric acid, and the separated oil extracted with methylene chloride. The extract was washed with 10 percent sodium bicarbonate in water, dried, and freed of solvent. The resulting oil was purified by pressure liquid chromatography to yield 1.3 grams of a glass that was recrystallized from ether-hexane to give white leaflets. The desired product was characterized by nuclear magnetic resonance and had a melting point of 146 to 148°C. A sample of this compound was oxidized in butyl acetate with potassium ferricyanide in pH 10 buffer, yielding a yellow dye possessing a maximum absorption of 429 nm.

Example 13

Preparation of N-benzenesulfonyl-N′-(4-diethylaminophenyl)-p-benzoquinonediimine cyan dye

A solution of 4-diethylamino-4′-(phenylsulfonamido)diphenylamine (2 grams, 0.005 mole) in 50 ml of ethyl acetate was stirred for 5 minutes with potassium carbonate (2.76 grams, 0.02 mole) in 50 ml of water. A solution of potassium ferricyanide (3.29 grams, 0.01 mole) in 30 ml of water was then added dropwise under a nitrogen atmosphere and stirring was continued to 15 minutes. The organic phase (cyan hue) was separated, washed with water, dried over anhydrous sodium sulfate, and then evaporated to dryness. Attempted recrystallization of the resulting crude dye residue from warm acetonitrile deposited a black

amorphous solid (1.65 grams), partially soluble in a mixture of dimethyl formamide and tetrahydrofuran with the disappearance of cyan hue. Spectral analysis and thin layer chromatographic analysis indicated the presence of considerable color-forming dye in the amorphous mixture, with an elemental analysis agreeing with the structure:

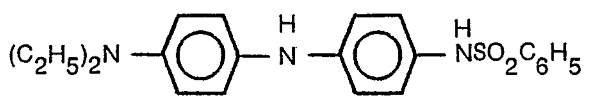

Subsequent treatment of the amorphous mixture in alkaline (1N potassium hydroxide) ethyl acetate with $K_3Fe(CN)_6$ produced a soluble cyan dye.

Analysis of this regenerated cyan dye by thin layer chromatography found it to be identical with the structure:

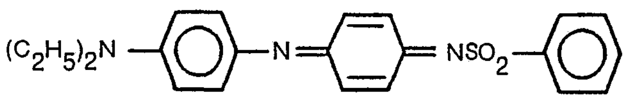

Oxidation of the parent para-sulfonamidodiphenylamine in a single phase, aqueous, alkaline environment by means of potassium ferricyanide yielded the desulfonaminated indoaniline dye:

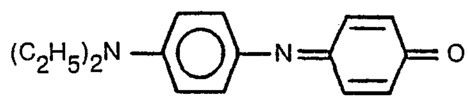

Example 14

Use in a Photographic Silver Halide Material

The color-forming compound synthesized by the procedure described in Example 5 was incorporated into a photographic silver halide material.

A coating composition was prepared containing a photographic silver bromide emulsion comprising the color-forming compound dispersed in a solvent and coated on a subbed poly(ethylene terephthalate) film support. The resulting photographic element contained a silver coverage of 11.2 mg per square decimeter. The coating contained silver bromide in a gelatino emulsion, with a dispersion of 4.9 mg per square decimeter of the color-forming compound dissolved in 9.7 mg per square decimeter of the solvent which was N-*n*-butyl acetanilide.

A sample of the photographic element was imagewise exposed in a commercial sensitometer for $10^{-4}$ seconds through a 1.0 neutral density filter. This provided a developable latent image in the photographic element. Processing was conducted as follows:

60 seconds development in the following developer:

| | |
|---|---|
| sodium hexametaphosphate and tripolyphosphate | 2.0 grams |
| N-methyl-*p*-aminophenol sulfate (developing agent) | 6.0 grams |
| sodium sulfite, anhydrous | 50.0 grams |
| sodium carbonate, anhydrous | 30.0 grams |
| hydroquinone (developing agent) | 6.0 grams |
| potassium bromide | 2.0 grams |
| sodium thiocyanate | 1.3 grams |
| sodium hydroxide | 2.0 grams |
| potassium iodide (0.1 percent aqueous solution) | 6.0 ml |
| water to (pH 10.1 to 10.3) | 1 liter |

After development, the element was washed for 60 seconds in water and then re-exposed by means of a flash exposure to light. The element was then immersed for 30 seconds in a pH 12 buffered developer solution containing 1 gram per liter of 4-methyl-4-hydroxymethyl-1-phenyl-3-pyrazolidone, 1 gram per liter of potassium bromide and 10 ml per liter of benzyl alcohol. The resulting element was then washed for 60 seconds in water and then soaked for 60 seconds in the following bleach-fix composition:

| | |
|---|---|
| $NH_4Fe$ EDTA | 40 g |
| EDTA acid | 4 g |
| Potassium Iodide | 1 g |
| 20% Ammonia solution | 10 ml |
| Ammonium thiosulfate, crystalline | 100 g |
| Sodium sulfite, anhydrous | 2 g |
| Ammonium thiocyanate (20% solution) | 50 ml |
| Water to (pH 6.2—6.5) | 1000 ml |

After soaking, the element was then washed with water and permitted to dry in room air. This produced a dye only reversal cyan dye image having a maximum image density of 1.41 and a minimum density of 0.17 (at 680 nm).

Example 15

Use of Color-Forming Compounds in a Printout Imaging Material

The color-forming compound of Example 8 was used in an imaging element to provide a negative dye image. The imaging material contained the following composition coated on a poly(ethylene terephthalate) film support at the noted coverages:

color-forming compound of Example 8

4.2 g/dm²

lophine dimer represented by the formula:

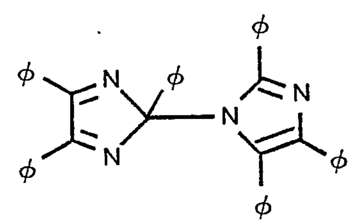

10.8 mg/dm²

ψ herein means phenyl.

poly(methylmethacrylate) (binder) 32.4 mg/dm²

(Elvacite 2010, which is trademark of and available from the E.I. duPont de Nemours and Company, Inc., U.S.A.)

After drying the resulting element, the element was imagewise exposed to high intensity light in a commercial lithographic plate making apparatus (NuArc platemaker, which is available from the Nu-Arc Company, Inc., U.S.A.). This high intensity exposure produced a visible image having a maximum image density of 0.51 and a minimum density of 0.06 read in red light.

The procedure was repeated with the lophine dimer omitted, which produced no dye formation.

Example 16

Preparation of 4-(N,N-dimethylamino)-2-phenylsulfonyl-4′-(2,4,6-triisopropylbenzenesulfonamido)diphenylamine

A solution of *p*-nitrophenoxyacetic acid (10 grams, 0.05 mole) in excess of thionyl chloride (about 50 ml) with a few drops of dimethylformamide was refluxed for 2 hours. The thionyl chloride was removed under reduced pressure, and the residue treated twice with hexane and then evaporated. The solid was dissolved in tetrahydrofuran and added dropwise to a stirred solution of 4-dimethylamino-2-phenylsulfonylaniline (13.8 grams, 0.05 mole) and N,N-diisopropylethylamine (7.0 grams, 0.055 mole) in tetrahydrofuran.

After stirring at room temperature for 18 hours, the reaction mixture was filtered to remove the salt. Evaporation of the filtrate provided a solid. This was rinsed from the flask with cold methanol, filtered, dried

and characterized as 4-dimethylamino-2-phenylsulfonyl-α-(4-nitrophenoxy)acetanilide (19.4 grams) having a melting point of 222 to 225°C. The product was also identified by nuclear magnetic resonance. A solution of the above material (4.6 grams, 0.01 mole) in 2-methoxyethanol (70 ml), ethanol (90 ml), and sodium hydroxide (10 ml, 2.5 N) was refluxed for 1.5 hours, acidified with acetic acid and cooled. The collected liquid (2.8 grams) was recrystallized from $CH_3CN$ to provide 4-dimethylamino-4′-nitro-2-phenylsulfonyl-diphenylamine (2.3 grams) having a melting point of 234 to 235°C. This product was further identified by nuclear magnetic resonance.

The resulting material (2.1 grams, 0.0053 mole) was hydrogenated on palladium-charcoal at 275 kPa hydrogen pressure until hydrogen uptake ceased (3 hours). This produced the desired amine. After removal of the catalyst by filtration through a filtering composition (Celite), the filtrate was dried by means of sodium sulfate and 2,4,6-triisopropylbenzenesulfonyl chloride (1.6 grams, 0.053 mole) and N,N-diisopropylethylamine (0.7 grams, 0.0053 mole) was added. The solution was refluxed under a nitrogen atmosphere for 18 hours, cooled, filtered to remove the salt, and evaporated. The residue was recrystallized from $CH_3CN$. The desired product had a melting point of 221 to 225°C and was further identified by nuclear magnetic resonance. It was also identified by elemental analysis.

Example 17

Preparation of 4-(N,N-diethylamino)-2-methyl-3′-methyl-4′-(2,4,6-triisopropylbenzenesulfonamido)diphenylamine

The following synthesis was carried out to prepare the desired intermediate:

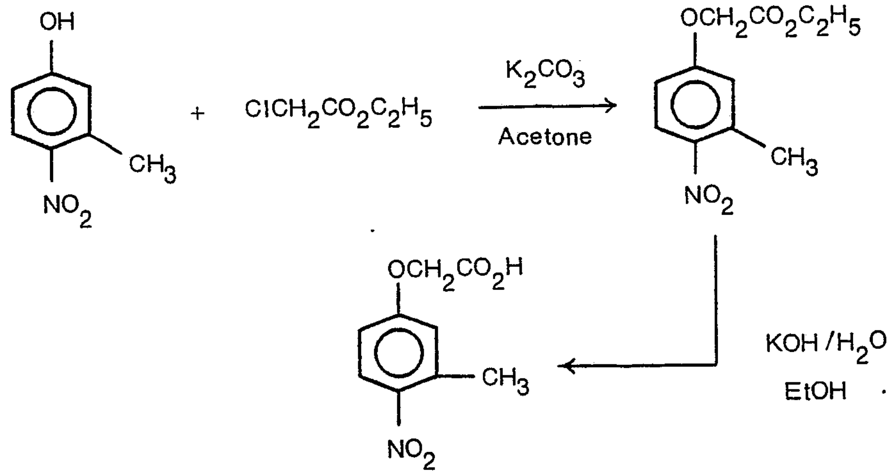


15.3 grams of 3-methyl-4-nitrophenyl and 13 grams of ethyl chloroacetate were dissolved in acetone and refluxed over 16 grams of potassium carbonate for two days. The solution was filtered, the filtrate poured into water, and extracted with ethyl acetate. The ethyl acetate extracts were evaporated to provide an oil which was dissolved in 300 ml of ethanol. To this was added 10 grams of potassium hydroxide in 50 ml of water. The mixture was heated for two hours on a steam bath, most of the ethanol evaporated, acidified with hydrochloric acid, diluted with water, filtered and the solid dried. Recrystallization of the solid from acetonitrile yielded 8.5 grams of the desired product.

Then the following reaction was carried out:

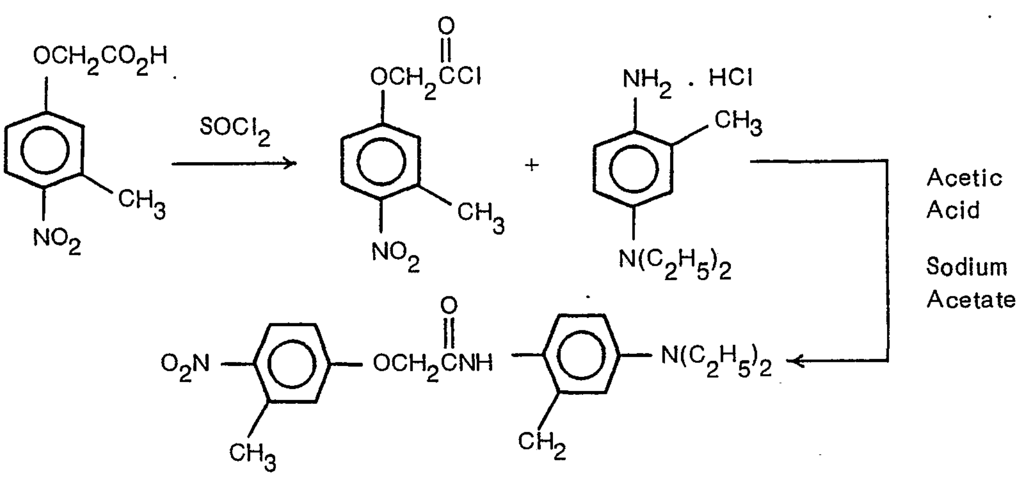

8.4 grams (0.04 mole) of (3-methyl-4-nitrophenoxy)acetic acid was dissolved in about 35 ml of thionyl chloride with three drops of dimethylformamide and heated for two hours. The excess thionyl chloride was evaporated and the residue dissolved in methylene dichloride and evaporated twice. The residue was then dissolved in glacial acetic acid and added to 8.6 grams of N,N-diethyl-3-methyl-*p*-phenylenediamine hydrochloride in acetic acid. 8.0 grams of sodium acetate were added, whereupon the solutions warmed. After stirring for two hours, the solution was poured into water. A solid precipitated and was filtered off and dried. Recrystallization twice from methanol yielded a desired compound having a melting point of 141 to 142°C. The product was identified by nuclear magnetic resonance and carbon-hydrogen-nitrogen analysis indicated the product as desired.

Then the following reaction was carried out:

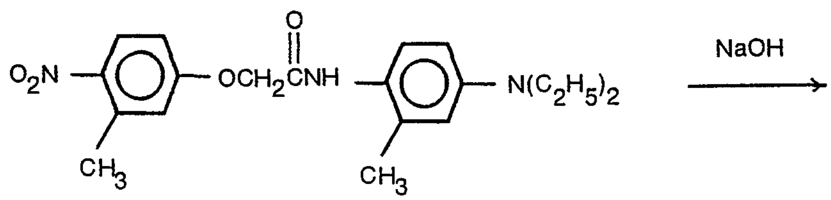


(A)

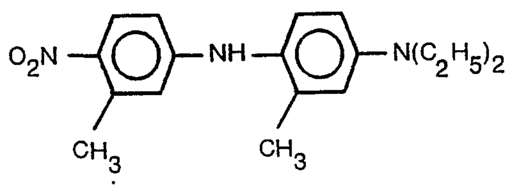

(B)

To a solution of 7 grams of compound (A) in 140 ml of 2-methoxyethanol and 140 ml of ethanol was added a solution of 2 grams of sodium hydroxide in 20 ml of water. The combination was then refluxed for two hours, cooled, and acidified with acetic acid. Most of the ethanol was removed and the remainder poured into water. This caused a solid to form, which was filtered out and dried. Recrystallization from acetonitrile yielded the desired compound having a melting point of 132 to 133°C.

Then the following reaction was carried out:

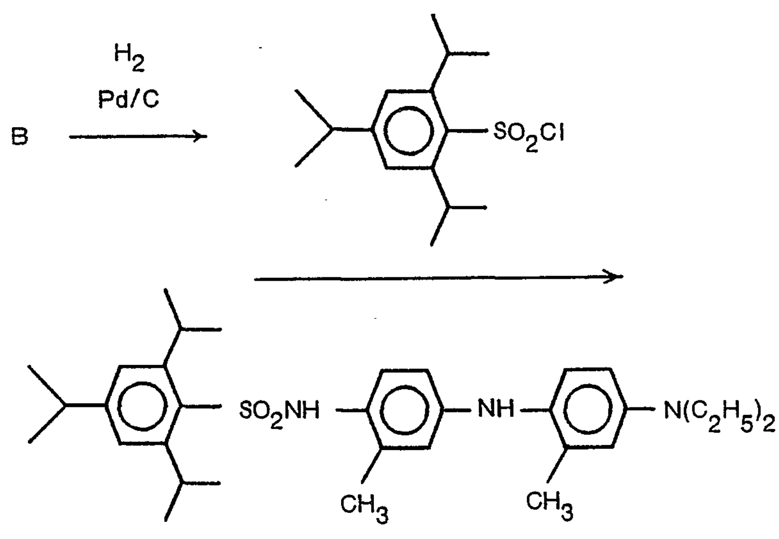


1.8 grams (0.006 mole) of compound (B) was dissolved in 100 ml of tetrahydrofuran and reduced over a palladium-charcoal catalyst with hydrogen at 275 kPa hydrogen pressure. The catalyst was filtered off, and the filtrate dried over sodium sulfate. To this filtrate was added 1.74 grams (0.13 mole) of the sulfonyl chloride and N,N-diisopropylethylamine (sometimes referred to as Hünig's base). The solution was heated at reflux overnight under nitrogen. After the tetrahydrofuran was evaporated, the dark blue residue was dissolved in ethyl acetate, washed with water, dried and concentrated. The residue was then dissolved in methylene dichloride and chromatographed on Woelm's silica gel to remove impure fractions. The main component fractions were isolated and concentrated. Tetrahydrofuran was again added and hydrogen

reduction at 275 kPa hydrogen pressure over palladium-charcoal catalyst was carried out. The catalyst was removed by filtration, and the filtrate concentrated to a yellow oil. The oil was dissolved in hot hexane. Upon cooling the mixture, a white solid separated. The white solid was the desired product having a melting point of 152 to 154°C. This product was identified by nuclear magnetic resonance and also by elemental analysis.

The compounds given in following Examples 18 through 162 were prepared by procedures like those described in Examples 1 through 17:

Example 18

4-Morpholino-4′-(2,4,6-triisopropylbenzenesulfonamido)diphenylamine (melting point 203 to 205°C).

Example 19

4-(N,N-dimethylamino)-4′-(2,4,6-triisopropylbenzenesulfonamido)diphenylamine (melting point 166 to 168°C).

Example 20

4-(N,N-dihexylamino)-2′-chloro-4′-(2,4,6-triisopropylbenzenesulfonamido)diphenylamine.

Example 21

4-(N,N-dihexylamino)-2′-[δ-(2,4-di-t-amylphenoxy)butylcarbamoyl]-4′-(2,4,6-triisopropylbenzenesulfonamido)diphenylamine (melting point 151 to 152°C).

Example 22

4-(N,N-didodecylamino)-3′-methyl-4′-(2,4,6-triisopropylbenzenesulfonamido)diphenylamine, *p*-toluenesulfonic acid salt (melting point 172 to 174°C).

Example 23

4-[N-ethyl-N-(octanoylmethyl)amino]-3′-methyl-4′-(2,4,6-triisopropylbenzenesulfonamido)-diphenylamine (melting point 86 to 88°C).

Example 24

4-(N,N-didodecylamino)-2′-[δ-(2,4,-di-t-amylphenoxy)butyl sulfamyl]-4′-(2,4,6-triisopropylbenzenesulfonamido)diphenylamine, p-toluenesulfonic acid salt (melting point 154 to 155°C).

Example 25

4-Methoxy-2-methyl-2′-(4-decyl)benzamido-4′-(2,4,6-triisopropylbenzenesulfonamido)diphenylamine.

Example 26

4-(N,N-dihexylamino)-2-phenylsulfonyl-4′-(2,4,6-triisopropylbenzenesulfonamido)diphenylamine (melting point 144°C).

Example 27

4-(N,N-diethylamino-2-methyl-4′-(2,4,6-triisopropylbenzenesulfonamido)diphenylamine (melting point 158 to 159°C).

Example 28

4-(N,N-diethylamino-2,3′-dimethyl-4′-(2,4,6-triisopropylbenzenesulfonamido)diphenylamine (melting point 152 to 154°C).

Example 29

4-[N-ethyl-N-(β-methoxyethyl)amino]-2-methyl-2′-[(4-morpholino)sulfamyl]-4′-(2,4,6-triisopropylbenzenesulfonamido)diphenylamine (melting point 168 to 169°C).

Example 30

4-(N,N-dimethylamino)-2-methyl-5-methoxy-4′-(2,4,6-triisopropylbenzenesulfonamido)-diphenylamine.

Example 31

4-(N,N-dimethylamino-2-methyl-5-methoxy-2′-octanamido-4′-(2,4,6-triisopropylbenzenesulfonamido)diphenylamine (melting point 190 to 194°C).

Example 32

4-[N-ethyl-N-(β-methanesulfonamidoethyl)amino]-2-methyl-2′-pivalamido-4′-(2,4,6-triisopropylbenzenesulfonamido)diphenylamine (melting point 143 to 145°C).

Example 33

4-Hexyloxy-2′-(4-methoxyphenoxy)formamido-4′-(2,4,6-triisopropylbenzenesulfonamido)-diphenylamine.

Example 34

4-(N,N-dihexylamino)-3′-pivalamido-4′-(2,4,6-triisopropylbenzenesulfonamido)diphenylamine (melting point 146 to 148°C).

Example 35

4-[N-ethyl-N-(β-methoxyethyl)amino]-2-methyl-2′-octanamido-4′-(2,4,6-triisopropylbenzenesulfonamido)diphenylamine (melting point 137 to 138°C).

Example 36

4-[N-ethyl-N-(β-methanesulfonamidoethyl)amino]-2-methyl-2′,5′-dipivalamido-4′-(2,4,6-triisopropylbenzenesulfonamido)diphenylamine.

Example 37

4-Piperidino-2′-methoxy-5′-pivalamido-4′-(2,4,6-triisopropylbenzenesulfonamido)diphenylamine (melting point 209 to 210°C).

Example 38

4-Hexyloxy-2′-acetamido-4′-(2,4,6-triisopropylbenzenesulfonamido)diphenylamine.

Example 39

4-[N-ethyl-N-(β-methanesulfonamidoethyl)amino]-2-methyl-2′,5′-didodecyloxy-4′-(2,4,6-triisopropylbenzenesulfonamido)diphenylamine (melting point 75 to 78°C).

Example 40

4-(N,N-diethylamino)-2-methyl-2′-methoxy-5′-[α-(2,4-di-t-amylphenoxy)hexanamido]-4′-(2,4,6-triisopropylbenzenesulfonamido)diphenylamine (melting point 107 to 110°C).

Example 41

4-[N-ethyl-N-(β-methanesulfonamidoethyl)amino]-2-methyl-2′,5′-dipivalamido-4′-(methanesulfonamido)diphenylamine.

Example 42

4-[N-ethyl-N-(β-methanesulfonamidoethyl)amino]-2-methyl-2′,5′-dipivalamido-4′-benzenesulfonamidodiphenylamine.

Example 43

4-[N-ethyl-N-(β-methanesulfonamidoethyl)amino]-2-methyl-2′,5′-dipivalamido-4′-(2,4,6-trimethylbenzenesulfonamido)diphenylamine.

Example 44

4-Phenoxy-3′-methyl-4′-(2,4,6-triisopropylbenzenesulfonamido)diphenylamine (melting point 140 to 142°C).

Example 45

4-(2,6-Dimethylphenoxy)-3′-methyl-4′-(2,4,6-triisopropylbenzenesulfonamido)diphenylamine (melting point 210°C).

Example 46

4-(2,6-Diisopropylphenoxy)-3′-methyl-4′-(2,4,6-triisopropylbenzenesulfonamido)diphenylamine (melting point 124 to 126°C).

Example 47

4-[2,6-di(1-methylpropyl)phenoxy]-3′-methyl-4′-(2,4,6-triisopropylbenzenesulfonamido)-diphenylamine (melting point 163 to 164°C).

Example 48

2,4-Dimethoxy-2′-[δ-(2,4-di-t-pentylphenoxy)butylsulfamyl]-4′-(2,4,6-triisopropylbenzenesulfonamido)diphenylamine (melting point 139 to 140°C).

Example 49

4-Hexyloxy-2′-[δ-(2,4-di-t-pentylphenoxy)butylcarbamoyl]-4′-(2,4,6-triisopropylbenzenesulfonamido)-diphenylamine.

Example 50

4-Hexyloxy-2′-methylsulfonyl-4′-(2,4,6-triisopropylbenzenesulfonamido)diphenylamine (melting point 136 to 138°C).

Example 51

4-Hexyloxy-2′-carboxy-4′-(2,4,6-triisopropylbenzenesulfonamido)diphenylamine (melting point 179 to 181°C).

Example 52

4-Hexyloxy-3′-ethoxycarbonyl-4′-(2,4,6-triisopropylbenzenesulfonamido)diphenylamine.

Example 53

4-Hexyloxy-2′-(2-methyl)butanamido-4′-(2,4,6-triisopropylbenzenesulfonamido)diphenylamine.

Example 54

4-Hexyloxy-3′-pivalamido-4′-(2,4,6-triisopropylbenzenesulfonamido)diphenylamine (melting point 120 to 122°C).

Example 55

4-Octyloxy-2′-pivalamido-4′-(2,4,6-triisopropylbenzenesulfonamido)diphenylamine (melting point 95 to 100°C).

Example 56

4-Methoxy-2-methyl-2′-pivalamido-4′-(2,4,6-triisopropylbenzenesulfonamido)diphenylamine.

Example 57

4-Methoxy-2-methyl-2′-octanamido-4′-(2,4,6-triisopropylbenzenesulfonamido)diphenylamine (melting point 146 to 148°C).

Example 58

4-Methoxy-2-methyl-2′-n-hexylureido-4′-(2,4,6-triisopropylbenzenesulfonamido)diphenylamine (melting point 124 to 126°C).

Example 59

4-Hexyloxy-2′-[α-(2,4-di-t-pentylphenoxy)hexanamido]-4′-(2,4,6-triisopropylbenzenesulfonamido)-diphenylamine.

Example 60

4-Hexyloxy-2′-(N-methyl)acetamido-4′-(2,4,6-triisopropylbenzenesulfonamido)diphenylamine (melting point 67 to 75°C).

Example 61

4-Hexyloxy-3-methoxy-4′-(2,4,6-triisopropylbenzenesulfonamido)diphenylamine (melting point 142 to 143°C).

Example 62

4-Hexyloxy-3′-methylsulfonyl-4′-(2,4,6-triisopropylbenzenesulfonamido)diphenylamine (melting point 118°C).

Example 63

4-Hexyloxy-3-methyl-4′-(4-hydroxyphenyl)sulfonamidodiphenylamine.

Example 64

3-(4-dodecyloxyphenyl)sulfonamido-4′-(2,4,6-triisopropylbenzenesulfonamido)diphenylamine (melting point 154 to 155°C).

Example 65

3-(2,4-di-t-pentylphenoxy)acetamido-4′-(2,4,6-triisopropylbenzenesulfonamido)diphenylamine (melting point 153 to 154°C).

Example 66

4-(2,4-di-t-pentylphenoxy)acetamido-4′-(2,4,6-triisopropylbenzenesulfonamido)diphenylamine (melting point 182 to 183°C).

Example 67

4-n-Octylureido-4′-(2,4,6-triisopropylbenzenesulfonamido)diphenylamine (melting point 200 to 203°C).

Example 68

4,4′-Bis(2,4,6-triisopropylbenzenesulfonamido)diphenylamine (melting point 211 to 212°C).

Example 69

N-[2-α-(2,4-di-t-pentylphenoxy)butanamido-4-(2,4,6-triisopropylbenzenesulfonamido)phenyl]aminoantipyrine (melting point 120 to 125°C), having the formula:

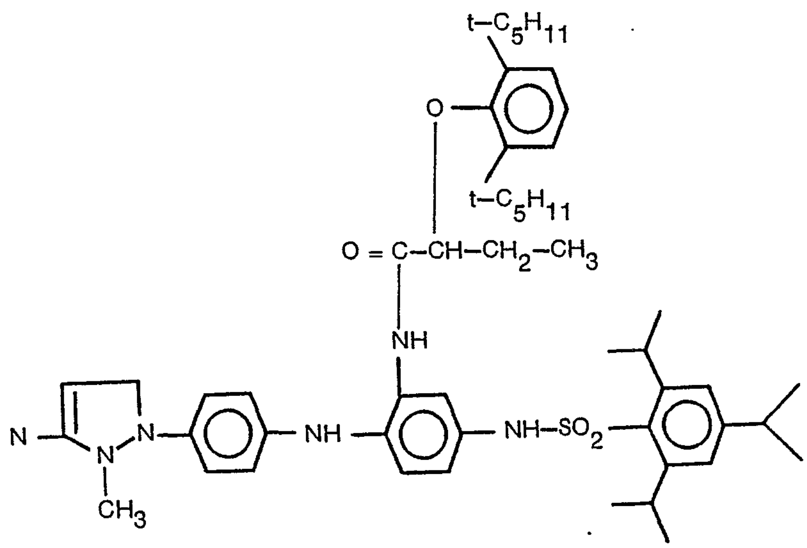

Example 70

N-[(2-pivalamido)-4-(2,4,6-triisopropylbenzenesulfonamido)phenyl]animoantipyrine (melting point 210 to 212°C).

Example 71

N-[2-δ-(2,4-di-t-pentylphenoxy)butylcarbamoyl-4-(2,4,6-triisopropylbenzenesulfonamido)phenyl]-aminoantipyrine (melting point 164 to 166°C).

Example 72

2-N-[3-methyl-4-(2,4,6-triisopropylbenzenesulfonamido)phenyl]aminobenzothiazole (melting point 190 to 195°C).

Example 73

4-Hexyloxy-2′-(2-ethyl)butanamido-4′-(2,4,6-triisopropylbenzenesulfonamido)diphenylamine.

Example 74

4-Hexyloxy-2′-octanamido-4′-(2,4,6-triisopropylbenzenesulfonamido)diphenylamine.

Example 75

4-(N,N-diethylamino)-4′-(4-n-dodecyloxybenzenesulfonamido)diphenylamine (melting point 171 to 172°C).

Example 76

4-(N,N-diethylamino)-4′-methanesulfonamidodiphenylamine (melting point 106 to 108°C).

Example 77

4-Hexyloxy-2′-(2-ethyl)hexanamido-4′-(2,4,6-triisopropylbenzenesulfonamido)diphenylamine.

Example 78

4-(N,N-dihexylamino)-4′-(2,4,6-trimethylbenzenesulfonamido)diphenylamine, p-toluenesulfonic acid salt (melting point 123 to 126°C).

Example 79

4-Hexyloxy-2′-cyclohexanecarboxamido-4′-(2,4,6-triisopropylbenzenesulfonamido)diphenylamine.

Example 80

4-(N,N-dihexylamino)-3′-methyl-4′-benzenesulfonamidophenylamine (melting point 76 to 78°C).

Example 81

4-(N,N-dihexylamino)-3′-methyl-4′-(2,4,6-triisopropylbenzenesulfonamido)diphenylamine (melting point 81 to 82°C).

Example 82

4-(N,N-dihexylamino-2′-methylsulfonyl-4′-benzenesulfonamidodiphenylamine (melting point 141°C).

Example 83

4-(N,N-dihexylamino)-2′-methylsulfonyl-4′(2,4,6-triisopropylbenzenesulfonamido)diphenylamine (melting point 115 to 116°C).

Example 84

4-(N,N-dihexylamino)-2′-(N,N-diethylsulfamyl)-4′-benzenesulfonamidophenylamine.

Example 85

4-(N,N-dihexylamino)-3′-trifluoromethyl-4′-benzenesulfonamidodiphenylamine, p-toluenesulfonic acid salt (melting point 164 to 165°C).

Example 86

4-(N,N-dihexylamino)-2′-trifluoromethyl-4′-benzenesulfonamidodiphenylamine, p-toluenesulfonic acid salt (melting point 165 to 166°C)

Example 87

4-Hexyloxy-2′-hexadecanamido-4′-(2,4,6-triisopropylbenzenesulfonamido)diphenylamine.

Example 88

4-Hexyloxy-2′-benzamido-4′-(2,4,6-triisopropylbenzenesulfonamido)diphenylamine.

Example 89

4-Hexyloxy-4′-benzenesulfonamidodiphenylamine (melting point 119 to 120°C).

Example 90

4-Hexyloxy-4′-(2,4,6-triisopropylbenzenesulfonamido)diphenylamine (melting point 127°C).

Example 91

4-Hexyloxy-3′-methyl-4′-benzenesulfonamidodiphenylamine (melting point 129 to 131°C).

Example 92

4-Hexyloxy-2′-(4-n-pentyl)benzamido-4′-(2,4,6-triisopropylbenzenesulfonamido)diphenylamine.

Example 93

Bis(4′-tolylsulfonamido)diphenylamine.

Example 94

4-[N-ethyl-N-(β-methanesulfonamidoethyl)amino]-2-methyl-2′-octanamido-4′-benzenesulfonamidodiphenylamine.

Example 95

4-[N-ethyl-N-(β-methanesulfonamidoethyl)amino]-2-methyl-3′-pivalamido-4′-(2,4,6-triisopropyl-benzenesulfonamido)diphenylamine.

Example 96

4-{N-ethyl-N-[β-(N-methylmethanesulfonamido)ethyl]amino}-2-methyl-2′-octanamido-4′-(2,4,6-triisopropylbenzenesulfonamido)diphenylamine.

Example 97

4-[N-ethyl-N-(β-methanesulfonamidoethyl)amino]-2-methyl-2′-(3-octylsulfamyl)benzamido-4′-(2,4,6-triisopropylbenzenesulfonamido)diphenylamine (melting point 73 to 80°C).

Example 98

4-(N,N-dimethylamino)-3-methoxy-2-methyl-2′-methanesulfonyl-4′-(2,4,6-triisopropylbenzene-sulfonamido)diphenylamine (melting point 110 to 113°C).

Example 99

4-(N,N-diethylamino)-2-methyl-4′-benzenesulfonamidonaphthylphenylamine (melting point 213 to 216°C).

Example 100

4-(N,N-diethylamino)-2-methyl-2′-[α-(2,4-di-t-amylphenoxy)hexanamido]-4′-benzenesulfonamido-naphthyldiphenylamine (melting point 148 to 152°C).

Example 101

4-[N-ethyl-N-(β-methanesulfonamidoethyl)amino]-2-methyl-4′-benzenesulfonamido-naphthylphenylamine (melting point 156 to 158°C).

Example 102

4-[N-ethyl-N-(β-methanesulfonamidoethyl)amino]-2-methyl-4′-(4-dodecyloxybenzenesulfonamido-naphthylphenylamine (melting point 113 to 115°C).

Example 103

4-[N-ethyl-N-(β-methanesulfonamidoethyl)amino]-2-methyl-2′-decanamido-4-benzenesulfonamido-naphthylphenylamine.

Example 104

4-[N-methyl-acetamido]-2′-octanamido-4′-(2,4,6-triisopropylbenzenesulfonamido)diphenylamine.

Example 105

4-n-Octylureido-2′-octanamido-4′-(2,4,6-triisopropylbenzenesulfonamido)diphenylamine (melting point 114 to 115°C).

Example 106

1,4-Bis{N-[4,4′-bis(2,4,6-triisopropylbenzenesulfonamido)-2,2′-bisoctanamido]}phenyl-phenylenediamine (melting point 185 to 186°C).

Example 107

4-Methoxy-2-methyl-2′-hexadecanamido-4′-(2,4,6-triisopropylbenzenesulfonamido)diphenylamine.

Example 108

4-Methoxy-2-methyl-2′-[(3-acetoxy)propionamido]-4′-(2,4,6-triisopropylbenzenesulfonamido)-diphenylamine (melting point 150 to 151°C).

Example 109

4-Methoxy-2-methyl-2′-[(3-carboxy)propionamido]-4′-(2,4,6-triisopropylbenzenesulfonamido)-diphenylamine (melting point 174°C).

Example 110

4-Hexyloxy-2′-(4-n-decyl)benzamido-4′-(2,4,6-triisopropylbenzenesulfonamido)diphenylamine.

Example 111

2,4-Dimethoxy-3′-methyl-4′-(2,4,6-triisopropylbenzenesulfonamido)diphenylamine (melting point 154 to 155°C).

Example 112

2,4-Dimethoxy-2′-octanamido-4′-(2,4,6-triisopropylbenzenesulfonamido)diphenylamine (melting point 133 to 135°C).

Example 113

4-Methoxy-3-methanesulfonamido-2′-octanamido-4′-(2,4,6-triisopropylbenzenesulfonamido)-diphenylamine.

Example 114

4-Methoxy-3-(N-methyl)methanesulfonamido-2′-octanamido-4′-(2,4,6-triisopropylbenzene-sulfonamido)diphenylamine.

Example 115

4-Methoxy-3-methanesulfonamido-2′-pivalamido-4′-(2,4,6-triisopropylbenzenesulfonamido)-diphenylamine (melting point 165 to 167°C).

Example 116

3,4,5-Trimethoxy-2′-hexadecanamido-4′-(2,4,6-triisopropylbenzenesulfonamido)diphenylamine (melting point 110 to 112°C).

Example 117

4-Methoxy-3,5-dibromo-2′,5′-dipivalamido-4′-(2,4,6-triisopropylbenzenesulfonamido)diphenylamine (melting point 186 to 187°C).

Example 118

4-Methoxy-3-bromo-2',5'-dipivalamido-4'-(2,4,6-triisopropylbenzenesulfonamido)diphenylamine (melting point 214 to 215°C).

Example 119

4-Methoxy-2',5'-dipivalamido-4'-(2,4,6-triisopropylbenzenesulfonamido)diphenylamine (melting point 201 to 202°C).

Example 120

4-Methoxy-3,5-dichloro-2',5'-dipivalamido-4'-(2,4,6-triisopropylbenzenesulfonamido)diphenylamine (melting point 186 to 187°C).

Example 121

4-Ethylcarbonylmethyleneoxy-2'-octanamido-4'-(2,4,6-triisopropylbenzenesulfonamido)-diphenylamine (melting point 126 to 127°C).

Example 122

4-Carboxymethyleneoxy-2'-octanamido-4'-(2,4,6-triisopropylbenzenesulfonamido)diphenylamine (melting point 108 to 110°C).

Example 123

4-[N-β-(4-methoxybenzoyl)hydrazino]-2-octanamido-4'-(2,4,6-triisopropylbenzenesulfonamido)-diphenylamine (melting point 166 to 168°C).

Example 124

4-Hexyloxy-2',5'-dipivalamido-4'-(2,4,6-triisopropylbenzenesulfonamido)diphenylamine.

Example 125

4-Hexyloxy-3'-pivalamido-4'-(2,4,6-triisopropylbenzenesulfonamido)diphenylamine (melting point 120 to 122°C).

Example 126

4-Hexyloxy-2'-[α-(2,4-di-tert-pentylphenoxy)hexanamido]-4'-(2,4,6-triisopropylbenzenesulfonamido)-diphenylamine.

Example 127

4-Hexyloxy-2'-[α-(3-tert-butyl-4-acetoxyphenyl)tetradecanamido]-4'-(2,4,6-triisopropylbenzene-sulfonamido)diphenylamine.

Example 128

4-Hexyloxy-2'-[α-(3-tert-butyl-4-hydroxyphenyl)tetradecanamido]-4'-(2,4,6-triisopropylbenzene-sulfonamido)diphenylamine.

Example 129

4-Hexyloxy-2'-(3-octylsulfamyl)benzamido-4'-(2,4,6-triisopropylbenzenesulfonamido)diphenylamine (melting point 65 to 75°C).

Example 130

4-Hexyloxy-2'-[3-(N-methyl)octylsulfamyl]benzamido-4'-(2,4,6-triisopropylbenzenesulfonamido)-diphenylamine.

Example 131

4-Hexyloxy-2'-(3-ethoxycarbonylmethylenesulfamyl)benzamido-4'-(2,4,6-triisopropylbenzene-sulfonamido)diphenylamine (melting point 90 to 93°C).

Example 132

4-Hexyloxy-2'-methyl-6'-octanamido-4'-(2,4,6-triisopropylbenzenesulfonamido)diphenylamine (melting point approximately 45°C).

Example 133

3,5-Bis{N-[2-(N-hexoxylphenyl)amino-5-(2,4,6-triisopropylbenzenesulfonamido)]phenylcarbamoyl}isoamylphenoxybenzene (melting point 82 to 87°C).

Example 134

4-Hexyloxy-3'-chloro-4'-(2,4,6-triisopropylbenzenesulfonamido)diphenylamine (melting point 143 to 144°C).

Example 135

4-Hexyloxy-4'-(2,4,6-triisopropylbenzenesulfonamido)naphthylphenylamine (melting point 161 to 162°C).

Example 136

4-Hexyloxy-4'-(4-dodecyloxybenzenesulfonamido)naphthylphenylamine (melting point 101 to 102°C).

Example 137

4-Hexyloxy-2'-octanamido-4'-benzenesulfonamidonaphthylphenylamine (melting point 142 to 144°C).

Example 138

4-Hexyloxy-3'-methyl-5'-phenylsulfonyl-4'-(2,4,6-triisopropylbenzenesulfonamido)diphenylamine (melting point 167 to 168°C).

Example 139

4-Hexyloxy-2',3'-dimethanesulfonyl-4'-(2,4,6-triisopropylbenzenesulfonamido)diphenylamine (melting point 152 to 153°C).

Example 140

4-Hexyloxy-2'-(4-methoxy)benzamido-4'-(2,4,6-triisopropylbenzenesulfonamido)diphenylamine.

Example 141

3-(N-methyl)methanesulfonamido-2'-octanamido-4'-(2,4,6-triisopropylbenzenesulfonamido)-diphenylamine.

Example 142

3-(N-methyl)methanesulfonamido-2'-hexadecanamido-4'-(2,4,6-triisopropylbenzenesulfonamido)-diphenylamine (melting point 110 to 118°C).

Example 143

3-Methanesulfonamido-4-methyl-2'-hexadecanamido-4'-(2,4,6-triisopropylbenzenesulfonamido)-diphenylamine (melting point 63 to 67°C).

Example 144

2,4-Dimethyl-5-methanesulfonamido-2'-hexadecanamido-4'-(2,4,6-triisopropylbenzenesulfonamido)-diphenylamine (melting point 63 to 68°C).

Example 145

2-Methoxy-5-methanesulfonamido-2'-octanamido-4'-(2,4,6-triisopropylbenzenesulfonamido)-diphenylamine.

Example 146

3-Methanesulfonamido-2',5'-dipivalamido-4'-(2,4,6-triisopropylbenzenesulfonamido)diphenylamine.

Example 147

3-Acetamido-2'-octanamido-4'-(2,4,6-triisopropylbenzenesulfonamido)diphenylamine (melting point 75 to 83°C).

Example 148

4-[N-ethyl-N-(β-methanesulfonamidoethyl)amino]-2-methyl-4'-(2,4,6-triisopropylbenzene-sulfonamido)diphenylamine.

Example 149

4-Hexyloxy-2'-(4-chloro)benzamido-4'-(2,4,6-triisopropylbenzenesulfonamido)diphenylamine.

Example 150

4-Hexyloxy-2'-(4-cyano)benzamido-4'-(2,4,6-triisopropylbenzenesulfonamido)diphenylamine.

Example 151

4-Hexyloxy-2'-(n-t-butyl)ureido-4'-(2,4,6-triisopropylbenzenesulfonamido)diphenylamine.

Example 152

4-Hexyloxy-2'-(n-octyl)ureido-4'-(2,4,6-triisopropylbenzenesulfonamido)diphenylamine.

Example 153

4-Hexyloxy-2'-(n-octadecyl)ureido-4'-(2,4,6-triisopropylbenzenesulfonamido)diphenylamine.

Example 154

4-Hexyloxy-2'-cyclohexylureido-4'-(2,4,6-triisopropylbenzenesulfonamido)diphenylamine.

Example 155

4-Hexyloxy-2'-phenylureido-4'-(2,4,6-triisopropylbenzenesulfonamido)diphenylamine.

Example 156

4-Hexyloxy-2'-(4-methylphenyl)ureido-4'-(2,4,6-triisopropylbenzenesulfonamido)diphenylamine.

Example 157

4-Hexyloxy-2'-(4-methoxyphenyl)ureido-4-(2,4,6-triisopropylbenzenesulfonamido)diphenylamine.

Example 158

4-Hexyloxy-2'-(4-chlorophenyl)ureido-4'-(2,4,6-triisopropylbenzenesulfonamido)diphenylamine.

Example 159

4-Hexyloxy-2'-(4-cyanophenyl)ureido-4'-(2,4,6-triisopropylbenzenesulfonamido)diphenylamine.

Example 160

4-Hexyloxy-2'-butoxyformamido-4'-(2,4,6-triisopropylbenzenesulfonamido)diphenylamine.

Example 161

4-Hexyloxy-2'-octyloxyformamido-4'-(2,4,6-triisopropylbenzenesulfonamido)diphenylamine.

Example 162

4-Hexyloxy-2'-phenoxyformamido-4'-(2,4,6-triisopropylbenzenesulfonamido)diphenylamine.

Example 163

Reversal Processing to Produce a Positive Dye Image

A silver bromide gelatino photographic emulsion was prepared containing a dispersion of the following color-forming sulfonamidodiphenylamine dye precursor prepared in Example 5 which is 4-diethylamino-4'-(2,4,6-triisopropylbenzenesulfonamido)diphenylamine:

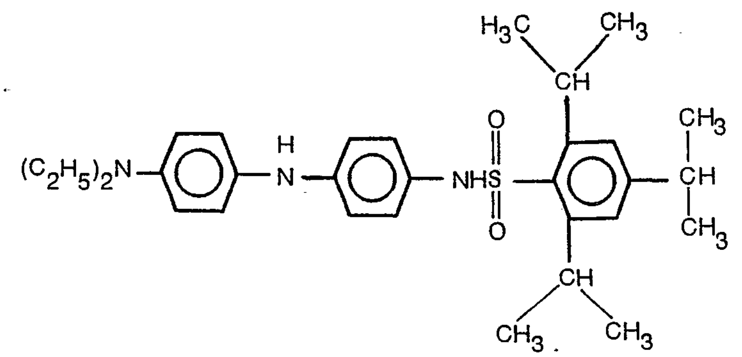

(Compound 1 e)

dispersed in N-*n*-butylacetanilide. The emulsion was coated on a film support at a silver ($Ag^+$) coverage of 104 mg/ft$^2$ (corresponding to 11.2 mg/dm$^2$), 45 mg/ft$^2$ of Compound 1e and 90 mg/ft$^2$ of N-*n*-butylacetanilide (corresponding to 4.9 and 9.7 mg/dm$^2$, respectively). A sample of the resulting photographic film was imagewise exposed to light in a commercial sensitometer for $10^{-4}$ seconds through a 1.0 neutral density filter to produce a developable latent image in the film. Processing of the exposed film was carried out as follows:

1. Develop for 60 seconds in the following developer solution:

| | |
|---|---|
| (a) sodium hexametaphosphate | 2.0 g |
| (b) N-methyl-*p*-aminophenol sulfate | 6.0 g |
| (c) sodium sulfite (anhydrous) | 50.0 g |
| (d) sodium carbonate (anhydrous) | 30.0 g |
| (e) hydroquinone | 6.0 g |
| (f) potassium bromide | 2.0 g |
| (g) sodium thiocyanate | 1.3 g |
| (h) sodium hydroxide | 2.0 g |
| (i) potassium iodide (0.1 percent solution) | 6.0 ml |
| (j) water to 1 liter (pH 10.1 to 10.3) | |

2. Wash in water for 60 seconds.
3. Re-expose by means of a uniform flash to light.
4. Develop 30 seconds in a pH 12 buffered developer containing:

| | |
|---|---|
| (a) 4-hydroxymethyl-4-methyl-1-phenyl-3-pyrazolidone (cross-oxidizing developing agent) | 1 g/l |
| (b) potassium bromide | 1 g/l |
| (c) benzyl alcohol | 10 ml/l |
| (d) water to 1 liter | |

5. Wash in water for 60 seconds.
6. Soak in the following bleaching and fixing composition (composition B—F) for 60 seconds:

| | |
|---|---|
| (a) (NaFe or $NH_4Fe$) ethylenediaminetetraacetic acid | 40.0 g |
| (b) ethylenediaminetetraacetic acid (EDTA) | 4.0 g |
| (c) potassium iodide | 1 g |
| (d) ammonia (20 percent aqueous solution | 10 ml |
| (e) ammonium thiosulfate, crystalline | 100 g |
| (f) sodium sulfite, anhydrous | 2 g |
| (g) sodium or ammonium thiocyanate (20 percent aqueous solution) | 50 ml |
| (h) water to 1 liter (pH 6.2 to 6.5) | |

7. Wash 120 seconds in water, and
8. Dry at 22°C in room air.

A dye only image which was a cyan positive image was produced in the photographic film. The cyan

dye image had a maximum density of 1.41 and a minimum density of 0.17. the dye image had a maximum absorption at 680 nm.

Examples 164 to 173

Dye images were also produced by the procedure of Example 163, with the exception that some of the color-forming sulfonamidodiphenylamine dye precursors from the following Table I were used in place of that of Example 163. The absorptions of the resulting dyes are given in the following Table I. These values were obtained by the following procedure:

A sample of the specified color-forming sulfonamidodiphenylamine dye precursor (3 to 18 mg, based on anticipated value of 1.0 for optical density of a solution) was dissolved in butyl acetate (50 ml) or a similar solvent for the dye precursor. This was mixed vigorously with a solution of excess $K_3Fe(CN)_6$ in pH 12 phosphate buffer. The organic phase was washed three times with water and then diluted to 100 ml with butyl acetate for spectrophotometric assay. This procedure is useful for pre-screening color-forming sulfonamidodiphenylamine dye precursors, because the hue, λ-max (wavelength of maximum absorption) and molar extinction (ε) values obtained are comparable to the properties of the image dye produced in a photographic element. It is not probable that a proposed color-forming sulfonamidodiphenylamine dye precursor is useful in a photographic element to form an image dye if the procedure of reaction with $K_3Fe(CN)_6$ produces no suitable dye.

TABLE I

Color-Forming Sulfonamidodiphenylamine Dye Precursors and their Associated Dyes

Para-sulfonamidodiphenylamine Dye Precursor

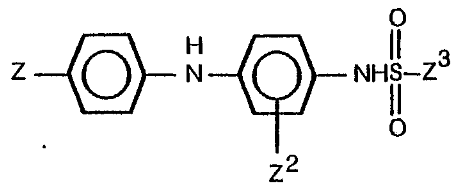

Associated Sulfonimide Dye

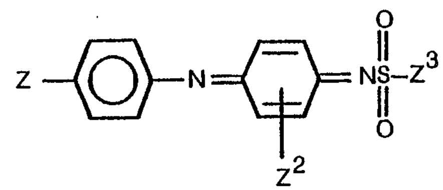

| Example Number | Dye Number | Z | $Z^2$ | $Z^3$ | $\epsilon$ * | λ-max, nm ** |
|---|---|---|---|---|---|---|
| 164 | 1a | $(C_6H_{13})_2N$ | H | 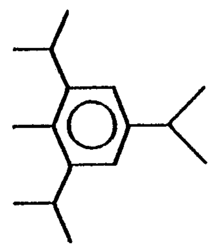 | $4.2 \times 10^4$ | 660 |
| 165 | 1b | $(C_6H_{13})_2N$ | 3'-$CH_3$ | 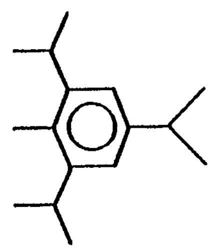 | $4.3 \times 10^4$ | 662 |

TABLE I (Continued)

| Example Number | Dye Number | Z | $Z^2$ | $Z^3$ | $\epsilon$* | λ-max, nm** |
|---|---|---|---|---|---|---|
| 166 | 1c | $(C_6H_{13})_2N$ | 2'-$SO_2CH_3$ | 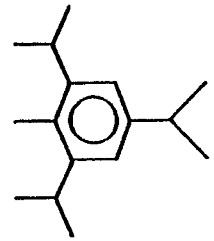 | $3.38 \times 10^4$ | 706 |
| 167 | 1d | $(C_6H_{13})_2N$ | 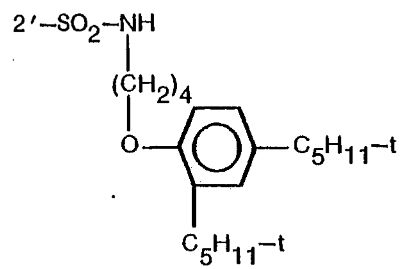 | 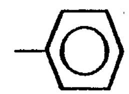 | – | 677 |
| 168 | 1f | $(C_2H_5)_2N$ | H | 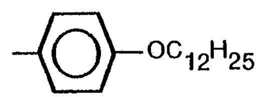 | $3.86 \times 10^4$ | 653 |
| 169 | 1g | $C_6H_{13}O$ | H | 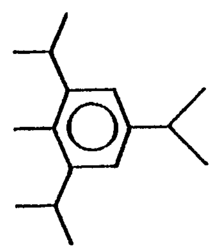 | $8.08 \times 10^3$ | 528 |

TABLE I (Continued)

| Example Number | Dye Number | Z | $Z^2$ | $Z^3$ | ε* | λ-max, nm** |
|---|---|---|---|---|---|---|
| 170 | 1h | $C_6H_{13}O$ | 3′-$CH_3$ | 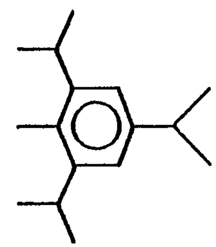 | $1.2 \times 10^4$ | 529 |
| 171 | 1i | $(C_6H_{13})_2N$ | H | 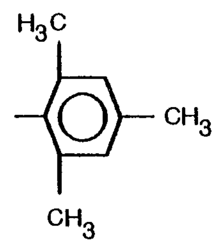 | $3.96 \times 10^4$ | 659 |
| 172 | 1j | $(C_6H_{13})_2N$ | 3′-$CH_3$ | 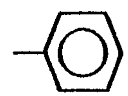 | $4.13 \times 10^4$ | 662 |

TABLE I (Continued)

| Example Number | Dye Number | Z | $Z^2$ | $Z^3$ | $\epsilon$* | λ-max, nm ** |
|---|---|---|---|---|---|---|
| 173 | 1k | $C_6H_{13}O$ | H | 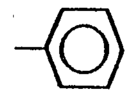 | $1.47 \times 10^4$ | 533 |

The group 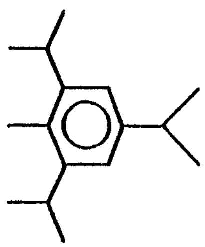 herein means 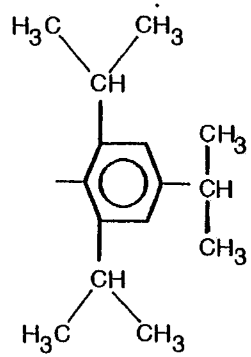

* This signifies in Table I the extinction coefficient in liter $mole^{-1}$ $centimeter^{-1}$

** This signifies in Table I the maximum absorption in nanometers of the designated dye.

Examples 174 to 183

Fixing of Elements Comprising Dyes of Sulfonamidodiphenylamines

Film strips (I) prepared as described in Example 163 containing photographic silver halide and containing the color-forming sulfonamidodiphenylamine dye precursors described in the following Table II were processed as follows:

1. Fixed in the following liquid fix solution (fix composition (A) for 30 seconds:

| | |
|---|---|
| (a) sodium thiosulfate (crystalline) (or ammonium thiosulfate at 120.g) | 160.0 g |
| (b) potassium metabisulfite | 20.0 g |
| (c) water to 1 liter, | |

2. Washed well in water for 120 seconds,

3. The color-forming sulfonamidodiphenylamine dye precursor was oxidized by immersing the film into the following composition:

| | |
|---|---|
| (a) $K_3Fe(CN)_6$ (one percent by weight in benzyl alcohol) | 20.0 g |
| (b) Water to 1 liter (buffered to pH 12), and | |

4. Washed 120 seconds in water.

A second set of comparative film strips (II) containing the same color-forming sulfonamidodiphenylamine dye precursors were processed in the same way as described for film strips (I), with the exception that the strips were also refixed in fix composition A for 30 seconds following step 4, and then washed in water for 120 seconds.

The percentage density loss on fixing for the dyes was calculated as follows:

$$\% \text{ Density Loss on Fixing} = \frac{D_I - D_{II}}{D_I} \times 100$$

where $D_I$ and $D_{II}$ were densities to complementary light of film strips I and II, respectively.

TABLE II

Sulfonamidodiphenylamine Dye Precursor*

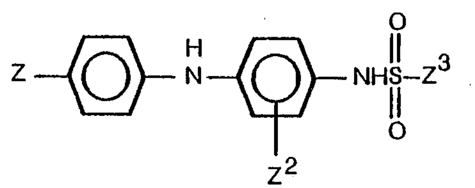

Associated Sulfonimide Dye

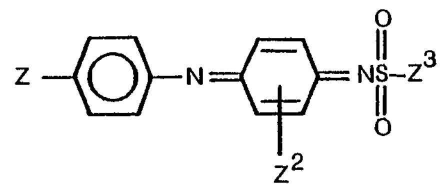

| Example Number | Dye Number | Z | $Z^2$ | $Z^3$ | Percent Density Loss on Fixing |
|---|---|---|---|---|---|
| 174 | 1a | $(C_6H_{13})_2N$ | H | 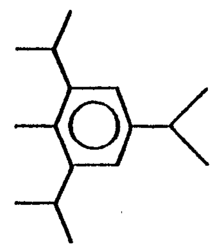 | 8.9 |
| 175 | 1i | $(C_6H_{13})_2N$ | H | 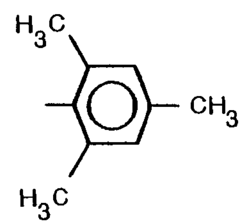 | 32.6 |

TABLE II (Continued)

| Example Number | Dye Number | Z | $Z^2$ | $Z^3$ | Density Loss on Fixing |
|---|---|---|---|---|---|
| 176 | 2a | $(C_6H_{13})_2N$ | H | 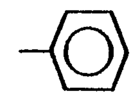 | 100.0 |
| 177 | 1b | $(C_6H_{13})_2N$ | 3'-$CH_3$ | 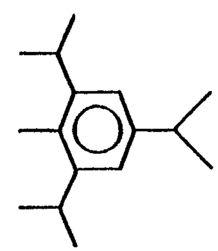 | 5.5 |
| 178 | 1j | $(C_6H_{13})_2N$ | 3'-$CH_3$ | 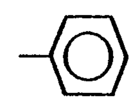 | 45.7 |
| 179 | 1e | $(C_2H_5)_2N$ | H | 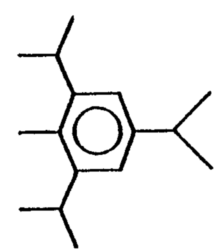 | 16.2 |

TABLE II (Continued)

| Example Number | Dye Number | Z | $Z^2$ | $Z^3$ | Density Loss on Fixing |
|---|---|---|---|---|---|
| 180 | 1f | $(C_2H_5)_2N$ | H | 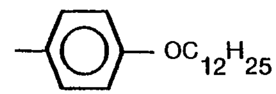 | 95.7 |
| 181 | 1d | $(C_6H_{13})_2N$ | 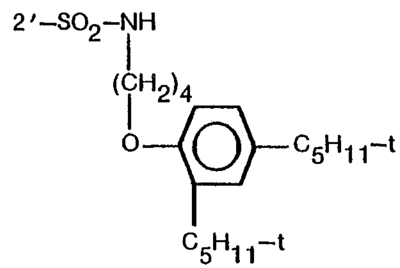 | 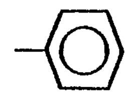 | 4.0 |
| 182 | 1h | $C_6H_{13}O$ | 3'-$CH_3$ | 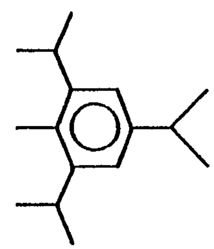 | 0 |
| 183 | 2b | $C_6H_{13}O$ | 3'-$CH_3$ | 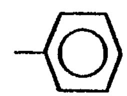 | 33.0 |

* Color formers were incorporated in solvent which was N,N-diethyl lauramide.

Table II demonstrates that only a 6 to 9 percent dye density loss occurs for the 4'-triisopropylbenzene sulfonamido cyan dye formers 1a and 1b relative to the 46 to 100 percent losses experienced for the non-ballasted homologs. Comparison of the respective losses (16 versus 96 percent) for Compounds 1e and 1f demonstrate the importance of a 4'-ballast with isopropyl groups in both ortho positions of the benzene ring. The excellent stability of Compound 1d (4 percent loss) demonstrates that a bulky substituent in the 2'-ring position conveys stabilization of the image dye after fixing. Furthermore, comparisons of the respective density losses (0 versus 33 percent) for the magenta dye precursor 1h and the dye precursor 2b show the value of the introduction of a triisopropylbenzene sulfonamido ballast at the 4'-position.

Examples 184 to 201

Processing of Photographic Elements

A. Film strips prepared as in Example 163 containing photographic silver halide and containing the color-forming sulfonamidodiphenylamine dye precursor described in the following Table III—A were chemically processed at 22.2°C according to the sequence:

(1) 30-second fix in fix composition A,

(2) 60-second water wash,

(3) 30 seconds in pH 12.0 $Na_3PO_4$ buffer containing 10 g/liter $K_3Fe(CN)_6$, 10 ml/liter benzyl alcohol, 1 g/liter KBr and water to 1 liter,

(4) 5-minute wash in water, and

(5) 10 seconds in Kodak Photo-Flo (trade mark), followed by distilled water wash for 120 seconds.

The processed strips were then mounted on aperture cards and exposed (emulsion side to light source) at 21°C and 45 percent relative humidity in a SANS test (see below) using 5400 LUX irradiation for one, three and seven days. Percentage fade of the dyes was calculated as follows:

$$\% \text{ Fade} = \frac{D_{initial} - D_{n\ days}}{D_{initial}} \times 100$$

where D is the density to complementary light after n days. The term SANS herein means Simulated Average Northern American Skylight.

B. Film strips prepared as in Example 163 containing photographic silver halide and containing the color-forming sulfonamidodiphenylamine dye precursors described in Table III—B were photographically processed at 22.2°C according to the sequence:

(1) Imagewise exposure to provide developable latent image,

(2) Activate in the following developer: pH 12 $Na_3PO_4$ buffer containing 1 gram 4-hydroxymethyl-4-methyl-1-phenyl-3-pyrazolidone, 10 ml benzyl alcohol, 1 gram KBr, water to 1 liter, for 30 seconds,

(3) 2-minute wash in water,

(4) 30 second fix in fix composition A,

(5) 2-minute wash in water, and

(6) dry in room air.

The dried strips were mounted and exposed to SANS irradiation, as described above.

TABLE III–A

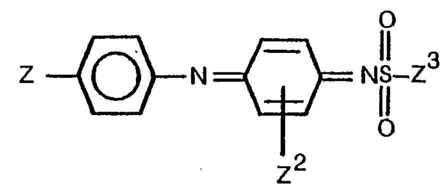

A. Strips Chemically Oxidized – No Development

| Example Number | Dye Number | Z | $Z^2$ | $Z^3$ | % Fade, Days 1 | 3 | 7 |
|---|---|---|---|---|---|---|---|
| 184 | 1a | $(C_6H_{13})_2N$ | H | 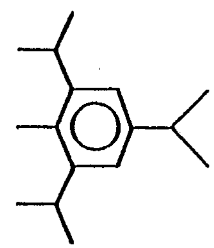 | 1.74 | 4.20 | 22.7 |
| 185 | 1i | $(C_6H_{13})_2N$ | H | 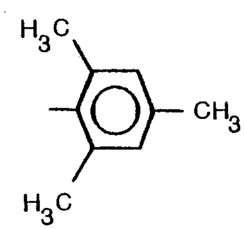 | 5.64 | 19.4 | 83 |

TABLE III–A (Continued)

| Example Number | Dye Number | Z | $Z^2$ | $Z^3$ | 1 | 3 | 7 |
|---|---|---|---|---|---|---|---|
| 186 | 2a | $(C_6H_{13})_2N$ | H | 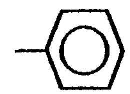 | 100 | 100 | 100 |
| 187 | 1b | $(C_6H_{13})_2N$ | 3′-$CH_3$ | 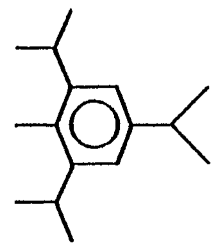 | 1.32 | 2.65 | 9.29 |
| 188 | 1j | $(C_6H_{13})_2N$ | 3′-$CH_3$ | 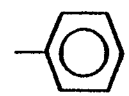 | 2.3 | 8.5 | 59.2 |
| 189 | 1c | $(C_6H_{13})_2N$ | 2′-$SO_2CH_3$ | 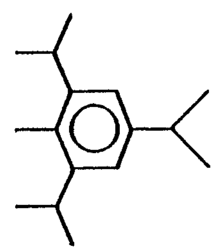 | 4.2 | 13.4 | 77.7 |

TABLE III–A (Continued)

| Example Number | Dye Number | Z | $Z^2$ | $Z^3$ | 1 | 3 | 7 |
|---|---|---|---|---|---|---|---|
| 190 | 1d | $(C_6H_{13})_2N$ | 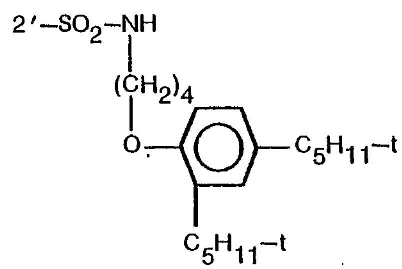 | 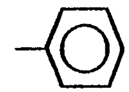 | 8.77 | 21.9 | 51.3 |
| 191 | 1e | $(C_2H_5)_2N$ | H | 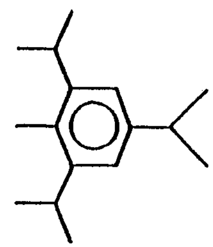 | 3.26 | 6.53 | 18.9 |
| 192 | 3a | $(C_2H_5)_2N$ | H | 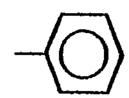 | 100 | 100 | 100 |
| 193 | 1h | $C_6H_{13}O$ | 3′-$CH_3$ | 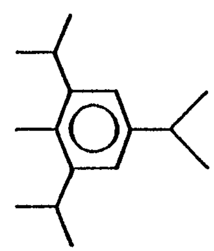 | 0.75 | 1.51 | 4.54 |

TABLE III–A (Continued)

| Example Number | Dye Number | Z | $Z^2$ | $Z^3$ | 1 | 3 | 7 |
|---|---|---|---|---|---|---|---|
| 194 | 2b | $C_6H_{13}O$ | 3'-$CH_3$ | 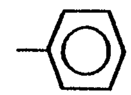 | 10 | 25 | 58 |
| 195 | 1g | $C_6H_{13}O$ | H | 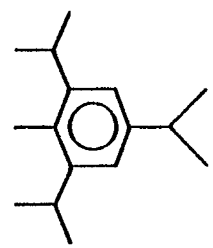 | 2.22 | 4.44 | 13.3 |
| 196 | 1k | $C_6H_{13}O$ | H | 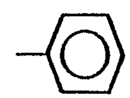 | 11.5 | 25.3 | 57.5 |

TABLE III–B

B. Strips Processed Photographically

| Example Number | Dye Number | Z | $Z^2$ | $Z^3$ | 1 | 3 | 7 |
|---|---|---|---|---|---|---|---|
| 197 | 1b | $(C_6H_{13})_2N$ | 3'-$CH_3$ | 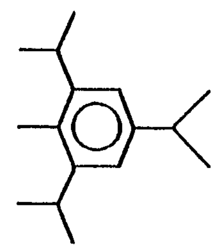 | 2.20 | 7.08 | 33.6 |
| 198 | 1a | $(C_6H_{13})_2N$ | H | 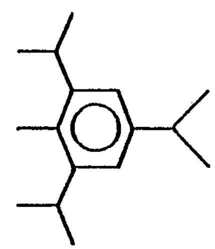 | 48.9 | 100 | 100 |
| 199 | 1d | $(C_6H_{13})_2N$ | 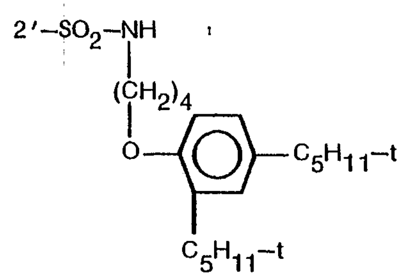 | 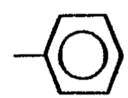 | 16.2 | 50.6 | 70 |

TABLE III–B (Continued)

| Example Number | Dye Number | Z | $Z^2$ | $Z^3$ | 1 | 3 | 7 |
|---|---|---|---|---|---|---|---|
| 200 | 1h | $C_6H_{13}O$ | 3′-$CH_3$ | 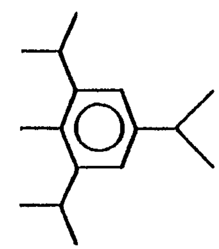 | 0.78 | 1.56 | 5.46 |
| 201 | 1g | $C_6H_{13}O$ | H | 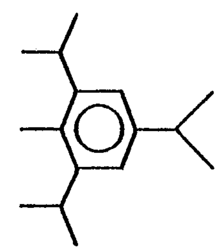 | 1.9 | 4.76 | 14.3 |

The SANS fade results summarized in Table III—A (for coatings chemically oxidized without development) demonstrate the advantage of the triisopropylbenzenesulfonamido ballast. The respective seven-day dye loss for 1a was about 23 percent, compared to almost complete fading (83 to 100 percent) for the non-ballasted dyes. Similarly, the seven-day loss for 1b was 9 percent versus 59 percent for the non-ballasted 1j cyan dye; and, again, a 19 percent loss for Compound 1e as contrasted to 100 percent destruction of the dye of Example 182. The ballasted magenta dye-former 1h faded 4.5 percent in seven-days SANS, whereas the unballasted compound of Example 184 showed 58 percent dye fade.

Density values of the images produced for the listed dyes are as follows (see Table III—B):

| Example Number | Dye | Density | |
|---|---|---|---|
| | | Silver (Ag) | Silver (Ag) with Dye |
| 197 | 1b | 0.42 | 1.56 |
| 198 | 1a | 0.43 | 1.68 |
| 199 | 1d | 0.45 | 1.03 |
| 0 | 1h | 0.37 | 1.40 |
| 201 | 1g | 0.47 | 1.03 |

Examples 202 to 205

A dispersion of a color-forming para-sulfonamidodiphenylamine dye precursor, as designated in the following Table IV—A, was prepared by dissolving one part of the dye precursor in two parts of ethyl acetate and two parts of N-*n*-butylacetanilide (coupler solvent). This organic mixture was combined with an aqueous gelatin solution and passed through a colloid mill five times. The resulting dispersion was mixed with a gelatino photographic silver halide emulsion and coated at about 11.7 mgs of silver per $dm^2$ on a clear poly(ethylene terephthalate) film support. The resulting photographic element was imagewise exposed to light through a 1.0 neutral density filter in a commercial sensitometer to provide a developable latent image in the element.

The exposed photographic element was processed for 30 seconds at 22°C in a developer composition comprising:

| | |
|---|---|
| 4-methyl-4-hydroxymethyl-1-phenyl-3-pyrazolidone (cross-oxidizing developing agent) | 1 g |
| $Na_3PO_4 \cdot 12H_2O$ | 47.52 g |
| KBr | 1 g |
| Water to 1 liter | |

The photographic element was then fixed for two minutes in an aqueous solution of 5-(2-hydroxyethyl)tetrahydro-S-triazine-2(1H)-thione represented by the formula:

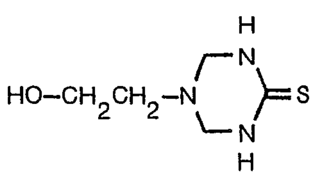

The photographic element was then washed in water for five minutes. The following Table IV—A identifies the color-forming sulfonamidodiphenylamine dye precursor, as well as the maximum absorption of the corresponding dye produced upon processing.

TABLE IV—A

| Example Number | Dye Number | Dmax | Dmin | Absorption: λmax, nm | Dye Number | Color-Forming Dye Precursor |
|---|---|---|---|---|---|---|
| Control | None | 0.19 | 0.14 | (black) | | |
| 202 | 40a | 0.59 | 0.08 | 460 | 40a | 4-methoxy-4′-benzenesulfonamido-diphenylamine |
| 203 | 41a | 0.53 | 0.07 | 535 | 41a | 4-hexyloxy-3′-methyl-4′-benzene-sulfonamidodiphenylamine |
| 204 | 42a | 1.16 | 0.20 | 720 | 42a | 4-dihexylamino-4′-benzenesulfon-amidodiphenylamine |
| 205 | 43a | 0.48 | 0.08 | 430 | 43a | 4-methyl-4′-*p*-tolylsulfonamido-diphenylamine |

Example 206

Use in Direct Positive Photographic Silver Halide Material

A photographic element was prepared by coating the following composition on a poly(ethylene terephthalate) film support:

| | |
|---|---|
| Silver chloroiodide gelatino emulsion (0.4 mole percent I, 0.24 µm cubic grains, surface fogged, chemically sensitized, internally doped) (as Ag°) | 9.7 $mg/dm^2$ |
| gelatin [hardened by means of bis(vinylsulfonylmethyl)ether] | 43.2 $mg/dm^2$ |
| color-forming dye precursor: (dispersed in di-*n*-butylphthalate) | 5.4 $mg/dm^2$ |

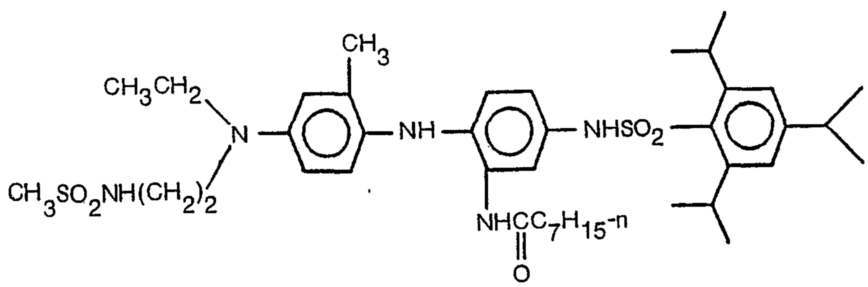

The resulting emulsion layer was overcoated with 10.8 $mg/dm^2$ of gelatin hardened with bis(vinylsulfonylmethyl) ether. The resulting photographic element according to the invention was imagewise exposed to light in a commercial sensitometer to produce a developable image in the emulsion layer. Then the exposed photographic element was processed as follows:

(1) 30 seconds activation in the following composition:
phosphate buffer (pH 12)
4-hydroxymethyl-4-methyl-1-phenyl-3-pyrazolidone 1 g/L.
benzyl alcohol (1 percent by volume),
(2) 60-second wash in water,
(3) 30-second fix (pH 10) in a fixing composition; and
(4) 120-second wash in water.

This produced a dye image and silver image in the emulsion layer. The processed element was permitted to dry in air. The density of the resulting image was (read through a red filter): Dmax 1.57, Dmin 0.41. A reversal image was produced.

A second sample of the imagewise exposed photographic element was fixed and oxidized by means of potassium ferricyanide to produce a maximum density of 1.40.

Example 207

Illustrative Developers

A. The following photographic composition was coated on a poly(ethylene tetrephthalate) film support:

| | |
|---|---|
| AgBr (octahedral grains) | 9.4 $mg/dm^2$ |
| gelatin (binder) | 43.2 $mg/dm^2$ |
| bis(vinylsulfonylmethyl) ether (hardener) | 0.4 $mg/dm^2$ |
| di-n-butyl phthalate (coupler solvent) | 5.4 $mg/dm^2$ |
| color-forming para-sulfonamidodiphenylamine dye precursor: | 5.4 $mg/dm^2$ |

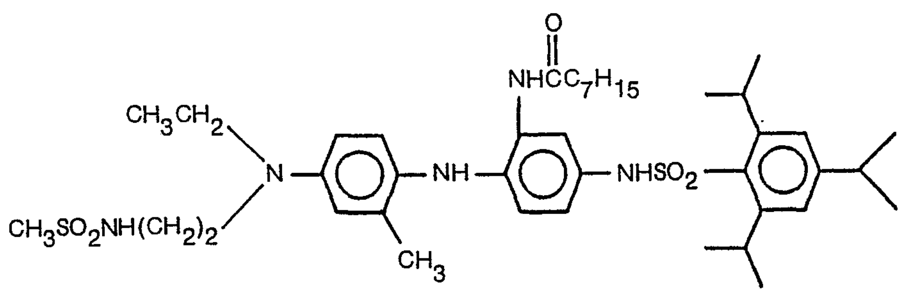

(Compound 207A) (Cyan)

| | |
|---|---|
| potassium nitrate | 0.6 $mg/dm^2$ |

The resulting emulsion layer was then overcoated by means of gelatin (10.8 $mg/dm^2$) hardened by bis(vinylsulfonylmethyl) ether (0.108 $mg/dm^2$). The resulting photographic element was imagewise exposed to light through a conventional step tablet in a commercial sensitometer to produce a developable latent image in the emulsion layer. Processing was carried out at 22°C as follows with agitation of the processing solutions:

(a) Development for 30 seconds in the following developer solution:

| | |
|---|---|
| $Na_3PO_4 \cdot 12H_2O$ | 47.5 g |
| $Na_2SO_3$ | 5.0 g |
| N,N-diethylhydroxylamine (85 percent in $H_2O$) | 1.0 ml |
| 4,4-dimethyl-1-phenyl-3-pyrazolidone | 5 mM |
| KBr | 1.0 g |
| Water (to one liter) (pH 12.0); | |

(b) Rinse for 60 seconds in water;

(c) Fix for 30 seconds in the following composition:

| | |
|---|---|
| $Na_2S_2O_3 \cdot 5H_2O$ | 248 g |
| $Na_2CO_3 \cdot H_2O$ | 30.0 g |
| $NaHCO_3$ | 5.0 g |
| Water to one liter (pH 10.0); | |

(d) Wash for five minutes in water; and

(e) air dry.

A cyan image was produced.

The procedure was repeated, with the exception that the following color-forming sulfonamidodiphenylamine dye precursor was used in place of Compound 207A:

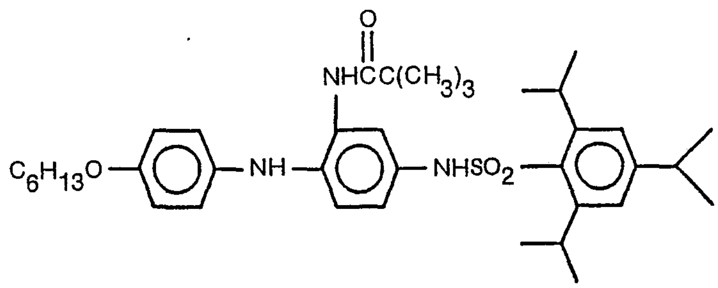

(Compound 207B) (Magenta)

Compound 207B was coated in the emulsion layer at 9.6 mg/dm$^2$ with 9.6 mg/dm$^2$ of the coupler solvent.

The image produced with the Compound 207B had a maximum density of 1.25 to green light and a density of 0.41 in the eleventh step of the image. The image produced with the Compound 207A had a maximum density of 1.12 to red light and a density of 0.80 in the eleventh step of the image.

B. The procedure in A. was repeated, with the exception that N-(*p*-hydroxyphenyl) pyrrolidine was used in place of 4,4-dimethyl-1-phenyl-3-pyrazolidone. The image produced with Compound 267B had a maximum density of 1.41 and an eleventh step density of 0.43. The image produced with Compound 207A had a maximum density of 1.56 and an eleventh step density of 0.59.

C. The procedure in A. was repeated, with the exception that *p*-N,N-dimethyl-*p*-aminophenol was used in place of 4,4-dimethyl-1-phenyl-3-pyrazolidone. The image produced with Compound 207B had a maximum density of 0.80 and an eleventh step density of 0.21. The image produced with Compound 207A had a maximum density of 1.42 and an eleventh step density of 0.28.

D. The procedure in A. was repeated, with the exception that N,N,N',N'-tetramethyl-*p*-phenylenediamine dihydrochloride was used in place of 4,4-dimethyl-1-phenyl-3-pyrazolidone. The image produced with Compound 207B had a maximum density of 1.30 and an eleventh step density of 0.38. The image produced with Compound 207A had a maximum density of 1.34 and an eleventh step density of 0.72.

E. The procedure in A. was repeated, with the exception that 6-amino-1-hydroxyethyl-2,2,4-trimethyl-tetrahydroquinoline dihydrochloride was used in place of 4,4-dimethyl-1-phenyl-2-pyrazolidone. The image produced with Compound 207B has a maximum density of 1.23 and an eleventh step density of 0.22. The image produced with Compound 207A had a maximum density of 1.32 and an eleventh step density of 0.40.

The maximum density values for each of the images produced in Examples 207A, B, C, D and E comprised about 0.40 neutral metallic silver density.

## Example 208

Mixed Dye Precursors

A dispersion of 4-dihexylamino-4'-(2,4,6-triisopropylbenzenesulfonamido)-diphenylamine (see Dye 1a in Example 1) was prepared by dissolving 3.0 grams of this first color-forming dye precursor in 8.0 grams of N-n-butylacetanilide. The resulting dispersion was designated Dispersion 208A. A dispersion of 4-hexyloxy-3'-methyl-4'-(2,4,6-triisopropylbenzenesulfonamido)diphenylamine (see Dye 1h in Example 163)

was prepared by dissolving 4.0 grams of this second color-forming dye precursor in 8.0 grams of N-n-butylacetanilide and 8.0 grams of ethyl acetate. The resulting dispersion was designated Dispersion 208B.

The following first photographic silver bromide composition was coated on a poly)ethyleneterephthalate) film support:

| | |
|---|---|
| red-sensitized gelatino photographic silver bromide emulsion | 9.7 mg/$dm^2$ |
| Dispersion 208A: | |
| 4-dihexylamino-4'-(2,4,6-triisopropylbenzenesulfonamido)diphenylamine (dye precursor) | 4.1 mg/$dm^2$ |
| N-n-butylacetanilide | 10.8 mg/$dm^2$ |
| gelatin (binder) | 43.2 mg/$dm^2$ |
| bis(vinylsulfonylmethyl) ether (hardener) | 0.4 mg/$dm^2$ |

The following interlayer was coated on the resulting first layer:

| | |
|---|---|
| 2,5-di-*s*-dodecyl-1,4-dihydroxybenzene | 12.9 mg/$dm^2$ |
| gelatin (binder) | 16.8 mg/$dm^2$ |
| bis(vinylsulfonylmethyl)ether (hardener) | 0.17 mg/$dm^2$ |

Then the following second photographic silver bromide composition was coated on the resulting interlayer:

| | |
|---|---|
| green-sensitized gelatino photographic silver bromide emulsion | 9.7 mg/$dm^2$ |
| Dispersion 208B: | |
| 4-hexyloxy-3'-methyl-4'-(2,4,6-triisopropylbenzenesulfonamido)diphenylamine (dye precursor) | 5.4 mg/$dm^2$ |
| N-n-butylacetanilide | 10.8 mg/$dm^2$ |
| gelatine (binder) | 43.2 mg/$dm^2$ |
| bis(vinylsulfonylmethyl) ether | 0.4 mg/$dm^2$ |

The resulting photographic element was designated as Element 208I. A similar photographic element was prepared, with the exception that 2,5-di-*s*-dedecyl-1,4-dihydroxybenzene was omitted. This photographic element was designated as Element 208II. Each of the photographic elements was imagewise exposed to light by means of a commercial wedge spectrograph to produce a developable latent image in the elements. Then the elements were processed at 22°C. as follows:

(1) Activated 30 seconds in the following composition:

| | |
|---|---|
| $Na_3PO_4$ (pH 12) (buffer) | |
| 4-hydroxymethyl-4-methyl-1-phenyl-3-pyrazolidone | 1 g |
| benzyl alcohol | 10 ml |
| KBr | 1 g |
| Water to 1 liter; | |

(2) Washed two minutes in water;

(3) Fixed for 30 seconds in the following fixing composition:

| | |
|---|---|
| Sodium thiosulfate (or ammonium thiosulfate 120.0 g) | 160.0 g |
| Potassium metabisulfite | 20.0 g |
| Water to 1 liter (pH 4.7); | |

(4) Washed two minutes in water; and

(5) Air dried.

The photographic elements produced a developed silver and dye image. The following transmission maximum and minimum dye densities (negative) were observed for the images produced in each element when read by white, red and green light:

| Element 208I: | Dmax | Dmin |
|---|---|---|
| White | 1.47 | 0.23 |
| Red | 1.66 | 0.39 |
| Green | 0.31 | 0.09 |

| Element 208II: | Dmax | Dmin |
|---|---|---|
| White | 1.47 | 0.10 |
| Red | 1.62 | 0.17 |
| Green | 0.74 | 0.09 |

The data demonstrates that the photographic Elements 208I and 208II provide an overall blue dye-enhanced silver image.

Comparison of the maximum density values for green light indicates color contamination occurred for Element 208II which was a consequence of wandering of the oxidized form of the 3-pyrazolidone developing agent between layers of the element. In Element 208I, pure color separation was observed with no evidence of interlayer oxidized 3-pyrazolidone developing agent wandering.

Example 209

Comparison of Stability in Photographic Material

The following color-forming sulfonamidodiphenylamine dye precursors were compared regarding the stability of the corresponding sulfonimide dyes formed in a silver halide photographic material according to the invention:

209A 4-Hexyloxy-4′-(2,4,6-triisopropylbenzenesulfonamido)diphenylamine
209B 4-n-Hexyloxy-2′-pivalamido-4′-(2,4,6-triisopropyl- benzenesulfonamido)diphenylamine
209C 4-Hexyloxy-3′-pivalamido-4′-(2,4,6-triisopropyl-benzenesulfonamido)diphenylamine
209D 2′,5′-Dipivalamido-4-n-hexyloxy-4′(2,4,6-triisopropylbenzenesulfonamido)diphenylamine

Each one of these dye precursors was incorporated in a photographic silver halide element comprising a subbed poly(ethylene terephthalate) film support having thereon a layer comprising:

(1) silver bromide (0.8 µm grain size, octahedral grains, chemically sensitized by means of sulfur and gold sensitizers) (9.7 mg/dm²) and
(2) gelatin (43.2 mg/dm²) hardened with bis(vinylsulfonylmethylether) (one percent by weight) (binder).

The color-forming para-sulfonamidodiphenylamine dye precursor was dispersed in solvent (1:1 to 1:2 parts by weight) in the layer at 3.8 to 16.2 mg/dm². Each of the photographic elements was uniformly exposed to light in a commercial sensitometer to produce a developable image in the element. Then each photographic element was processed at 22°C as follows:

(a) Activated for 30 seconds in the following composition:

| | |
|---|---|
| 4-methyl-4-hydroxymethyl-1-phenyl-3-pyrazolidone | 1 g |
| potassium bromide | 1 g |
| benzyl alcohol | 10 ml |
| $Na_3PO_4 \cdot 12H_2O$ | 47.5 g |
| $H_2O$ | to one liter |
| pH adjusted to 12.0 | |

(b) Washed for 30 seconds in water;

(c) Fixed for 30 seconds in the following composition:

| | |
|---|---|
| $Na_2S_2O_3 \cdot 5H_2O$ | 248 g |
| $Na_2CO_3 \cdot H_2O$ | 5.0 g |
| Water to 1 liter (pH 10.0); and | |

(d) Washed for two minutes in water.

A dye image and a silver image were formed in each of the photographic elements. The developed images had the following maximum and minimum density values:

| Dye Precursor | Dmax (Measured at Maximum Absorption Wavelength) | Dmin (Derived from Unexposed Photographic Element at λmax of dye) |
|---|---|---|
| 209A | 1.03 | 0.08 |
| 209B | 0.72 | 0.08 |
| 209C | 1.49 | 0.07 |
| 209D | 1.71 | 0.08 |

Each of the photographic elements after processing was exposed to light in a SANS test. After seven days, the percentage fade of the dye image was observed. The following results were obtained:

| Dye Precursor | Percent Fade |
|---|---|
| 209A | 13.3 |
| 209B | 5.6 |
| 209C | 26.2 |
| 209D | 0 |

This illustrates the degree of stability to light exhibited by dye images according to the invention.

A separate sample of each of the photographic elements after processing was exposed to a "wet oven test" in which the photographic element was placed in an oven at 60°C and 70 percent humidity. After seven days, the percentage fade of the dye image was observed. The following results were obtained:

| Dye Precursor | Percent Fade |
|---|---|
| 209A | 100.0 |
| 209B | 6.3 |
| 209C | 100.0 |
| 209D | +1.9 (The dye image for 208D increased in density.) |

This illustrates that the sulfonimide dye images produced from dye precursors 209B and 209D are more stable than the sulfonimide dyes produced from Compounds 209A and 209C.

Example 210

The following photographic silver halide composition was prepared and coated on a poly(ethyleneterephthalate) film support:

| | |
|---|---|
| photographic silver bromide gelatino emulsion (0.8 µm grain, octahedral grains, sulfur and gold chemically sensitized) | 9.7 mg/dm$^2$ |
| gelatin | 43.2 mg/dm$^2$ |
| bis(vinylsulfonylmethyl) ether (hardener) | 0.43 mg/dm$^2$ |
| N-n-butylacetanilide (coupler solvent) | 6.5 mg/dm$^2$ |
| 3-methanesulfonamido-2′-octanamido-4′-(2,4,6-triisopropylbenzenesulfonamido)diphenylamine (dye precursor) | 6.5 mg/dm$^2$ |

The resulting photographic element was imagewise exposed to light through a step tablet and a neutral density filter in a commercial sensitometer to provide a developable latent image in the photographic silver bromide layer. The exposed element was then processed at 22°C as follows:

(1) Activated for 30 seconds in the following composition:

| | |
|---|---|
| 4-hydroxymethyl-4-methyl-1-phenyl-3-pyrazolidone | 1 g |
| benzyl alcohol | 10 ml |
| pH 12, $Na_3PO_4$ buffered water to 1 liter; | |

(2) Fixed until cleared in the following fixing composition:

| | |
|---|---|
| $NaHCO_3$ | 0.5 g |
| $Na_2CO_3$ | 40 g |
| $Na_2S_2O_3$ | 100 g |
| Water to 1 liter | |

This provided a developed silver image and dye image having a maximum density of 0.92. The maximum absorption (λ max) was 435 nm. The procedure was repeated, with the exception that in place of fixing the developed photographic element in the noted fixing composition, the photograhic element was treated in a bleach-fix composition.
This removed the silver image. The resulting dye image had a maximum density of 0.3 at 435 nm.

Examples 211 to 228

The following color-forming para-sulfonamidodiphenylamine dye precursors also provided corresponding sulfonimide dyes similar to the dye image produced in Example 210. In each case, the dye precursor was prepared as a dispersion in N-n-butylacetanilide (weight ratio of 1:1 to 1:2) and coated in the photographic silver halide layer at 3.8 to 16.2 mg/dm$^2$ at the appropriate concentration to produce a dye and silver image density of about 2.0. The development step was carried out at 26 to 27°C in an aqueous processing solution (buffered to pH 12.2) containing 1 gram per liter of 4-hydroxymethyl-4-methyl-1-phenyl-3-pyrazolidone (cross-oxidizing developing agent). The maximum absorption wavelength of each of the corresponding sulfonimide dyes formed is given for each of the dye precursors. Many of the ionizable 3-methanesulfonamido substituted dye precursors gave improved reactivity compared to the corresponding 4-methoxy compounds.

Example 211

3-Methanesulfonamido-4-methoxy-2'-octanamido-4'-(2,4,6-triisopropylbenzenesulfonamido)diphenylamine (475 nm)

Example 212

3-(N-methyl)methanesulfonamido-4-methoxy-2'-octanamido-4'-(2,4,6-triisopropylbenzenesulfon amido)diphenylamine (472 nm)

Example 213

3-Methanesulfonamido-4-methoxy-2'-pivalamido-4'-(2,4,6-triisopropylbenzenesulfonamido)diphenylamine (478 nm)

Example 214

3-Methanesulfonamido-2'-octanamido-4'-(2,4,6-triisopropylbenzenesulfonamido)diphenylamine (429 nm)

Example 215

3-(N-methyl)methanesulfonamido-2'-octanamido-4'-(2,4,6-triisopropylbenzenesulfonamido)diphenylamine (430 nm)

Example 216

3-Methanesulfonamido-2'-palmitamido-4'-(2,4,6-triisopropylbenzenesulfonamido)diphenylamine (429 nm)

Example 217

3-Methanesulfonamido-4-methyl-2'-palmitamido-4'-(2,4,6-triisopropylbenzenesulfonamido)diphenylamine (438 nm)

Example 218

3-Methanesulfonamido-4,6-dimethyl-2'-palmitamido-4'-(2,4,6-triisopropylbenzenesulfonamido)diphenylamine (433 nm)

Example 219

3-Methanesulfonamido-6-methoxy-2'-octanamido-4'-(2,4,6-triisopropylbenzenesulfonamido)diphenylamine (419 nm)

Example 220

3-Acetamido-2′-octanamido-4′-(2,4,6-triisopropylbenzenesulfonamido)diphenylamine (429 nm)

Example 221

4-[N-(β-methylsulfonamido)ethyl-N-ethyl]-amino-2-methyl-2′-octanamido-4′-(2,4,6-triisopropylbenzenesulfonamido)diphenylamine (641 nm)

Example 222

4-[N-(β-N-methylmethanesulfonamido)ethyl-N-ethyl]amino-2-methyl-2′-octanamido-4′-(2,4,6-triisopropylbenzenesulfonamido)diphenylamine (642 nm)

Example 223

3-(4-Dodecyloxybenzene)sulfonamido-4′-(2,4,6-triisopropylbenzenesulfonamido)diphenylamine (484 nm)

Example 224

3-(2,4-Ditert-pentylphenoxy)acetamido-4′-(2,4,6-triisopropylbenzenesulfonamido)diphenylamine (479 nm)

Example 225

4-Methoxy-2-methyl-2′-octanamido-4′-(2,4,6-triisopropylbenzenesulfonamido)diphenylamine (515 nm)

Example 226

4-Hexyloxy-2′-[α-dodecyl-α-(3-tertbutyl-4-acetoxyphenoxy)acetamido]-4′-(2,4,6-triisopropylbenzenesulfonamido)diphenylamine (505 nm)

Example 227

4-Hexyloxy-2′-[α-dodecyl-α-(3-tertbutyl-4-hydroxyphenoxy)acetamido]-4′-(2,4,6-triisopropylbenzenesulfonamido)diphenylamine (504 nm)

Example 228

2,4-Dimethoxy-2′-octanamido-4′-(2,4,6-triisopropylbenzenesulfonamido)diphenylamine (533 nm)

**Claims**

1. A color-forming dye precursor compound which is a diphenylamine, phenylnaphthylamine or an acid salt thereof comprising a first benzene ring attached by an —NH— group to a second benzene ring or a naphthalene nucleus wherein

(a) the first benzene ring has an electron donating group in a meta or para position,

(b) the second benzene ring or the naphthalene nucleus has a sulfonamido group in its para position,

(c) the compound is free of sulfonamido groups in each of its ortho positions, and

(d) is capable, in oxidized form, of forming a sulfonimide dye;

all ring positions being relative to the —NH— group.

2. A color-forming compound according to claim 1, represented by the formula:

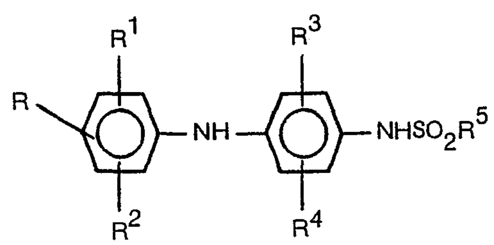

or an acid salt thereof

wherein:

R is in the meta or para position and is an electron donating substituent selected from

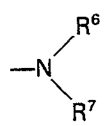

alkoxy containing 1 to 20 carbon atoms, aryloxy containing 6 to 20 carbon atoms, hydrazino, sulfonamido, ureido and carboxamido groups;

$R^1$ is in the ortho or meta positions and is hydrogen, alkyl containing 1 to 20 carbon atoms, carboxyamido, sulfonamido, carbamoyl, alkoxy containing 1 to 3 carbon atoms, alkylsulfonyl containing 1 to 5 carbon atoms, arylsulfonyl containing 6 to 12 carbon atoms, chlorine, bromine, iodine or fluorine; and when $R^1$ is sulfonamido, $R^1$ is in the meta position;

$R^2$ is in the ortho or meta position and is hydrogen, alkyl containing 1 to 3 carbon atoms, carbamoyl, alkoxy containing 1 to 3 carbon atoms, alkylsulfonyl containing 1 to 5 carbon atoms, arylsulfonyl containing 6 to 12 carbon atoms, chlorine, bromine, iodine or fluorine;

$R^3$ is hydrogen, alkyl containing 1 to 20 carbon atoms, including trihaloalkyl containing 1 to 3 carbon atoms, alkoxy containing 1 to 20 carbon atoms, an alkoxycarbonyl containing 1 to 20 carbon atoms, carboxy, carboxamido, chlorine, bromine, iodine, fluorine, carbamoyl, sulfonic acid, sulfamyl, alkylsulfonyl containing 1 to 5 carbon atoms, arylsulfonyl containing 6 to 20 carbon atoms, ureido or a carbocyclic group containing 6 to 12 carbon atoms;

$R^4$ is hydrogen, alkyl containing 1 to 20 carbon atoms, including trihaloalkyl containing 1 to 3 carbon atoms, alkoxy containing 1 to 20 carbon atoms, alkoxycarbonyl containing 1 to 20 carbon atoms, carboxy, carboxamido, chlorine, bromine, iodine, fluorine, carbamoyl, sulfonic acid, sulfamyl, alkylsulfonyl containing 1 to 5 carbon atoms, arylsulfonyl containing 6 to 20 carbon atoms, ureido, a carbocyclic group containing 6 to 12 carbon atoms or a fused in benzene ring;

$R^5$ is alkyl containing 1 to 20 carbon atoms or aryl containing 6 to 20 carbon atoms;

$R^6$ is hydrogen, alkyl containing 1 to 20 carbon atoms,

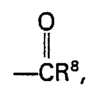

or aryl containing 6 to 20 carbon atoms or represents, with $R^7$, the atoms completing a 5- or 6-member heterocyclic group;

$R^7$ is hydrogen or alkyl containing 1 to 20 carbon atoms or represents, with $R^6$, the atoms completing a 5- or 6-member heterocyclic group;

$R^8$ is alkyl containing 1 to 20 carbon atoms; all alkyl, alkoxy, aryl and aryloxy groups being optionally substituted.

3. A color-forming compound according to claim 1 or 2 represented by the formula:

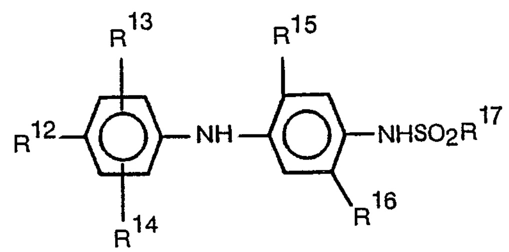

or an acid salt thereof

wherein:

$R^{12}$ is in the meta or para position and is an electron donating substituent selected from

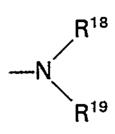

alkoxy containing 1 to 20 carbon atoms, aryloxy containing 6 to 12 carbon atoms, ureido and carboxamido groups;

$R^{13}$ is in the ortho or meta position and is hydrogen, alkyl containing 1 to 3 carbon atoms, carbamoyl, alkoxy containing 1 to 3 carbon atoms, alkylsulfonyl containing 1 to 5 carbon atoms, arylsulfonyl containing 6 to 12 carbon atoms, chlorine, bromine, iodine, fluorine or sulfonamido; when $R^{13}$ is sulfonamido, $R^{13}$ is in the meta position;

$R^{14}$ is hydrogen, alkyl containing 1 to 3 carbon atoms, carbamoyl, alkoxy containing 1 to 3 carbon atoms, alkylsulfonyl containing 1 to 3 carbon atoms, arylsulfonyl containing 6 to 12 carbon atoms, chlorine, bromine, iodine or fluorine;

$R^{15}$ is hydrogen or carboxamido;

$R^{16}$ is hydrogen or carboxamido;

$R^{17}$ is alkyl containing 1 to 20 carbon atoms or aryl containing 6 to 20 carbon atoms;

$R^{18}$ is hydrogen, or aryl containing 6 to 12 carbon atoms; and

$R^{19}$ is hydrogen or alkyl containing 1 to 20 carbon atoms; wherein when $R^{16}$ is carboxamido, then $R^{15}$ is carboxamido and wherein all alkyl, aryl, alkoxy and aryloxy groups are optionally substituted.

4. A color-forming para-sulfonamidodiphenylamine according to claim 3, represented by the formula:

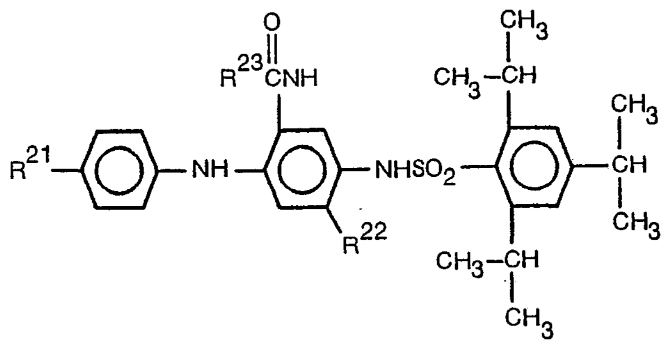

or an acid salt thereof
wherein:

$R^{21}$ is alkoxy containing 1 to 20 carbon atoms or 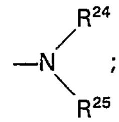 ;

$R^{22}$ is hydrogen or 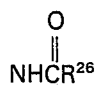 ;

$R^{23}$ is alkyl containing 1 to 20 carbon atoms, aryl containing 6 to 12 carbon atoms, alkoxy containing 1 to 4 carbon atoms, aryloxy containing 6 to 12 carbon atoms, or —$NHR^{27}$;

$R^{24}$ is hydrogen or alkyl containing 1 to 20 carbon atoms;

$R^{25}$ is hydrogen, alkyl containing 1 to 20 carbon atoms, or aryl containing 6 to 15 carbon atoms;

$R^{26}$ is alkyl containing 1 to 20 carbon atoms, cycloalkyl containing 5 to 20 carbon atoms, or aryl containing 6 to 12 carbon atoms, alkoxy containing 1 to 4 carbon atoms, aryloxy containing 6 to 12 carbon atoms or —$NHR^{28}$;

$R^{27}$ and $R^{28}$ are each alkyl containing 1 to 20 carbon atoms, aryl containing 6 to 12 carbon atoms, alkoxy containing 1 to 4 carbon atoms, or aryloxy containing 6 to 12 carbon atoms; and all alkyl, aryl, alkoxy and aryloxy groups are optionally substituted.

5. A color-forming para-sulfonamidodiphenylamine according to claim 1 2 or 3, represented by the formula:

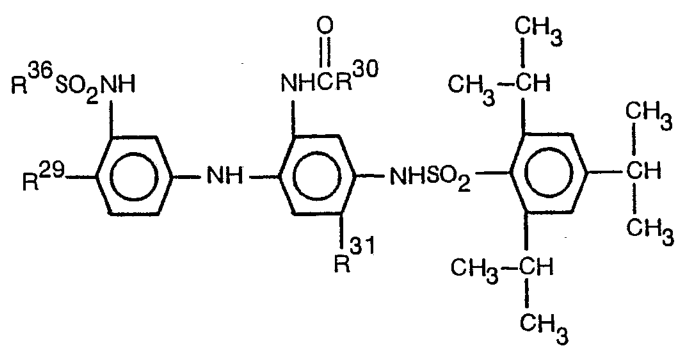

wherein:

$R^{29}$ is alkyl containing 1 to 20 carbon atoms, alkoxy containing 1 to 20 carbon atoms or

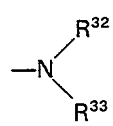 ;

$R^{30}$ is alkyl containing 1 to 20 carbon atoms, or aryl containing 6 to 12 carbon atoms;

$R^{31}$ is hydrogen or 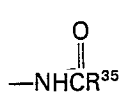 ;

$R^{32}$ is hydrogen or alkyl containing 1 to 20 carbon atoms;

$R^{33}$ is hydrogen, alkyl containing 1 to 20 carbon atoms, or aryl containing 6 to 12 carbon atoms;

$R^{35}$ is alkyl containing 1 to 20 carbon atoms, or aryl containing 6 to 12 carbon atoms; and

$R^{36}$ is alkyl containing 1 to 12 carbon atoms; all alkyl, aryl, alkoxy and aryloxy groups being optionally substituted.

6. A color-forming compound according to claims 2 or 3 represented by the formula:

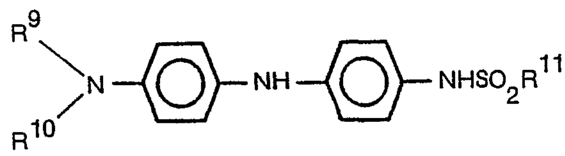

or an acid salt thereof
wherein:

$R^9$ is alkyl containing 1 to 20 carbon atoms;

$R^{10}$ is hydrogen or alkyl containing 1 to 20 carbon atoms; and

$R^{11}$ is alkaryl containing 7 to 20 carbon atoms; all alkyl groups being optionally substituted.

7. A color-forming compound according to claim 2 wherein $R^5$ is a 2,4,6-triisopropylphenyl group.

8. A color-forming compound according to claim 2 which is represented by one of the formulae:

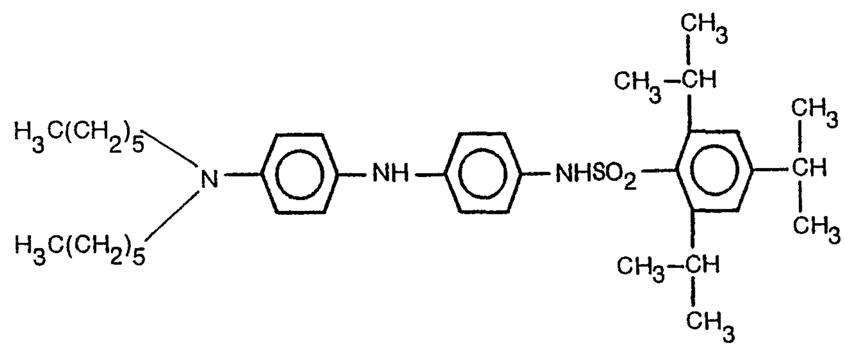

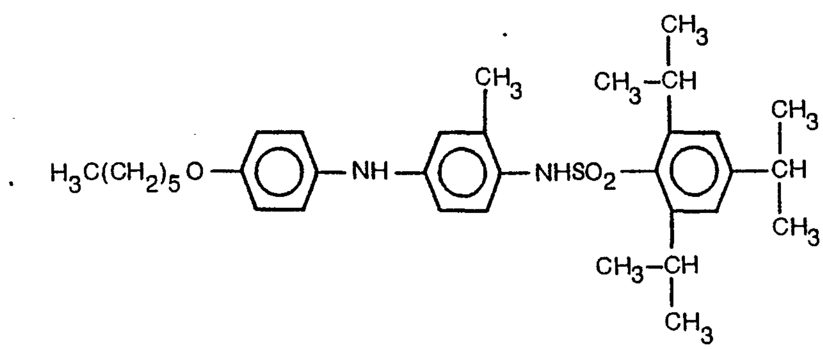

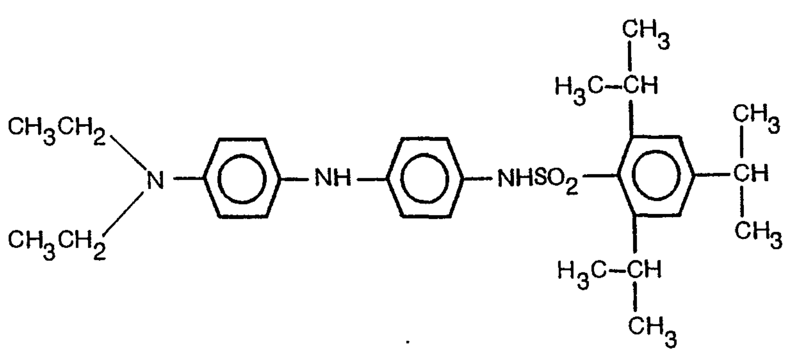

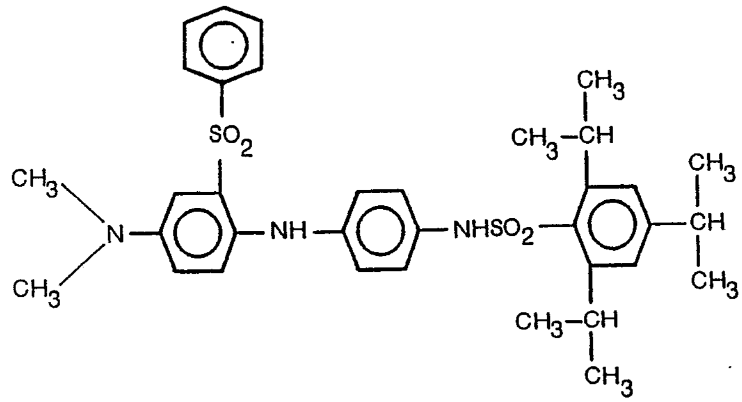

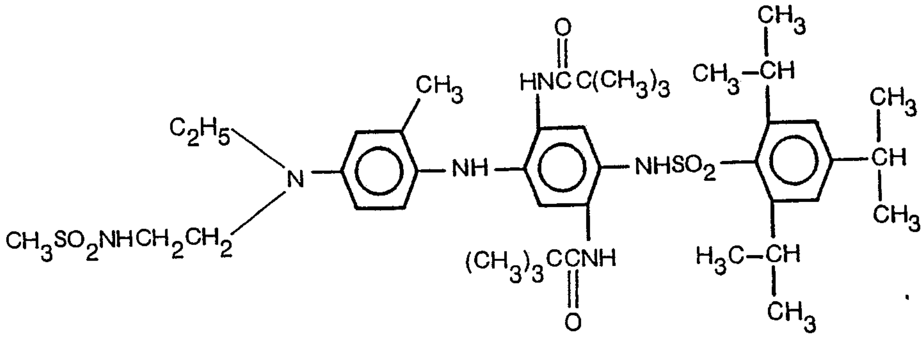

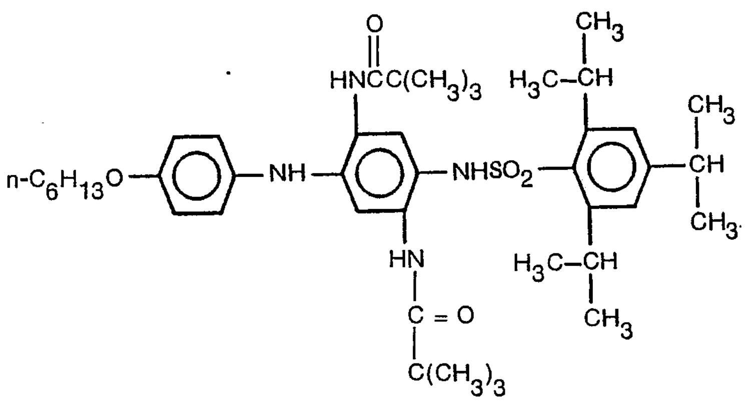

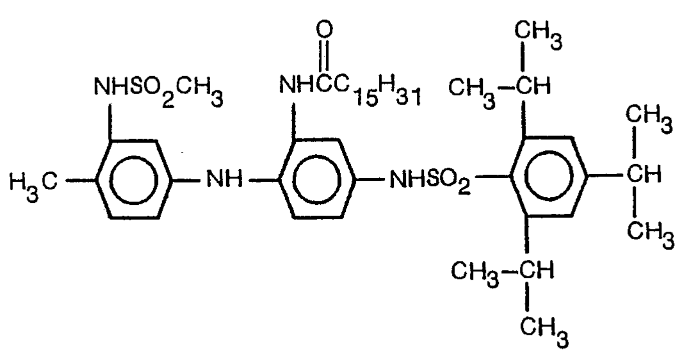

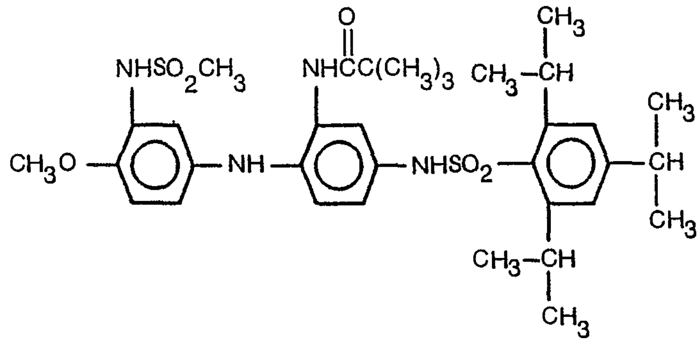

9. A photographic element comprising a support having thereon, in reactive association, in a binder
(a) photosensitive silver halide; and
(b) a color-forming dye precursor according to any of claims 1—8.

10. A photographic element according to claim 9, also comprising (c) a cross-oxidizing photographic silver halide developing agent.

11. A photographic element according to claim 9 or 10 wherein said binder comprises gelatine.

12. A photographic element according to claim 10 or 11 wherein the cross-oxidizing silver halide developing agent is a 3-pyrazolidone.

13. A sulfonimide dye which is a diphenylimine, or phenylnaphthylimine comprising a first benzene ring attached by an —N= group to a second benzene ring or a naphthalene nucleus in quinone form wherein:
(a) the first benzene ring has an electron donating group in a meta or para position,
(b) the second benzene ring or the naphthalene nuceleus has a sulfonimido group in its para position, and
(c) the dye is free of sulfonamido groups in each of its ortho positions,
all ring positions being relative to the —N= group.

14. A sulfonimide dye according to claim 13 represented by the formula:

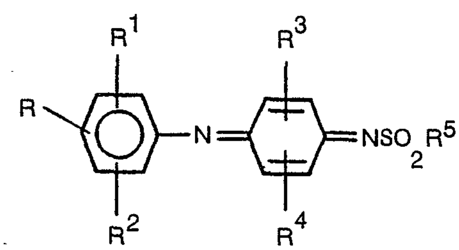

wherein
R, $R^1$, $R^2$, $R^3$ $R^4$ and $R^5$ have the meanings given in claim 2.

15. A sulfonimide dye according to claim 14 represented by the formula:

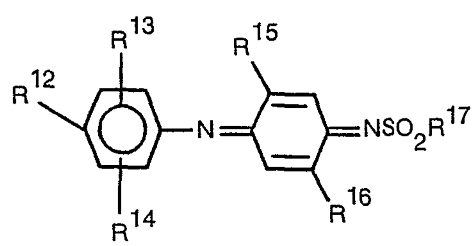

wherein:
$R^{12}$, $R^{13}$, $R^{14}$, $R^{15}$, $R^{16}$ and $R^{17}$ have the meanings given in claim 3.

16. A sulfonimide dye according to claim 15 represented by the structure:

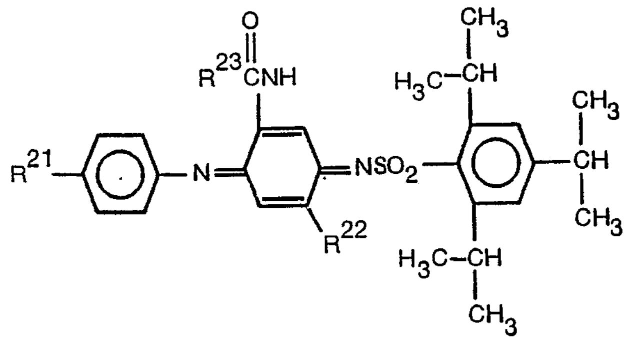

wherein:

$R^{21}$, $R^{22}$ and $R^{23}$ have the meanings given in claim 4.

17. A sulfonimide dye according to claim 13 represented by the formula:

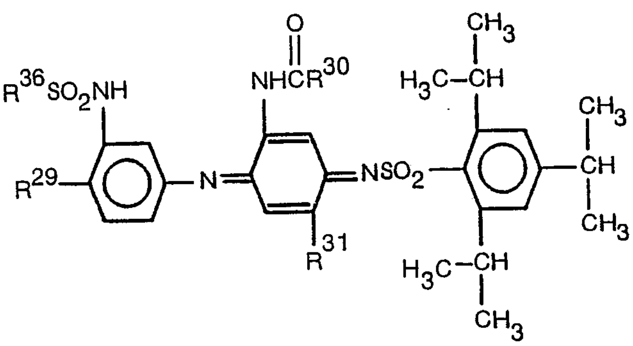

wherein:

$R^{29}$, $R^{30}$, $R^{31}$ and $R^{36}$ have the meanings given in claim 5.

18. A sulfonimide dye according to claim 14 represented by the formula:

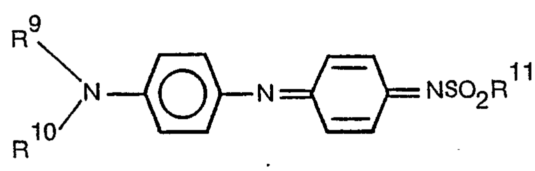

wherein:

$R^9$, $R^{10}$, and $R^{11}$ have the meanings given in claim 5.

19. A sulfonimide dye according to claim 14 wherein $R^5$ is a 2,4,6-triisopropylphenyl group.

20. The sulfonimide dye according to claim 13 which is represented by one of the formulae:

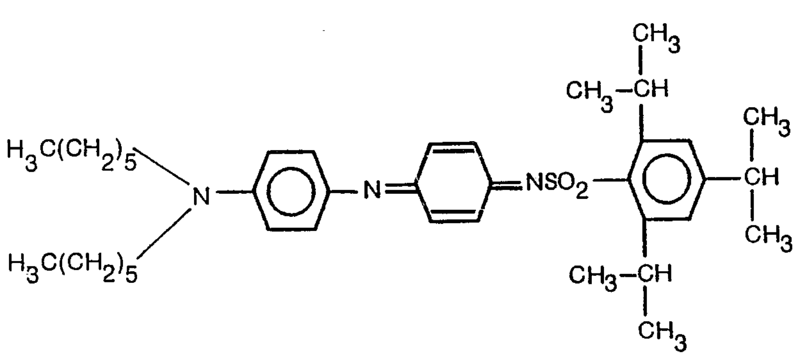

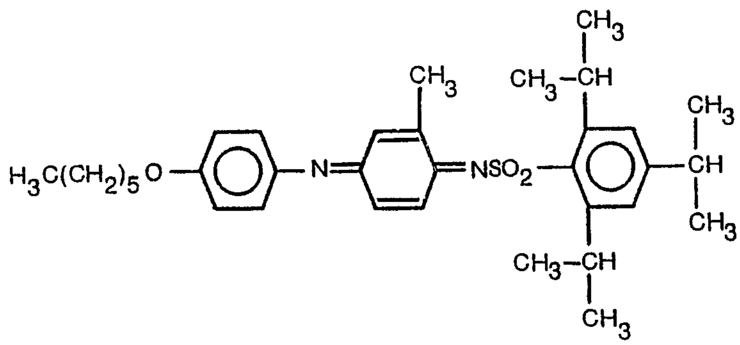

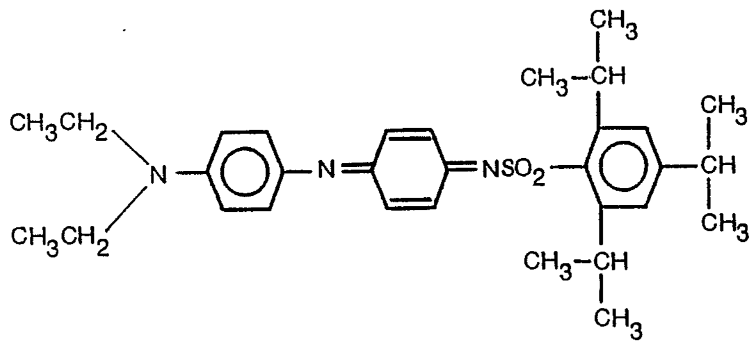

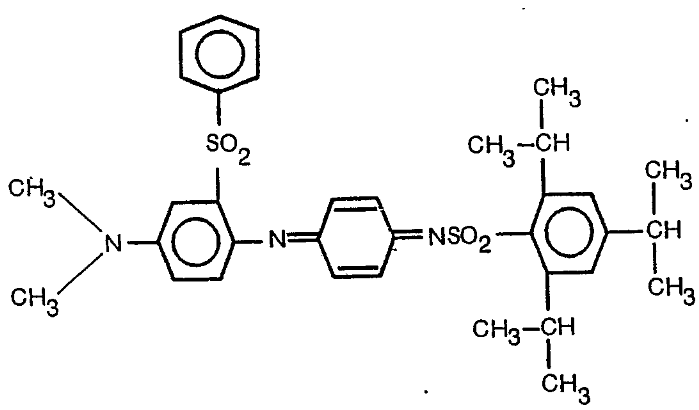

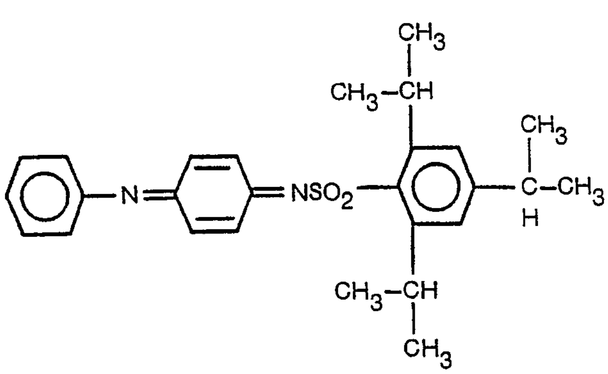

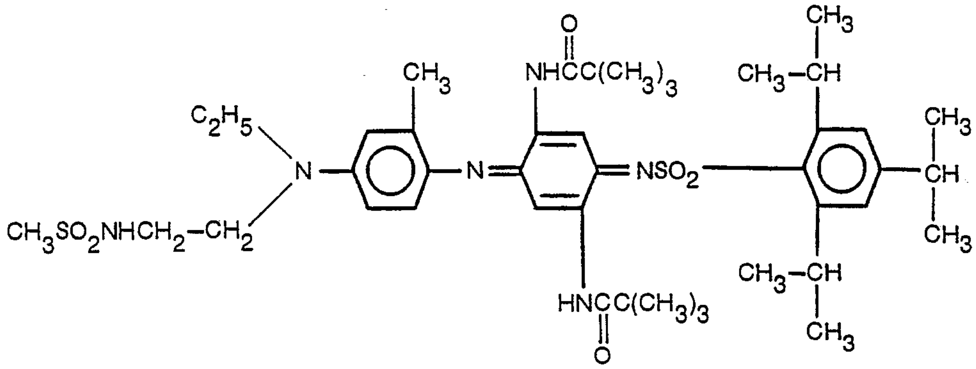

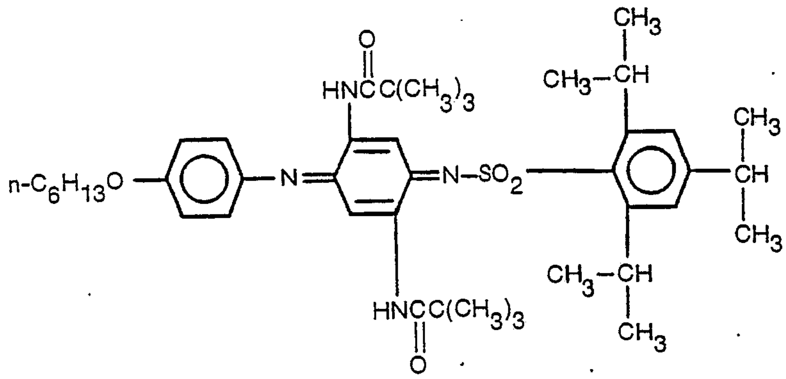

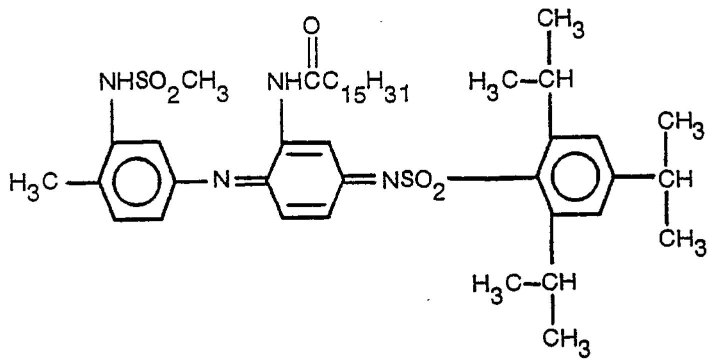

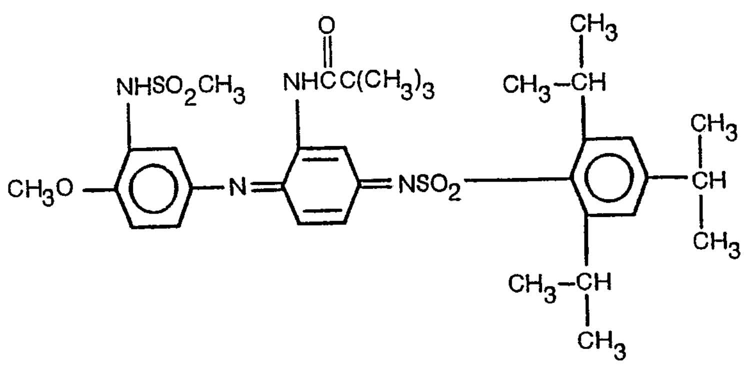

**Patentansprüche**

1. Farbbildende Farbstoffvorläuferverbindung, bestehend aus einem Diphenylamin, Phenylnaphthylamin oder einem Säuresalz hiervon, mit einem ersten Benzolring, der über eine —NH-Gruppe an einen zweiten Benzolring oder einen Naphthalinkern gebunden ist, wobei gilt, daß

(a) der erste Benzolring eine Elektronen abgebende Gruppe in einer meta- oder para-Stellung aufweist,

(b) der zweite Benzolring oder der Naphthalinkern eine Sulfonamidogruppe in seiner para-Stellung hat;

(c) die Verbindung in jeder ihrer ortho-Stellungen frei von Sulfonamidogruppen und

(d) in der Lage ist, in oxidierter Form einen Sulfonimidfarbstoff zu bilden,

und sämtliche Ring-Stellungen sich relativ zur —NH-Gruppe befinden.

2. Farbbildende Verbindung nach Anspruch 1, gekennzeichnet durch folgende Formel:

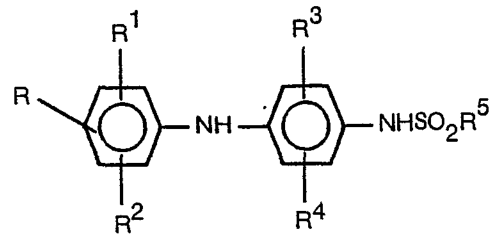

oder ein Säuresalz hiervon, in der bedeuten:

R Elektronen abgebenden Substituenten in der meta- oder para-Stellung, ausgewählt aus einem Rest der Formel

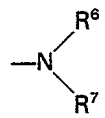

einer Alkoxygruppe mit 1 bis 20 C-Atomen, einer Aryloxygruppe mit 6 bis 20 C-Atomen, einer Hydrazino-, Sulfonamido-, Ureido- oder Carboxamidogruppe;

$R^1$ in ortho- oder meta-Stellung ein Wasserstoffatom, eine Alkylgruppe mit 1 bis 20 C-Atomen oder eine Carboxamido-, Sulfonamido-, Carbamoyl-, Alkoxy-mit 1 bis 3 C-Atomen, Alkylsulfonyl-mit 1 bis 5 C-Atomen oder Arylsulfonylgruppe mit 6 bis 12 C-Atomen oder ein Chlor-, Brom-, Jod oder Fluoratom, wobei sich $R^1$ in der meta-Stellung befindet, wenn $R^1$ eine Sulfonamidogruppe ist;

$R^2$ in ortho- oder meta-Stellung ein Wasserstoffatom, eine Alkylgruppe mit 1 bis 3 C-Atomen, eine Carbamoylgruppe, Alkoxygruppe mit 1 bis 3 C-Atomen, Alkylsulfonylgruppe mit 1 bis 5 C-Atomen, Arylsulfonylgruppe mit 6 bis 12 C-Atomen oder ein Chlor-, Brom-, Jod- oder Fluoratom;

$R^3$ ein Wasserstoffatom, eine Alkylgruppe mit 1 bis 20 C-Atomen, einschließlich eine Trihaloalkylgruppe mit 1 bis 3 C-Atomen, Alkoxygruppe mit 1 bis 20 C-Atomen, Alkoxycarbonylgruppe mit 1 bis 20 C-Atomen, Carboxy- oder Carboxamidogruppe, ein Chlor-, Brom-, Jod- oder Fluoratom oder eine Carbamoyl-, Sulfonsäure-, Sulfamyl- oder Alkylsulfonylgruppe mit 1 bis 5 C-Atomen oder eine Arylsulfonylgruppe mit 6 bis 20 C-Atomen oder eine Ureido- oder Carboxylgruppe mit 6 bis 12 C-Atomen;

$R^4$ ein Wasserstoffatom, eine Alkylgruppe mit 1 bis 20 C-Atomen, einschließlich eine Trihaloalkylgruppe mit 1 bis 3 C-Atomen, eine Alkoxygruppe mit 1 bis 20 C-Atomen, Alkoxycarbonylgruppe mit 1 bis 20 C-Atomen, eine Carboxy- oder Carboxamidogruppe, ein Chlor-, Brom-, Jod- oder Fluoratom, eine Carbamoyl-, Sulfonsäure-, Sulfamyl-, Alkylsulfonyl- mit 1 bis 5 C-Atomen, Arylsulfonyl- mit 6 bis 20 C-Atomen, Ureido- oder Carboxylgruppe mit 6 bis 12 C-Atomen oder ein ankondensierter Benzolring;

$R^5$ eine Alkylgruppe mit 1 bis 20 C-Atomen oder eine Arylgruppe mit 6 bis 20 C-Atomen;

$R^6$ ein Wasserstoffatom, eine Alkylgruppe mit 1 bis 20 C-Atomen, eine Gruppe der Formel

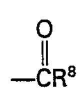

oder eine Arylgruppe mit 6 bis 20 C-Atomen oder mit $R^7$ die Atome, die zur Vervollständigung einer 5- oder 6-gliedrigen heterocyclischen Gruppe erforderlich sind;

$R^7$ ein Wasserstoffatom oder eine Alkylgruppe mit 1 bis 20 C-Atomen oder mit $R^6$ die zur Vervollständigung einer 5- oder 6-gliedrigen heterocyclischen Gruppe erforderlichen Atome;

$R^8$ eine Alkylgruppe mit 1 bis 20 C-Atomen.

wobei gilt, daß alle Alkyl-, Alkoxy-, Aryl- und Aryloxygruppen gegebenenfalls substituiert sein können.

3. Farbbildende Verbindung nach Anspruch 1 oder 2, gekennzeichnet durch folgende Formel:

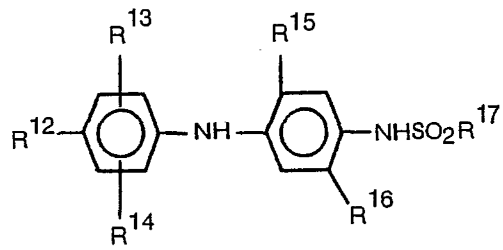

oder ein Säuresalz hiervon, worin bedeuten:

$R^{12}$ ein in meta- oder para-Stellung befindlicher, Elektronen abgebender Substituent, bestehend aus einem Rest der Formel:

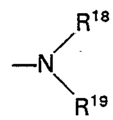

einer Alkoxygruppe mit 1 bis 20 C-Atomen, einer Aryloxygruppe mit 6 bis 12 C-Atomen oder einer Ureido- oder Carboxamidogruppe;

$R^{13}$ in ortho- oder meta-Stellung ein Wasserstoffatom, eine Alkylgruppe mit 1 bis 3 C-Atomen, eine Carbamoylgruppe, eine Alkoxygruppe mit 1 bis 3 C-Atomen, eine Alkylsulfonylgruppe mit 1 bis 5 C-Atomen, eine Arylsulfonylgruppe mit 6 bis 12 C-Atomen, ein Chlor-, Brom-, Jod- oder Fluoratom oder eine Sulfonamidogruppe, wobei gilt, daß, wenn $R^{13}$ eine Sulfonamidogruppe darstellt, $R^{13}$ sich in der meta-Stellung befindet;

$R^{14}$ ein Wasserstoffatom, eine Alkylgruppe mit 1 bis 3 C-Atomen, eine Carbamoylgruppe, eine Alkoxygruppe mit 1 bis 3 C-Atomen, eine Alkylsulfonylgruppe mit 1 bis 3 C-Atomen, eine Arylsulfonylgruppe mit 6 bis 12 C-Atomen oder ein Chlor-, Brom-, Jod- oder Fluoratom;

$R^{15}$ ein Wasserstoffatom oder eine Carboxamidogruppe;

$R^{16}$ eine Wasserstoffatom oder eine Carboxyamidogruppe;

$R^{17}$ eine Alkylgruppe mit 1 bis 20 C-Atomen oder eine Arylgruppe mit 6 bis 20 C-Atomen;

$R^{18}$ ein Wasserstoffatom oder eine Arylgruppe mit 6 bis 12 C-Atomen;

$R^{19}$ ein Wasserstoffatom oder eine Alkylgruppe mit 1 bis 20 C-Atomen,

wobei gilt, daß, wenn $R^{16}$ eine Carboxamidogruppe ist, $R^{15}$ eine Carboxamidogruppe darstellt, und wobei ferner gilt, daß alle Alkyl-, Aryl-, Alkoxy- und Aryloxygruppen gegebenenfalls substituiert sein können.

4. Farbbildendes para-Sulfonamidodiphenylamin nach Anspruch 3, gekennzeichnet durch folgende Formel:

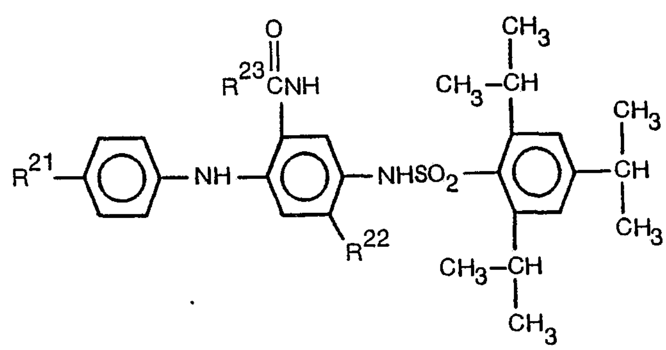

oder ein Säuresalz hiervon, worin bedeuten:

$R^{21}$ eine Alkoxygruppe mit 1 bis 20 C-Atomen oder ein Rest der Formel 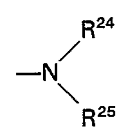

$R^{22}$ ein Wasserstoffatom oder eine Gruppe der Formel: 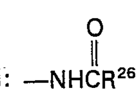 ;

$R^{23}$ eine Alkylgruppe mit 1 bis 20 C-Atomen, Arylgruppe mit 6 bis 12 C-Atomen, Alkoxygruppe mit 1 bis 4 C-Atomen, Aryloxygruppe mit 6 bis 12 C-Atomen oder ein Rest der Formel —$NHR^{27}$;

$R^{24}$ ein Wasserstoffatom oder eine Alkylgruppe mit 1 bis 20 C-Atomen;

$R^{25}$ ein Wasserstoffatom, eine Alkylgruppe mit 1 bis 20 C-Atomen oder eine Arylgruppe mit 6 bis 15 C-Atomen;

$R^{26}$ eine Alkylgruppe mit 1 bis 20 C-Atomen, Cycloalkylgruppe mit 5 bis 20 C-Atomen, Arylgruppe mit 6 bis 12 C-Atomen, Alkoxygruppe mit 1 bis 4 C-Atomen, Aryloxygruppe mit 6 bis 12 C-Atomen oder ein Rest der Formel $-NHR^{28}$;

$R^{27}$ und $R^{28}$ jeweils eine Alkylgruppe mit 1 bis 20 C-Atomen, Arylgruppe mit 6 bis 12 C-Atomen, Alkoxygruppe mit 1 bis 4 C-Atomen oder Aryloxygruppe mit 6 bis 12 C-Atomen,

wobei gilt, daß alle Alkyl-, Aryl-, Alkoxy- und Aryloxygruppen gegebenenfalls substituiert sein können.

5. Farbbildendes para-Sulfonamidodiphenylamin nach Anspruch 1, 2 oder 3, gekennzeichnet durch die folgende Formel:

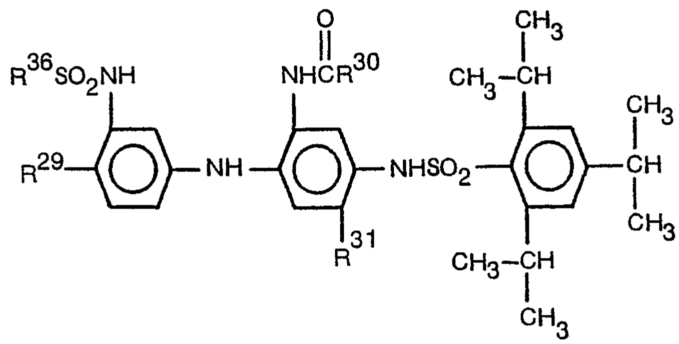

in der bedeuten:

$R^{29}$ eine Alkylgruppe mit 1 bis 20 C-Atomen, Alkoxygruppe mit 1 bis 20 C-Atomen oder eine Gruppe der Formel:

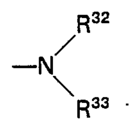

$R^{30}$ eine Alkylgruppe mit 1 bis 20 C-Atomen oder Arylgruppe mit 6 bis 12 C-Atomen;

$R^{31}$ ein Wasserstoffatom oder eine Gruppe der Formel:

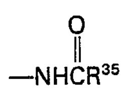 ;

$R^{32}$ ein Wasserstoffatom oder eine Alkylgruppe mit 1 bis 20 C-Atomen;

$R^{33}$ ein Wasserstoffatom, eine Alkylgruppe mit 1 bis 20 C-Atomen oder eine Arylgruppe mit 6 bis 12 C-Atomen;

$R^{35}$ eine Alkylgruppe mit 1 bis 20 C-Atomen oder eine Arylgruppe mit 6 bis 12 C-Atomen und

$R^{36}$ eine Alkylgruppe mit 1 bis 12 C-Atomen,

wobei gilt, daß alle Alkyl-, Aryl-, Alkoxy- und Aryloxygruppen gegebenenfalls substituiert sein können.

6. Farbbildende Verbindung nach Anspruch 2 oder 3, gekennzeichnet durch folgende Formel:

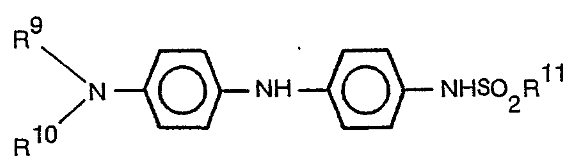

oder ein Säuresalz hiervon, worin bedeuten:

$R^9$ eine Alkylgruppe mit 1 bis 20 C-Atomen;

$R^{10}$ ein Wasserstoffatom oder eine Alkylgruppe mit 1 bis 20 C-Atomen und

$R^{11}$ eine Alkarylgruppe mit 7 bis 20 C-Atomen,

wobei gilt, daß alle Alkylgruppe gegebenenfalls substituiert sein können.

7. Farbbildende Verbindung nach Anspruch 2, dadurch gekennzeichnet, daß $R^5$ eine 2,4,6-Triisopropylphenylgruppe darstellt.

8. Farbbildende Verbindung nach Anspruch 2, gekennzeichnet durch eine der folgenden Formeln:

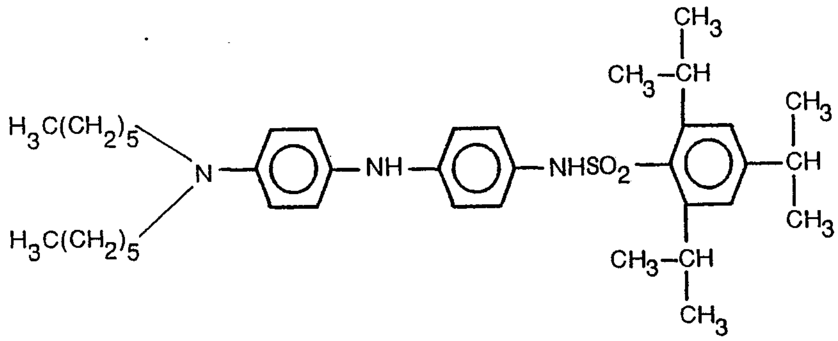

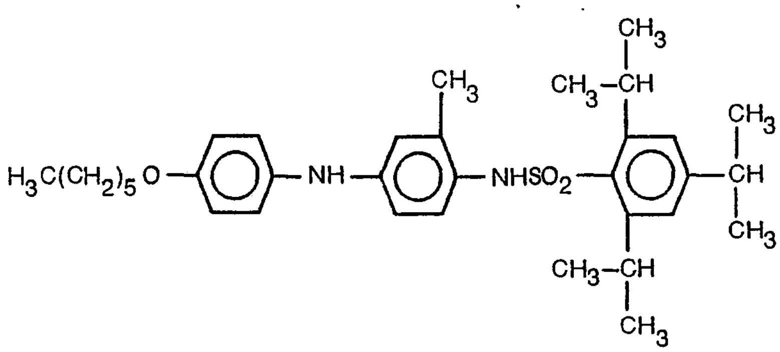

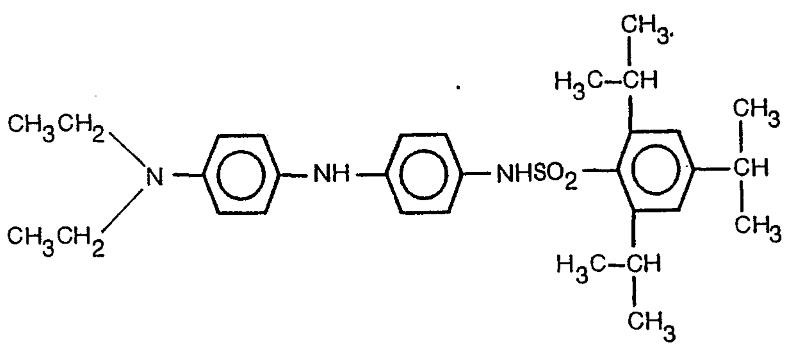

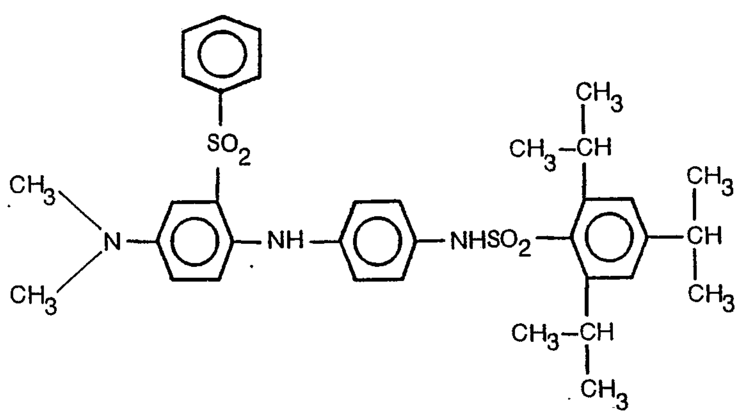

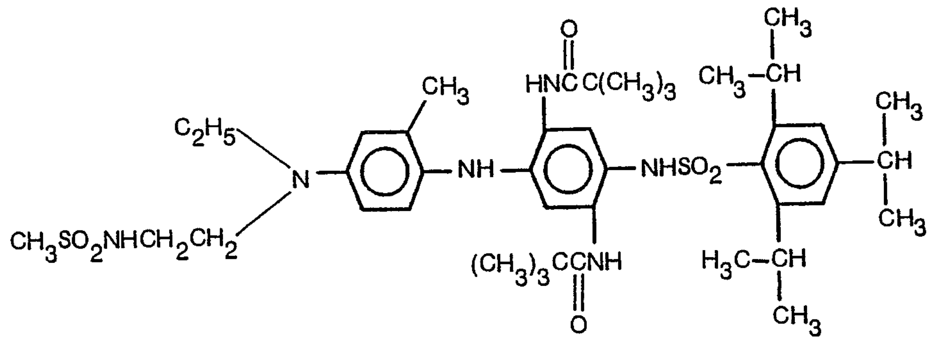

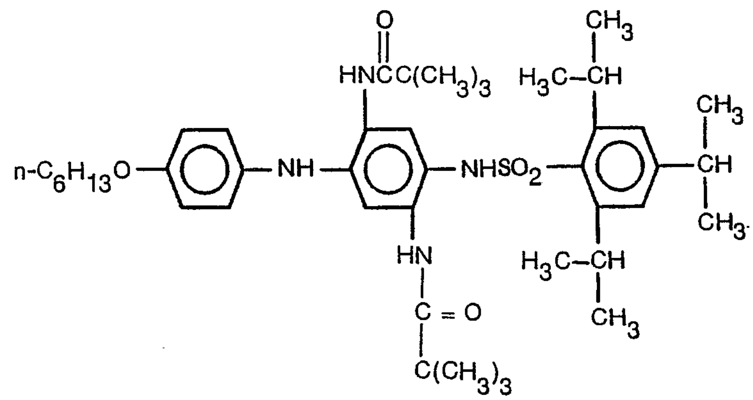

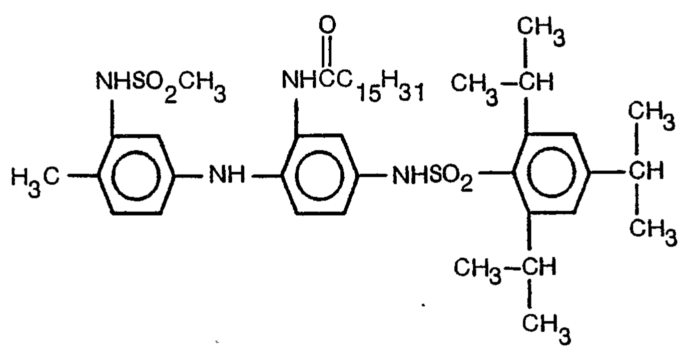

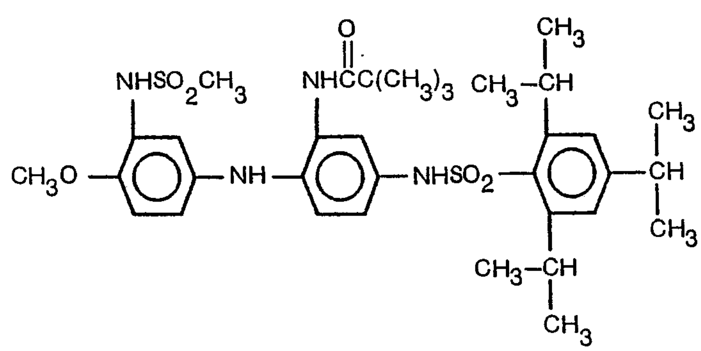

9. Photographisches Element mit einem Träger, auf dem in reaktionsfähiger Vereinigung in einem Bindemittel aufgetragen sind:

(a) photosensitives Silberhalogenid und

(b) eine farbbildende Farbstoffvorläuferverbindung nach einem der Ansprüche 1—8.

10. Photographisches Element nach Anspruch 9, dadurch gekennzeichnet, daß es ferner (c) eine über Kreuz oxidierende photographische Silberhalogenid-Entwicklerverbindung enthält.

11. Photographisches Element nach Anspruch 9 oder 10, dadurch gekennzeichnet, daß das Bindemittel Gelatine enthält oder aus diesem besteht.

12. Photographisches Element nach Anspruch 10 oder 11, dadurch gekennzeichnet, daß die über Kreuz oxidierende Silberhalogenid-Entwicklerverbindung ein 3-Pyrazolidon ist.

13. Aus einem Diphenylimin oder Phenylnaphthylimin bestehender Sulfonimidfarbstoff mit einem ersten Benzolring, der durch eine —N= Gruppe an einen zweiten Benzolring oder einen Naphthalinkern in Chinonform gebunden ist, in dem:

(a) der erste Benzolring eine Elektronen abgebende Gruppe in meta- oder para-Stellung aufweist,

(b) der zweite Benzolring oder der Naphthalinkern eine Sulfonimidogruppe in seiner para-Stellung hat, und

(c) der Farbstoff in jeder seiner ortho-Stellungen frei von Sulfonamidogruppen ist,

wobei sich sämtliche Ring-Stellungen relativ zur —N= Gruppe befinden.

14. Sulfonimidfarbstoff nach Anspruch 13, gekennzeichnet durch folgende Formel:

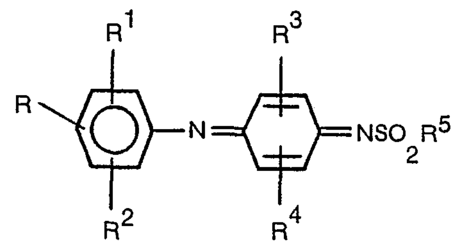

in der R, $R^1$, $R^2$, $R^3$, $R^4$ und $R^5$ die in Anspruch 2 angegebene Bedeutung haben.

15. Sulfonimidfarbstoff nach Anspruch 14, gekennzeichnet durch die Formel:

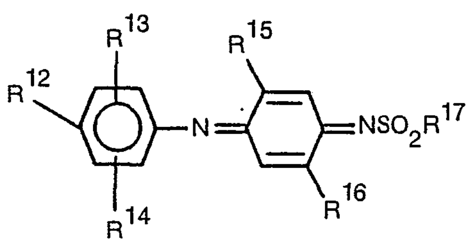

in der $R^{12}$, $R^{13}$, $R^{14}$, $R^{15}$, $R^{16}$ und $R^{17}$ die in Anspruch 3 angegebene Bedeutung haben.

16. Sulfonimidfarbstoff nach Anspruch 15, gekennzeichnet durch die folgende Formel:

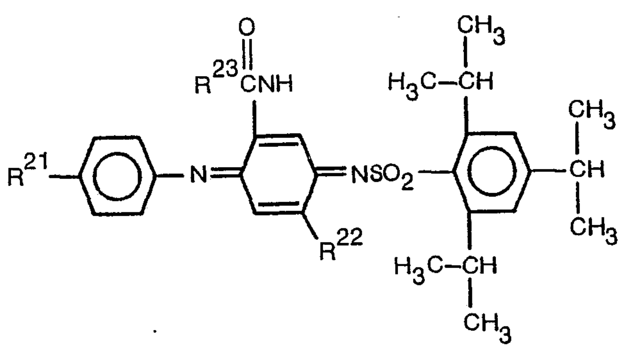

in der $R^{21}$, $R^{22}$ und $R^{23}$ die in Anspruch 4 angegebene Bedeutung haben.

17. Sulfonimidfarbstoff nach Anspruch 13, gekennzeichnet durch die Formel:

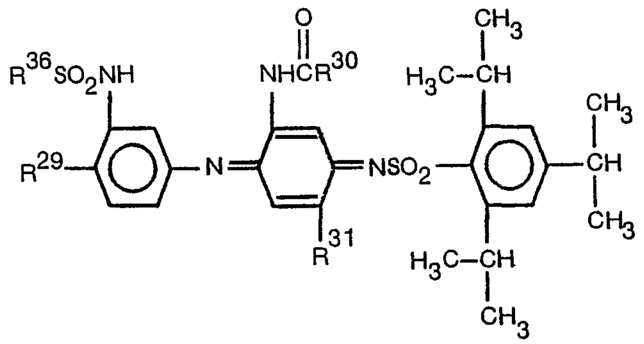

in der $R^{29}$, $R^{30}$, $R^{31}$ und $R^{36}$ die in Anspruch 5 angegebene Bedeutung haben.

18. Sulfonimidfarbstoff nach Anspruch 14, gekennzeichnet durch die Formel:

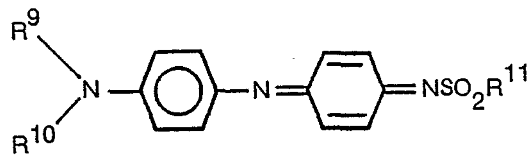

in der $R^9$, $R^{10}$ und $R^{11}$ die in Anspruch 5 angegebene Bedeutung haben.

19. Sulfonimidfarbstoff nach Anspruch 14, dadurch gekennzeichnet, daß $R^5$ eine 2,4,6-Triisopropylphenylgruppe ist.

20. Sulfonimidfarbstoff nach Anspruch 13, gekennzeichnet durch eine der Formeln:

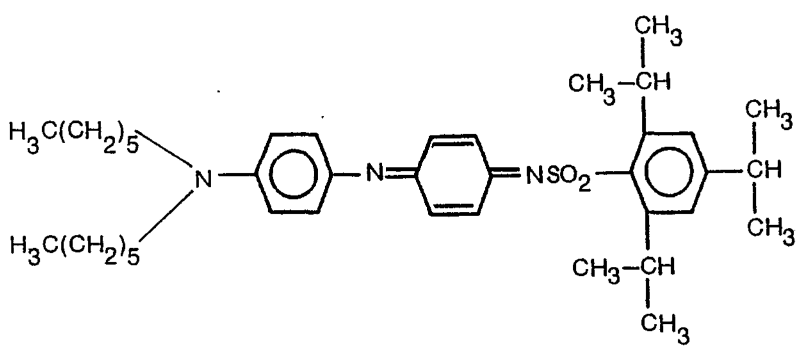

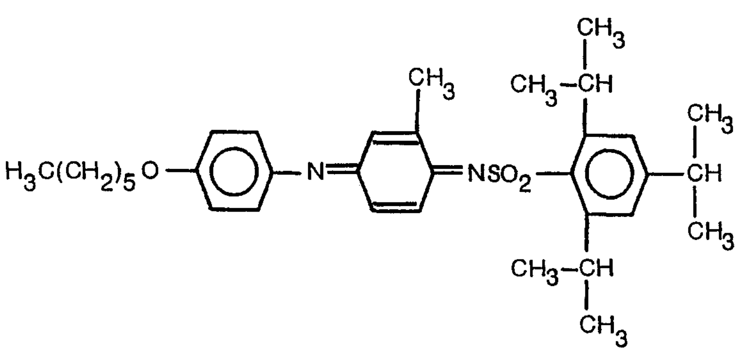

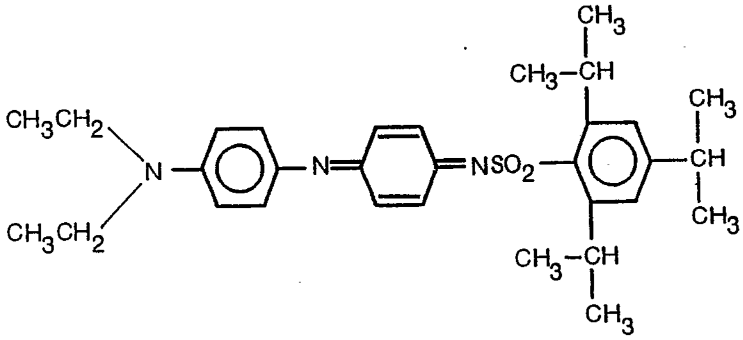

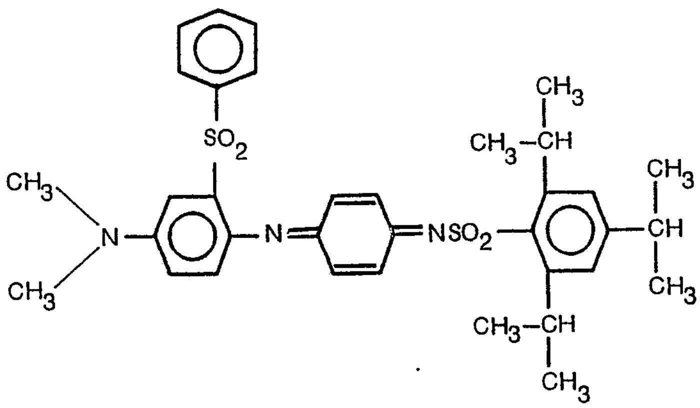

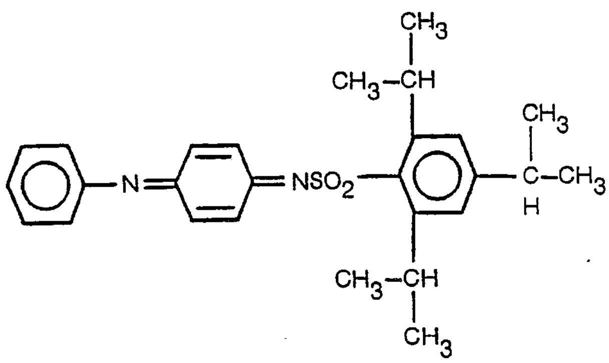

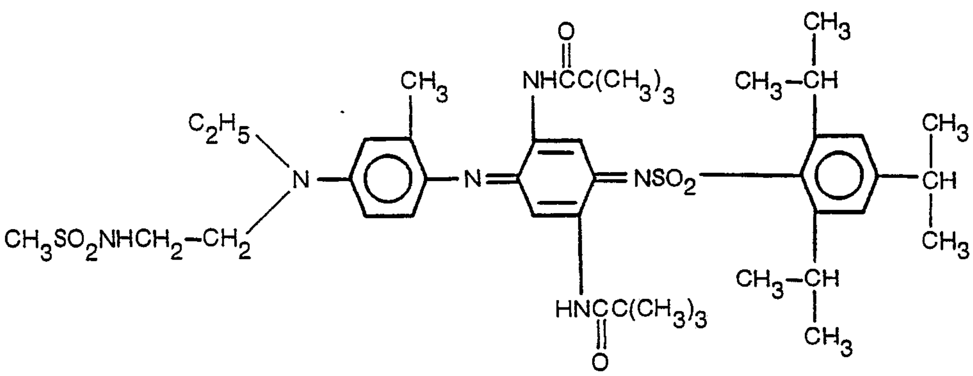

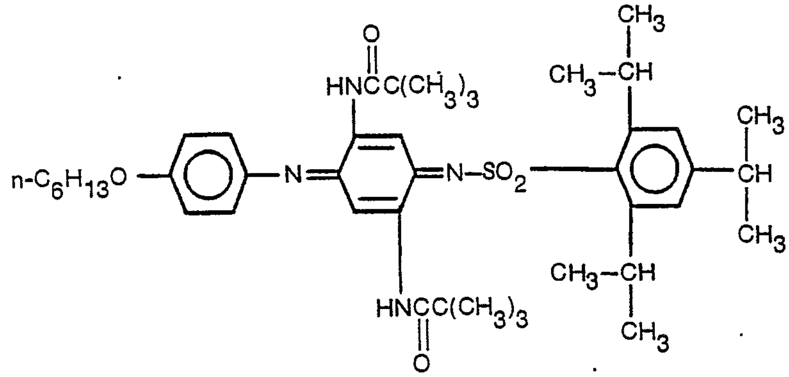

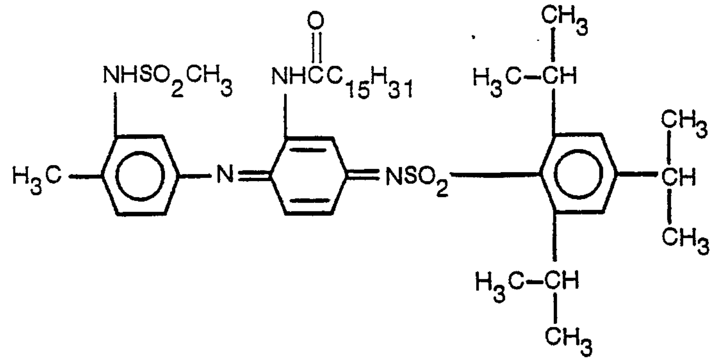

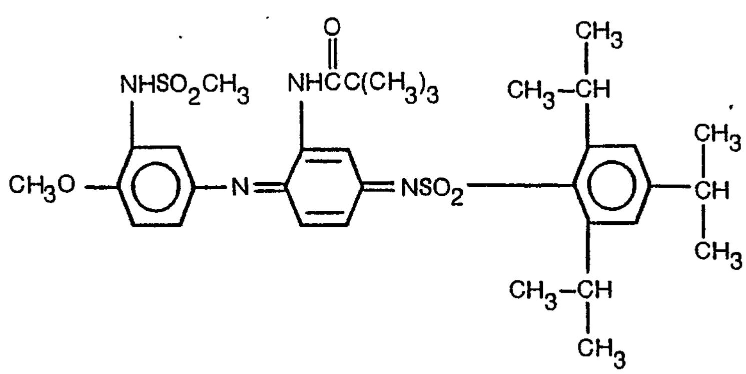

## Revendications

1. Composé chromogène précurseur de colorant de la classe des diphénylamines, phénylnaphtylamines, ou des sels d'acide de ces dernières, comprenant un premier cycle benzénique relié à un second cycle benzénique ou à un noyau naphtalénique par un groupe —NH—, dans lequel:

a) le premier cycle benzénique a un groupe donneur d'électron en position méta ou para,

b) le second cycle benzénique ou le noyau naphtalénique a un groupe sulfonamido en position para,

c) le composé est exempt de groupe sulfonamido sur toutes ses positions ortho, et

d) peut, sous sa forme oxydée, former un colorant sulfonimide;

toutes les positions sur les cycles étant définies par rapport au groupe —NH—.

2. Composé chromogène conforme à la revendication 1, représenté par la formule:

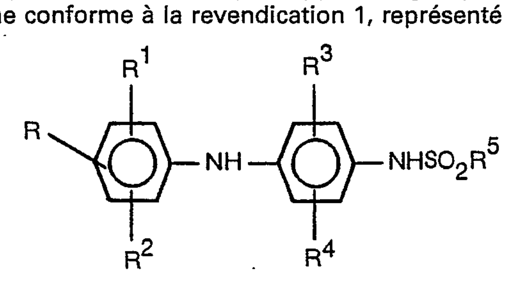

ou un sel d'acide de ce composé,
dans laquelle:

R est en position méta ou para et est un substituant donneur d'électron choisi parmi les groupes

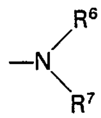

alkoxy de 1 à 20 atomes de carbone, aryloxy de 6 à 20 atomes de carbone, hydrazino, sulfonamido, ureido, et carboxamido;

$R^1$ est en position ortho ou méta et est un atome d'hydrogène, un groupe alkyle de 1 à 20 atomes de carbone, carboxamido, sulfonamido, carbamoyl, alkoxy de 1 à 3 atomes de carbone, alkylsulfonyle de 1 à 5 atomes de carbone, arylsulfonyle de 6 à 12 atomes de carbone, un atome de chlore, de brome, d'iode ou de fluor; et quand $R^1$ est un groupe sulfonamido, il est en position méta;

$R^2$ est en position ortho ou méta, et est un atome d'hydrogène, un groupe alkyle de 1 à 3 atomes de carbone, carbamoyle, alkoxy de 1 à 3 atomes de carbone, alkylsulfonyle de 1 à 5 atomes de carbone, arylsulfonyle de 6 à 12 atomes de carbone, un atome de chlore, de brome, d'iode ou de fluor;

$R^3$ est un atome d'hydrogène, un groupe alkyle de 1 à 20 atomes de carbone, y compris trihalogénoalkyle de 1 à 3 atomes de carbone, alkoxy de 1 à 20 atomes de carbone, alkoxycarbonyle de 1 à 20 atomes de carbone, carboxy, carboxamido, un atome de chlore, de brome, d'iode ou de fluor, un groupe carbamoyle, acide sulfonique, sulfamyle, alkylsulfonyle de 1 à 5 atomes de carbone, arylsulfonyle de 6 à 20 atomes de carbone, ureïdo ou carbocyclique de 6 à 12 atomes de carbone;

$R^4$ est un atome d'hydrogène, un groupe alkyle de 1 à 20 atomes de carbone, y compris un groupe trihalogénoalkyle de 1 à 3 atomes de carbone, alkoxy de 1 à 20 atomes de carbone, alkoxycarbonyle de 1 à 20 atomes de carbone, carboxy, carboxamido, un atome de chlore, de brome, d'iode, de fluor, un groupe carbamoyle, acide sulfonique, sulfamyle, alkylsulfonyle de 1 à 5 atomes de carbne, arylsulfonyle de 6 à 20 atomes de carbone, uréïdo, carbocyclique de 6 à 12 atomes de carbone, ou un cycle benzénique condensé;

$R^5$ est un groupe alkyle de 1 à 20 atomes de carbone ou un groupe aryle de 6 à 20 atomes de carbone;

$R^6$ est un atome d'hydrogène, un groupe alkyle de 1 à 20 atomes de carbone, un groupe

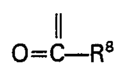

ou un groupe aryle de 6 à 20 atomes de carbone, ou représente, avec $R^7$, les atomes nécessaires pour compléter un groupe hétérocyclique à 5 ou 6 chaînons;

$R^7$ est un atome d'hydrogène ou un groupe alkyle de 1 à 20 atomes de carbone, ou représente, avec $R^6$, les atomes nécessaires pour compléter un groupe hétérocyclique à 5 ou 6 chaînons;

$R^8$ est un groupe alkyle de 1 à 20 atomes de carbone; tous les groupes alkyle, alkoxy, aryle et aryloxy étant éventuellement substitués.

3. Composé chromogène conforme aux revendications 1 ou 2, représenté par la formule:

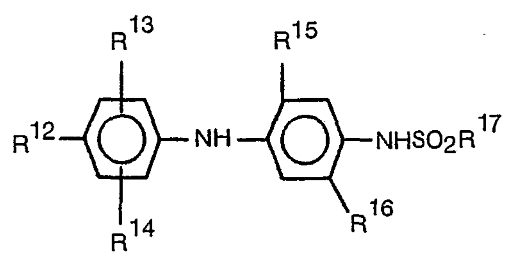

ou un sel d'acide de ce composé,
dans laquelle:

$R^{12}$ est en position méta ou para et est un substituant donneur d'électron choisi parmi les groupes

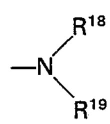

alkoxy de 1 à 20 atomes de carbone, aryloxy de 6 à 12 atomes de carbone, uréïdo et carboxamido;

$R^{13}$ est en position ortho ou méta et est un atome d'hydrogène, un groupe alkyle de 1 à 3 atomes de carbone, carbamoyle, alkoxy de 1 à 3 atomes de carbone, alkylsulfonyle de 1 à 5 atomes de carbone, arylsulfonyle de 6 à 12 atomes de carbone, un atome de chlore, de brome, d'iode, de fluor ou un groupe sulfonamido; quand $R^{13}$ est un groupe sulfonamido, il est en position méta;

$R^{14}$ est un atome d'hydrogène, un groupe alkyle de 1 à 3 atomes de carbone, carbamoyle, alkoxy de 1 à 3 atomes de carbone, alkylsulfonyle de 1 à 3 atomes de carbone, arylsulfonyle de 6 à 12 atomes de carbone, un atome de chlore, de brome, d'iode ou de fluor;

$R^{15}$ est un atome d'hydrogène ou un groupe carboxamido;

$R^{16}$ est un atome d'hydrogène ou un groupe carboxamido;

$R^{17}$ est un groupe alkyle de 1 à 20 atomes de carbone ou un groupe aryle de 6 à 20 atomes de carbone;

$R^{18}$ est un atome d'hydrogène, ou un groupe aryle de 6 à 12 atomes de carbone;

$R^{19}$ est un atome d'hydrogène, ou un groupe alkyle de 1 à 20 atomes de carbone;

quand $R^{16}$ est un groupe carboxamido, $R^{15}$ est un groupe carboxamido, et tous les groupes alkyle, aryle, alkoxy et aryloxy sont éventuellement substitués.

4. Para-sulfonamidodiphénylamine chromogène conforme à la revendication 3, représenté par la formule:

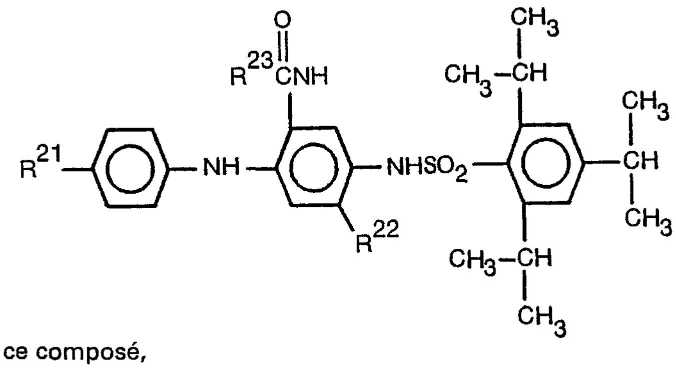

ou un sel d'acide de ce composé,

dans laquelle:

$R^{21}$ est un groupe alkoxy de 1 à 20 atomes de carbone, ou un groupe 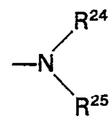

$R^{22}$ est un atome d'hydrogène ou un groupe 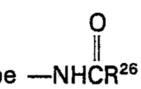 ;

$R^{23}$ est un groupe alkyle de 1 à 20 atomes de carbone, aryle de 6 à 12 atomes de carbone, alkoxy de 1 à 4 atomes de carbone, aryloxy de 6 à 12 atomes de carbone ou $—NHR^{27}$;

$R^{24}$ est un atome d'hydrogène ou un groupe alkyle de 1 à 20 atomes de carbone;

$R^{25}$ est un atome d'hydrogène, un groupe alkyle de 1 à 20 atomes de cabrone, ou aryle de 6 à 15 atomes de carbone;

$R^{26}$ est un groupe alkyle de 1 à 20 atomes de carbone, cycloalkyle de 5 à 20 atomes de carbone, aryle de 6 à 12 atomes de carbone, alkoxy de 1 à 4 atomes de carbone, aryloxy de 6 à 12 atomes de carbone, ou $—NHR^{28}$;

$R^{27}$ et $R^{28}$ sont chacun un groupe alkyle de 1 à 20 atomes de carbone, aryle de 6 à 12 atomes de carbone, alkoxy de 1 à 4 atomes de carbone, ou aryloxy de 6 à 12 atomes de carbone;

tous les groupes alkyle, aryle, alkoxy et aryloxy sont éventuellement substitués.

5. Para-sulfonamidodiphénylamine chromogène conforme aux revendications 1, 2 ou 3, représenté par la formule:

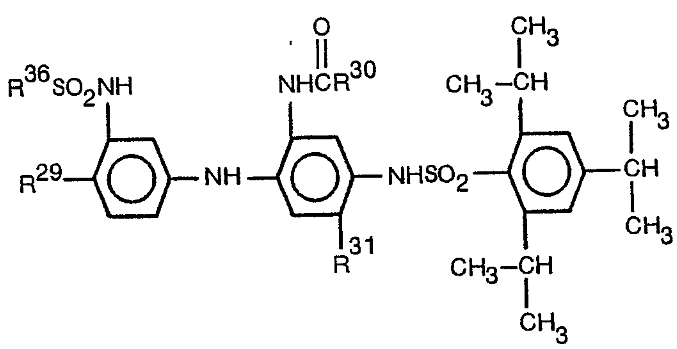

dans laquelle:

$R^{29}$ est un groupe alkyle de 1 à 20 atomes de carbone, alkoxy de 1 à 20 atomes de carbone ou

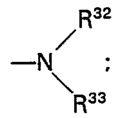 ;

$R^{30}$ est un groupe alkyle de 1 à 20 atomes de carbone, ou aryle de 6 à 12 atomes de carbone;

$R^{31}$ est un atome d'hydrogène ou un groupe: 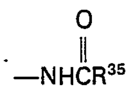 ;

$R^{32}$ est un atome d'hydrogène ou un groupe alkyle de 1 à 20 atomes de carbone;

$R^{33}$ est un atome d'hydrogène, un groupe alkyle de 1 à 20 atomes de carbone, ou aryle de 6 à 12 atomes de carbone;

$R^{35}$ est un groupe alkyle de 1 à 20 atomes de carbone, ou aryle de 6 à 12 atomes de carbone;

$R^{36}$ est un groupe alkyle de 1 à 12 atomes de carbone;

tous les groupes alkyle, aryle, alkoxy et aryloxy étant éventuellement substitués.

6. Composé chromogène conforme aux revendications 2 ou 3, représenté par la formule:

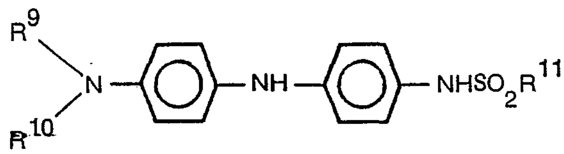

ou un sel d'acide de ce composé,
dans laquelle:

$R^9$ est un groupe alkyle de 1 à 20 atomes de carbone;

$R^{10}$ est un atome d'hydrogène ou un groupe alkyle de 1 à 20 atomes de carbone;

$R^{11}$ est un groupe alkaryle de 7 à 20 atomes de carbone;

tous les groupes alkyle étant éventuellement substitués.

7. Composé chromogène conforme à la revendication 2, dans lequel $R^5$ est un groupe 2,4,6-tri-isopropylphényle.

8. Composé chromogène conforme à la revendication 2, représenté par l'une des formules:

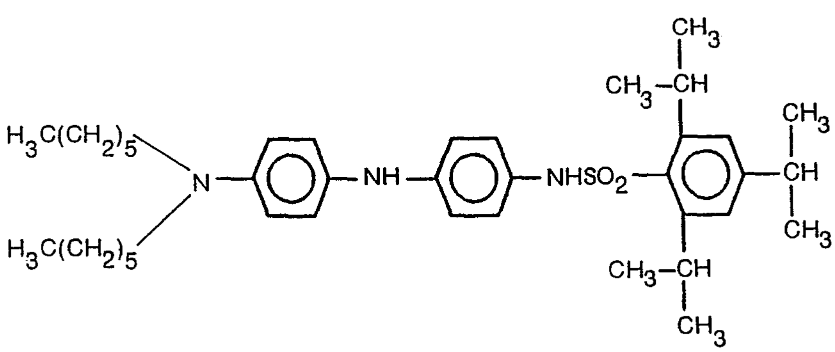

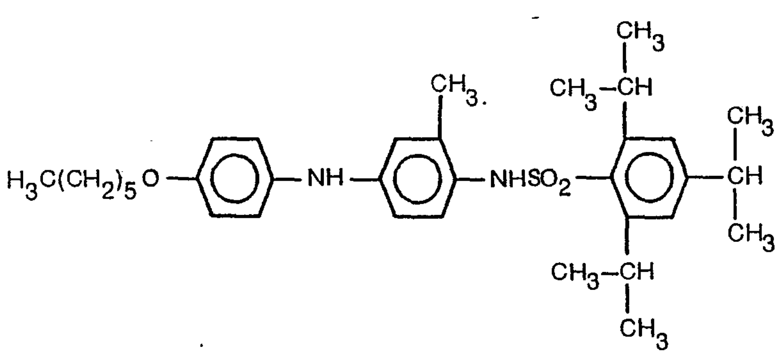

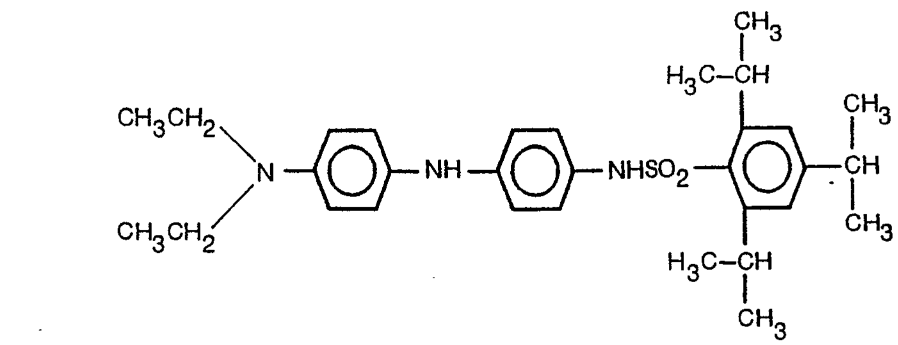

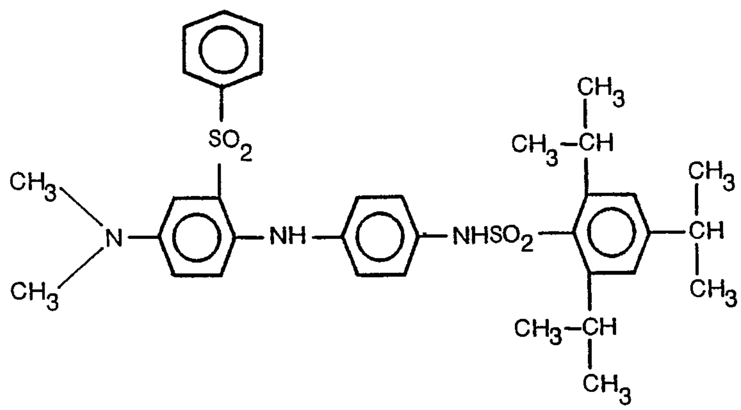

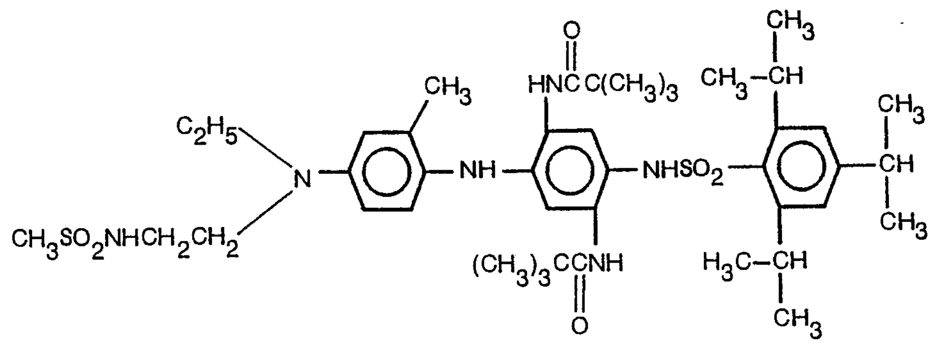

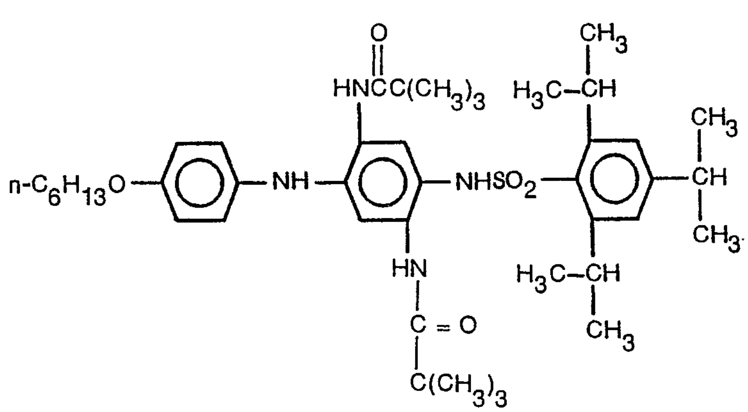

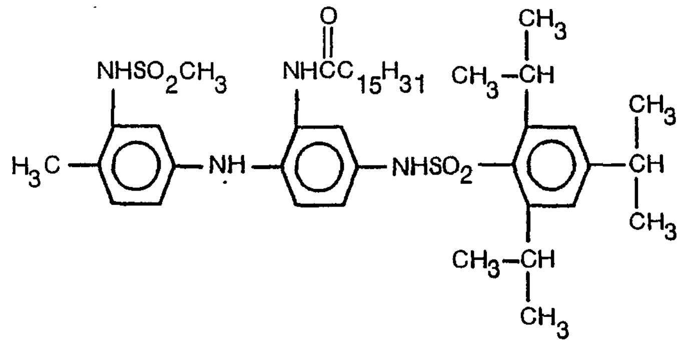

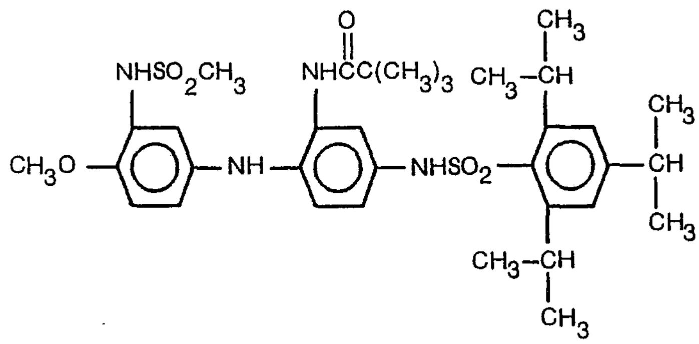

9. Produit photographique comprenant un support et, en association réactive, dans un liant,

a) un halogénure d'argent photosensible, et,

b) un composé chromogène précurseur de colorant conforme à l'une quelconque des revendications 1 à 8.

10. Produit photographique conforme à la revendication 9, comprenant en outre:

c) un développateur des halogénures d'argent photographiques apte à donner une oxydation croisée.

11. Produit photographique conforme aux revendications 9 ou 10, dans lequel le liant est formé de gélatine.

12. Produit photographique conforme aux revendications 10 ou 11, dans lequel le développateur des halogénures d'argent apte à donner une oxydation croisée est une 3-pyrazolidone.

13. Colorant sulfonimide de la classe des diphénylimines, ou des phénylnaphtylimines, comprenant un premier cycle benzénique relié à un second cycle benzénique ou à un noyau naphtalénique par un groupe —N=, sous forme de quinone, dans lequel:

a) le premier cycle benzénique a un groupe donneur d'électron en position méta ou para,

b) le second cycle benzénique ou le noyau naphtalénique a un groupe sulfonimido en position para, et

c) le colorant est exempt de groupes sulfonamido sur toutes ses positions ortho,

toutes les positions sur les cycles étant définies par rapport au groupe —N=.

14. Colorant sulfonimide conforme à la revendication 13 représentée par la formule:

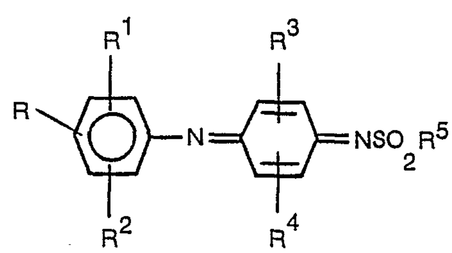

dans laquelle:

R, $R^1$, $R^2$, $R^3$, $R^4$ et $R^5$ ont les significations données à la à la revendication 2.

15. Colorant sulfonimide conforme à la revendication 14 représenté par la formule:

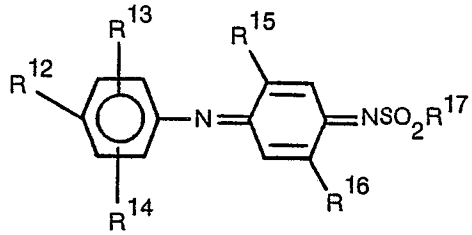

dans laquelle:

$R^{12}$, $R^{13}$, $R^{14}$, $R^{15}$, $R^{16}$ et $R^{17}$ ont les significations données à la revendication 3.

16. Colorant sulfonimide conforme à la revendication 15 représenté par la structure:

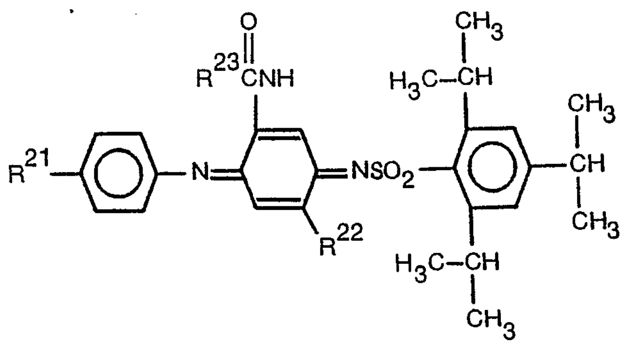

dans laquelle:

$R^{21}$, $R^{22}$ et $R^{23}$ ont les significations données à la revendication 4.

17. Colorant sulfonimide conforme à la revendication 13 représenté par la formule:

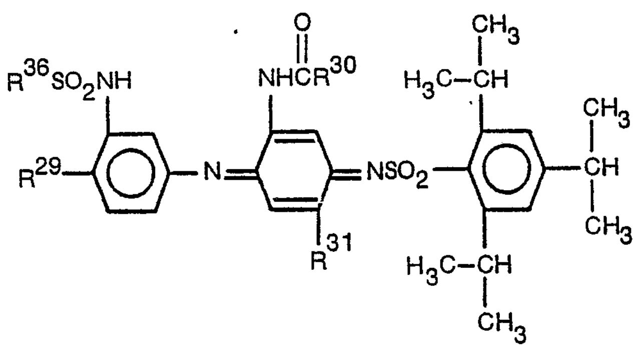

dans laquelle:

$R^{29}$, $R^{30}$, $R^{31}$ et $R^{36}$ ont les significations données à la revendication 5.

18. Colorant sulfonimide conforme à la revendication 14 représenté par la formule:

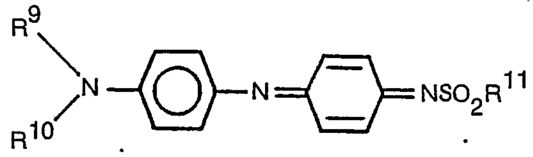

dans laquelle:

$R^{9}$, $R^{10}$, et $R^{11}$ ont les significations données à la revendications 5.

19. Colorant sulfonimide conforme à la revendication 14 dans laquelle $R^{5}$ est un groupe 2,4,6-triisopropylphényle.

20. Colorant sulfonimide conforme à la revendication 13 représenté par une des formules: